(19) Europäisches Patentamt
European Patent Office
Office européen des brevets

(11) EP 1 027 397 B1

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(21) Anmeldenummer: **98933640.9**

(22) Anmeldetag: **24.06.1998**

(51) Int Cl.:
***C09K 9/02*** *(2006.01)* ***G02F 1/15*** *(2006.01)*

(86) Internationale Anmeldenummer:
**PCT/EP1998/003862**

(87) Internationale Veröffentlichungsnummer:
**WO 1999/002621 (21.01.1999 Gazette 1999/03)**

(54) **ELEKTROCHROME POLYMERSYSTEME**

ELECTROCHROME POLYMER SYSTEMS

SYSTEMES POLYMERES ELECTROCHROMES

(84) Benannte Vertragsstaaten:
**AT DE ES FR GB IE IT NL SE**

(30) Priorität: **07.07.1997 DE 19728876**
**17.01.1998 DE 19801638**

(43) Veröffentlichungstag der Anmeldung:
**16.08.2000 Patentblatt 2000/33**

(73) Patentinhaber: **Bayer Innovation GmbH**
**40225 Düsseldorf (DE)**

(72) Erfinder:
- **BERNETH, Horst**
**D-51373 Leverkusen (DE)**
- **CLAUSSEN, Uwe**
**D-51379 Leverkusen (DE)**
- **HEUER, Helmut, Werner**
**D-47829 Krefeld (DE)**
- **KOSTROMINE, Serguei**
**D-53913 Swisttal (DE)**

(56) Entgegenhaltungen:
**EP-A- 0 196 497**
**EP-A- 0 319 156**
**EP-A- 0 612 826**
**WO-A-94/23333**
**WO-A-96/03475**

- **MARGERUM, LAWRENCE D. ET AL: "Selective incorporation of pendant redox sites into preformed polymers" J. PHYS. CHEM. (1986), 90 (12), 2696-702 CODEN: JPCHAX;ISSN: 0022-3654, XP002081128**
- **ASHTON, PETER R. ET AL: "Self-Assembly, Spectroscopic, and Electrochemical Properties of [n] Rotaxanes" J. AM. CHEM. SOC. (1996), 118 (21), 4931-4951 CODEN: JACSAT;ISSN: 0002-7863, XP002081129**
- **PATENT ABSTRACTS OF JAPAN vol. 009, no. 088 (C-276), 17. April 1985 & JP 59 217789 A (NIHON DENSHI KOGYO SHINKOU KIYOUKAI;OTHERS: 01), 7. Dezember 1984**
- **DATABASE WPI Section Ch, Week 8548 Derwent Publications Ltd., London, GB; Class A26, AN 85-298649 XP002081130 & JP 59 217791 A (JAPAN ELTRN IND PROMOTIO), 7. Dezember 1984**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft elektrochrome Systeme, elektrochrome Monomere und Polymere, Verfahren zu deren Herstellung und die Verwendung der elektrochromen Systeme in Vorrichtungen zur veränderlichen Durchlässigkeit elektromagnetischer Strahlung.

Es gibt redox-aktive Materialien, die in ihren verschiedenen Oxydationszuständen unterschiedlich gefärbt sind. Diese Erscheinung nennt man Elektrochromie und die zugehörigen Stoffe haben elektrochrome Eigenschaften. Diese Eigenschaft läßt sich zur Modulation elektromagnetischer Strahlung ausnutzen, wenn wenigstens ein Oxidationszustand farblos und wenigstens ein anderer gefärbt ist. Vorrichtungen, in denen diese Eigenschaften ausgenützt werden sind bspw. Displays, selbstabblendende Rückspiegel in Fahrzeugen oder Trennscheiben mit variabler Durchsichtigkeit. Sie sind prinzipiell elektrochemische Zellen.

Es sind derzeit 3 verschiedene Möglichkeiten bekannt, um derartige Vorrichtungen zu realisieren:

a) Im Lösungstyp wird im Elektrolyten ein löslicher Farbstoff durch eine elektrochemische Redoxreaktion erzeugt. Die an der einen Elektrode gebildeten Farbstoffmoleküle wandern im Feld an die Gegenelektrode, um dort entladen zu werden. Ein solches Medium wird immer niedrig viskos sein, um den Stofftransport nicht zu beeinträchtigen.

b) Wählt man die Redox-Komponenten derart, daß sie in der einen Form in Lösung, in der anderen aber unlöslich sind, so erzeugt man elektrochemisch auf einer Elektrode einen Niederschlag, der sich bei Umkehrung der Stromrichtung wieder auflöst.

c) Schließlich kann man einen Elektrodenüberzug gleich vorgeben und diese feste Schicht durch die elektrochemische Reaktion reversibel anfärben.

Die Möglichkeit a) ist heute technisch in einer besonderen Variante verbreitet. Hierbei wird ein System elektrolysiert, das aus den Stoffen $RED_1$ und $OX_2$ in einem Lösungsmittel gelöst besteht. Das Substanzpaar sollte im stromlosen Zustand der Zelle farblos sein. Fließt ein Strom, dann geht es in die möglichst tief gefärbte Form $OX_1$/$RED_2$ über. Die beiden Stoffe werden also so gewählt, daß sowohl die Oxydations- als auch die Reduktionsreaktion komplementär zu einander farbig oder farblos werden. Damit wird die eine Spezies immer zur Gegenelektrode der anderen, so daß die Lebensdauern der Radikalionen sehr kurz werden. Beim Abschalten des Stroms wird also die Zelle schnell wieder hell. Für dieses Verfahren mit einer komplementären Gegenelektrode wurde von Shelepin et al. ein geeignetes Substanzpaar (Elektrokhimiya, 13, 32-37 (1977); 13, 404 - 408 (1977); 14, 319 - 322 (1978)) beschrieben, wobei dessen technische Anwendung zur Modulation elektromagnetischer Strahlung in Autorückspiegeln in den Patentschriften US-A 4 902 108 (Gentex) und US-A 5 140 455 (Donnelly) offenbart ist.

Die Möglichkeit b) verwendet die große Assoziationsneigung der Radikalionen der Viologene, die jedoch keinerlei Gruppen besitzen, mit denen sie auf Oberflächen verankert werden können. Sie lassen sich allein durch ihre Schwerlöslichkeit auf den Elektroden niederschlagen. Diese Überzüge haben indessen eine sehr geringe Cyclenfestigkeit.

Die Möglichkeit c) ist weniger technisch genutzt als vielfältig beschrieben worden. Als besondere Schwierigkeit erwies sich hier die Erzeugung einer ausreichenden Cyclenfestigkeit. Unter Cyclenfestigkeit versteht man die Häufigkeit, mit der die Reihenfolge der Schaltung der Zelle farblos/farbig durchgeführt werden kann, ohne daß sich eine Änderung in den Absorptionsspekten oder des Zeitverhaltens ergibt. Aber auch in diesem Falle ist es durch die Kombination verschiedener Substanzpaare gelungen, erhebliche Verbesserungen zu erzielen. (WO-A 94/23333, Igen Inc.)

Vorrichtungen, die nach dem Prinzip der löslichen Farbstoffe arbeiten, werden in großem Umfang als Rückspiegel für Automobile verwendet (Methode a). Hierbei ist nun von Bedeutung, daß die Lösungen aus technischen Gründen möglichst dünnflüssig, aus Sicherheitserwägungen aber möglichst viskos und zäh sein sollten. Denn im Falle eines Glasbruchs sollten sowohl die Splitter als auch die Zellenfüllung festgehalten werden. Dieser Forderung wird Rechnung getragen durch das Verdicken der Lösungen durch Zugabe geeigneter, die Viskosität der Lösungen erhöhender Polymerer, wie es z.B. in der US-Patentschrift Nr. 4 902 108 beschrieben ist. Weiterhin ist die hohe Viskosität erwünscht, weil die Zellen, die in der Regel so betrieben werden, daß die Spiegelfläche parallel zum Schwerefeld der Erde steht, aufgrund von Konvektion zu einer "Farbentmischung" neigen. Dies begünstigt insbesondere bei großen Abmessungen (LKW-Spiegel) die Ausbildung von Konvektionen, die zur Entmischung der kathodischen und anodischen Reaktionsprodukte führen können.

Hierbei tritt aber in der Praxis ein erhebliches Problem auf, weil die viskosen Lösungen sich nur unter großen Schwierigkeiten in die Zellen einfüllen lassen. Dies ist allein vom Zeitaufwand her unerwünscht und bedeutet immer einen Kompromiß zwischen der Füllbarkeit und der angestrebten möglichst hohen Viskosität in der Zelle. Es ist deswegen wiederholt vorgeschlagen worden, z. B. in EP-A 0 612 826 (Donnelly) oder WO-A 96/03475 (Gentex), die Zellen mit Monomeren zu füllen und die Polymerisation erst in der Zelle durchzuführen.

Die vorliegende Erfindung betrifft Systeme, die wählbar nach den Prinzipien a) oder c) betrieben werden können und die dadurch gekennzeichnet sind, daß wenigstens einer der Substituenten $RED_1$ oder $OX_2$ Bestandteil eines löslichen, elektrochromen Polymeren ist.

Polymere, die $OX_2$ enthalten, sind als polymere Viologene bekannt *(P.M.S.Monk, R.J.Mortimer, D.R.Rosseinsky "Elektrochromism", VCH, 1995)*

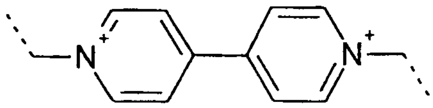

Polymere auf der Basis der acylierten 5,10-Dihydrophenazinen ($RED_1$) wurden in der DE-A 4 325 591 beschrieben.

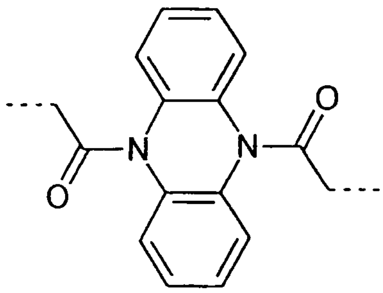

Diese Stoffe sind aber schwerlöslich und für den vorgesehenen Zweck nicht einsetzbar. Überraschenderweise sind die erfindungsgemäßen Polymere in organischen Solventien gut löslich und fallen auch bei einer Änderung des Ladungszustandes nicht aus.

Gegenstand der vorliegenden Erfindung ist ein elektrochromes System, enthaltend

- mindestens einen reversibel elektrochemisch oxidierbaren Substituenten $RED_1$, der durch Elektronenabgabe an einer Anode in $OX_1$ übergeht, und

- mindestens einen reversibel elektrochemisch reduzierbaren Substituenten $OX_2$, der durch Elektronenaufnahme an einer Kathode in $RED_2$ übergeht,

wobei mit mindestens einer Elektronenabgabe bzw. Elektronenannahme eine Zunahme der Extinktion im sichtbaren Bereich des Spektrums von einer farblosen oder schwach gefärbten Form in eine gefärbte Form nach Ladungsausgleich jeweils die farblose, bzw. schwach gefärbte Form zurückgebildet wird,
dadurch gekennzeichnet, daß mindestens einer der Substituenten $RED_1$ oder $OX_2$ in einem löslichen Polymer kovalent gebunden ist.

Vorzugsweise betrifft die vorliegende Erfindung ein elektrochromes System, enthaltend

- mindestens einen reversibel elektrochemisch oxidierbaren Substituenten $RED_1$, der durch Elektronenabgabe an einer Anode unter Zunahme der Extinktion im sichtbaren Bereich des Spektrums von einer farblosen oder schwach gefärbten Form in eine gefärbte Form $OX_1$ übergeht, und

- mindestens einen reversibel elektrochemisch reduzierbaren Substituenten $OX_2$, der durch Elektronenaufnahme an einer Kathode unter Zunahme der Extinktion im sichtbaren Bereich des Spektrums von einer farblosen oder schwach gefärbten Form in eine gefärbte Form $RED_2$ übergeht,

wobei nach Ladungsausgleich jeweils die farblose bzw. schwach gefärbte Form zurückgebildet wird,
dadurch gekennzeichnet, daß mindestens jeweils einer der Substituenten $RED_1$ und $OX_2$ in einem löslichen Polymer kovalent gebunden sind.

Vorzugsweise genügt das lösliche Polymer der Formel I

$$E\text{-}[\cdots (B_1\text{-}Z\text{-})_a \cdots (B_2\text{-}Y\text{-})_b \cdots]_c\text{-}B\text{-}E \qquad (I)$$

worin
die Einheiten $-B_1$-Z- und $-B_2$-Y- alternierend, statistisch oder blockweise miteinander verknüpft sind,

Y und Z unabhängig voneinander ein Substituent $RED_1$ oder $OX_2$ ist, wobei

$OX_2$ für einen reversibel elektrochemisch reduzierbaren Substituenten steht, der durch Elektronenaufnahme an einer Kathode in $RED_2$ übergeht, wobei mit der Elektronenaufnahme eine Zunahme der Extinktion im sichtbaren Bereich des Spektrums von einer farblosen oder schwach gefärbten Form in eine gefärbte Form verbunden ist und wobei nach Ladungsausgleich die farblose bzw. schwach gefärbte Form zurückgebildet wird,

$RED_1$ für einen reversibel elektrochemisch oxidierbaren Substituenten steht, der durch Elektronenabgabe an einer Anode in $OX_1$ übergeht, wobei mit der Elektronenabgabe eine Zunahme der Extinktion im sichtbaren Bereich des Spektrums von einer farblosen oder schwach gefärbten Form in eine gefärbte Form verbunden ist und wobei nach Ladungsausgleich die farblose bzw. schwach gefärbte Form zurückgebildet wird, und

B für $B_1$ oder $B_2$ steht,

$B_1$ und $B_2$ gleiche oder unterschiedliche Brückenglieder sind,

E eine Endgruppe der Polymerkette ist,

a und b für die Molenbrüche der Monomereinheiten $-B_1$-Z- und $-B_2$-Y- stehen, die beliebige Werte zwischen 0 und 1 aufweisen, wobei a = 1-b ist,

c für einen zahlenmittleren Polymerisationsgrad $c_n$ steht und 3 bis 200 000 beträgt, wobei das Verhältnis zwischen $c_n$ und dem gewichtsmittleren Polymerisationsgrad $c_w$ (Polymolaritätsindex) $Q = c_w/c_n$ zwischen 1,1 und 100, vorzugsweise zwischen 1,2 und 20 liegt.

Gegenstand der Erfindung ist auch das lösliche Polymer der Formel I mit der oben angegebenen Bedeutung der Variablen.

Bevorzugt ist ein elektrochromes System sowie ein löslicher Polymer, in dem beide Substituenten $RED_1$ und $OX_2$ in einer Polymerkette blockweise kovalent gebunden sind und der allgemeinen Formel (IV)

$$E\text{-}\left[(B_1\text{-}Z)_{c_1}(B_2\text{-}Y)_{c_2}\right]_{c/(c_1+c_2)}\text{-}B\text{-}E \qquad (IV)$$

genügen, wobei die Variablen wie vorstehend definiert sind und $c_1$ und $c_2$ einen mittleren Polymerisationsgrad darstellen, wobei $(c_1 + c_2) \leq c$ ist.

In einer weiteren bevorzugten Ausführungsform des elektrochromen Systems sowie des löslichen Polymers sind beide Substituenten $RED_1$ und $OX_2$ in einer Polymerkette aus zwei kovalent verbundenen Blöcken enthalten. Das lösliche Polymer weist dabei die allgemeine Formel (V)

$$E\text{-}\left[(B_1\text{-}Z)_{c_1}(B_2\text{-}Y)_{c_2}\right]\text{-}B_2\text{-}E \qquad (V)$$

auf, wobei die Variablen wie vorstehend definiert sind und $c_1 + c_2 = c$ ist.

Weiterhin bevorzugt ist ein elektrochromes System sowie ein lösliches Polymer, in dem beide Substituenten $RED_1$ und $OX_2$ in einer Polymerkette alternierend gebunden sind und der allgemeinen Formel (VI)

E-(-B-Z-B-Y-)$_c$-B-E (VI),

genügen, wobei die Variablen wie vorstehend definiert sind.

Schließlich ist ein elektrochromes System sowie ein löslicher Polymer bevorzugt, in dem beide Substituenten $RED_1$ und $OX_2$ in einer Polymerkette verbunden sind, wobei die Blöcke der Substituenten mit einzelnen Einheiten der andereren Substituenten überbrückt werden, d. h die elektrochromen Polymere den allgemeinen Formeln VII bzw. VIII

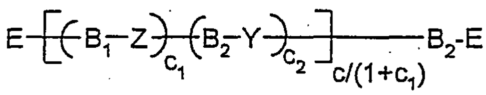
(VII)

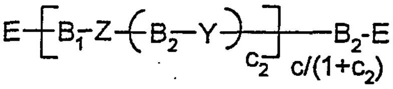
(VIII)

genügen, wobei die Variablen wie vorstehend definiert sind.

In den Formeln (I) bis (VIII) ist $B_1$ und $B_2$ unabhängig voneinander O, $-CH_2-$ oder $-(CH_2)_n-$

n eine ganze Zahl von 1 bis 16 ist,

Bevorzugt steht in den Formeln I - VIII $OX_2$ für einen Rest der Formeln

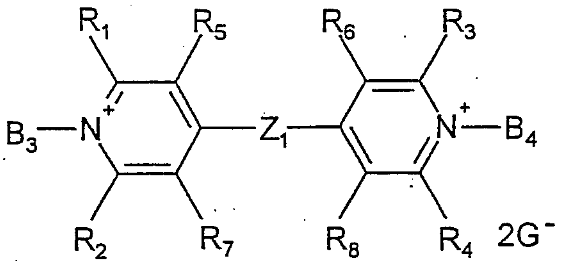
(IX)

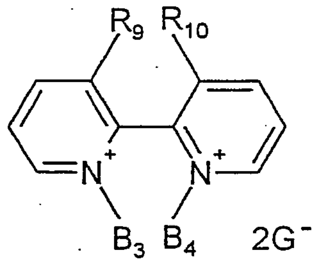
(X)

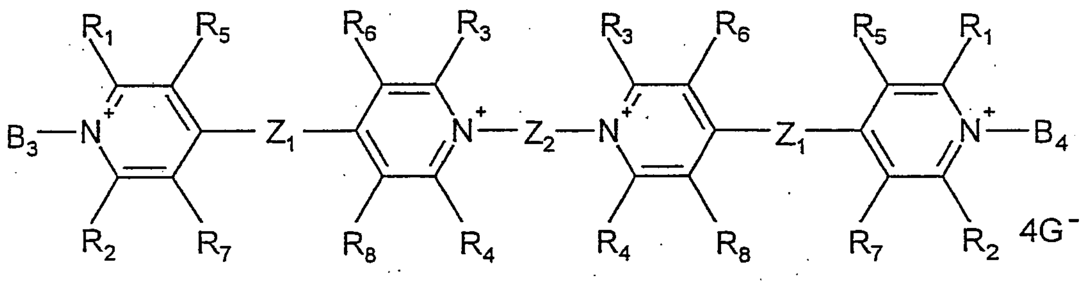
(XI)

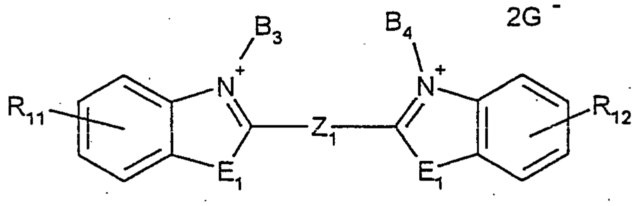

(XII)

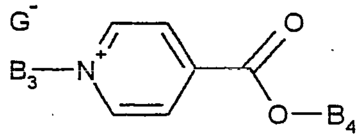

(XIII)

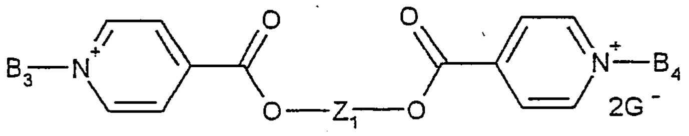

(XIV)

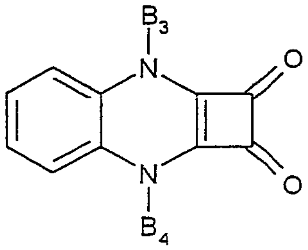

(XV)

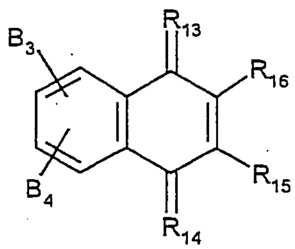

(XVI)

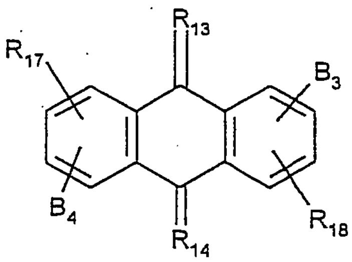

(XVII)

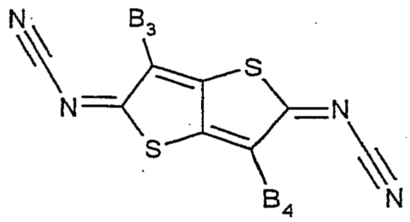

(XVIII)

worin

| | |
|---|---|
| $R_1$ bis $R_4$ | unabhängig voneinander Wasserstoff, $(C_1-C_8)$-Alkyl, $(C_2-C_{12})$-Alkenyl, $(C_3-C_7)$-Cycloalkyl, $(C_7-C_{15})$-Aralkyl oder $(C_6-C_{10})$-Aryl sind, |
| $R_5$ und $R_6$ | oder $R_7$ und $R_8$ Wasserstoff oder gemeinsam eine $-(CH_2)_2-$ oder $-(CH_2)_3$-Brücke sind, |
| $R_9$ und $R_{10}$ | unabhängig voneinander Wasserstoff oder paarweise eine $-(CH_2)_2-$, $-(CH_2)_3-$ oder -CH=CH-Brücke sind, |
| $R_{11}$, $R_{12}$, $R_{17}$ | und $R_{18}$ unabhängig voneinander Wasserstoff, $(C_1-C_4)$-Alkyl, $(C_1-C_4)$-Alkoxy, Halogen, Cyano, Nitro oder $(C_1-C_4)$-Alkoxycarbonyl sind, |
| $R_{13}$ und $R_{14}$ | unabhängig voneinander O, N-CN, $C(CN)_2$ oder N-$(C_6-C_{10})$-Aryl- sind, |
| $R_{15}$ und $R_{16}$ | eine -CH=CH-CH=CH-Brücke ist, |
| $E_1$ | ein O- oder S-Atom ist, |

$Z_1$ eine direkte Bindung, -CH=CH-, $-C(CH_3)=CH-$, -C(CN)=CH-, -CCl=CCl-, -C(OH)=CH-, -CCl=CH-, -CH≡CH-, -CH=N-N=CH-, $-C(CH_3)=N-N=C(CH_3)-$ oder -CCl=N-N=CCl- ist,

$Z_2$ $-(CH_2)_r-$, p oder m- $CH_2-C_6H_4-CH_2-$ ist,

r eine ganze Zahl von 1 bis 10 ist und

$G^-$ ein unter den Bedingungen redox-inertes, farbloses Anion ist.

In den Formeln (I) bis (VIII) steht für die Gruppe $RED_1$ bevorzugt ein Rest der Formeln

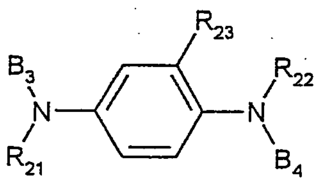

(XIX)

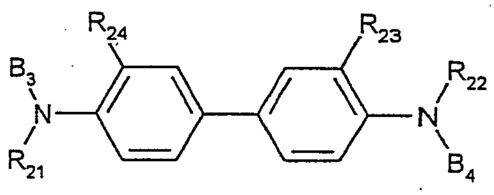

(XX)

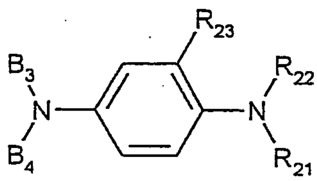

(XXI)

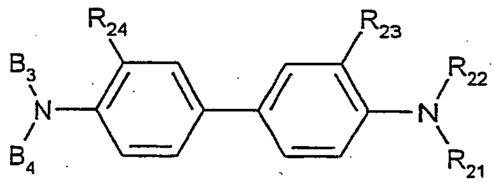

(XXII)

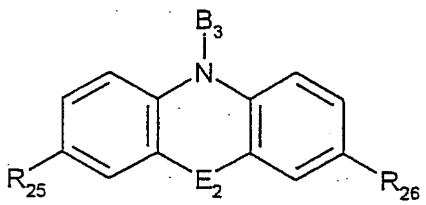

(XXIII)

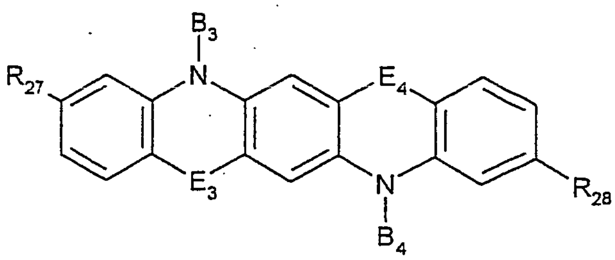

(XXIV)

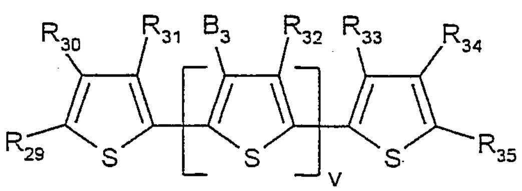

(XXV)

worin

$R_{21}$ und $R_{22}$ — $(C_1$-$C_8)$-Alkyl, $(C_2$-$C_{12})$-Alkenyl, $(C_3$-$C_7)$-Cycloalkyl, $(C_7$-$C_{15})$-Aralkyl oder $(C_6$-$C_{10})$-Aryl sind,

$R_{23}$ bis $R_{28}$ — unabhängig voneinander Wasserstoff, $(C_1$-$C_4)$-Alkyl, $(C_1$-$C_4)$-Alkoxy, Halogen, Cyano, Nitro oder $(C_1$-$C_4)$-Alkoxycarbonyl oder $(C_6$-$C_{10})$-Aryl sind, und

$R_{26}$ — zusätzlich $NR^{37}R^{37}$ bedeuten,

$R_{29}$ bis $R_{35}$ — unabhängig voneinander Wasserstoff, $(C_1$-$C_4)$-Alkyl, $(C_1$-$C_4)$-Alkoxy, Cyano, $(C_1$-$C_4)$-Alkoxycarbonyl oder $(C_6$-$C_{10})$-Aryl sind, oder

$R_{29}$ , $R_{30}$ und $R_{34}$ , $R_{35}$ — unabhängig voneinander gemeinsam eine $-(CH_2)_3-$, $-(CH_2)_4-$ oder -CH=CH-CH=CH-Brücke sind,

$E_2$ — ein O- oder S-Atom oder die Gruppen N-$B_4$, $C(CH_3)_2$, C=O oder $SO_2$ ist,

$E_3$ und $E_4$ — ein O- oder S-Atom oder die Gruppe $NR_{36}$ sind,

$R^{36}$ und $R^{37}$ — unabhängig voneinander- $(C_1$-$C_{12})$-Alkyl, $(C_2$-$C_8)$-Alkenyl, $(C_3$-$C_7)$-Cycloalkyl, $(C_7$-$C_{15})$-Aralkyl oder $(C_6$-$C_{10})$-Aryl bedeuten und $R^{36}$ zusätzlich Wasserstoff bedeutet oder

$R^{36}$ und $R^{37}$ — in der Bedeutung von $NR^{36}R^{37}$ gemeinsam mit dem N-Atom, an das sie gebunden sind, einen fünf- oder sechsgliedrigen, gesättigten Ring bilden, der weitere Heteroatome enthalten kann, und

$R_{36}$ — $(C_1$-$C_{-12})$-Alkyl, $(C_2$-$C_8)$-Alkenyl, $(C_3$-$C_7)$-Cycloalkyl, $(C_7$-$C_{15})$-Aralkyl oder $(C_6$-$C_{10})$-Aryl ist,

v — eine ganze Zahl von 1 bis 20 ist,

falls $B_3$ gleich $B_4$ ist, $B_3$ und $B_4$ gleich $B_1$ oder $B_2$ sind, und

$B_1$ und $B_2$ — die bei den Formeln I bis VIII angegebene Bedeutung haben.

E — steht in den Formeln I - VIII für die Endgruppen der Polymerkette. Diese Gruppen werden von dem Herstellungsverfahren des Polymers bestimmt und können unabhängig voneinander Wasserstoff, $-CR_3^{36}$, $=CR_2^{36}$, $(C_3$-$C_7)$-Cycloalkyl, Phenyl, $(C_1$-$C_{18})$-Alkoxy und Arolkoxy, Benzoyloxy, -OH, Halogen, -COOH, $(C_1$-$C_4)$-Alkoxycarbonyl, -N=C=O, -N-C(=O)O-, $(C_1$-$C_4)$-Alkyl, 2- oder 4-Pyridyl, $-NR_3^{36}$ sein.

In den oben genannten Substituentenbedeutungen sind Alkylreste, auch abgewandelte, z.B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen, z.B. $(C_1$-$C_4)$-Alkoxy, Fluor, Chlor, Hydroxy, Cyano, $(C_1$-$C_4)$-Alkoxycarbonyl oder COOH.

Unter Cycloalkylresten werden vorzugsweise solche mit 3 bis 7 C-Atomen, insbesondere 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind vorzugsweise Phenyl- oder Naphtyhlreste, insbesondere Phenylreste. Sie können durch 1 bis 3 der folgenden Reste substituiert sein: $(C_1$-$C_6)$-Alkyl, $(C_1$-$C_6)$-Alkoxy, Fluor, Chlor, Brom, Cyano, Hydroxy, $(C_1$-$C_6)$-Alkoxycarbonyl oder Nitro. Zwei benachbarte Reste können auch einen Ring bilden.

Gegenstand der Erfindung ist auch ein Verfahren zur Herstellung der löslichen Polymere der Formel I, in dem ein oder mehrere $RED_1$ und/oder $OX_2$ enthaltende Monomere der Formel XXVI - XXVIII

$$X^1\text{-}B^6\text{-}OX^2\text{-}B^7\text{-}X^2 \qquad (XXVI),$$

$$X^1\text{-}B^6\text{-}RED^1\text{-}B^7\text{-}X^2 \qquad (XXVII),$$

$$X^1\text{-}B^6\text{-}OX^2\text{-}B^8\text{-}RED^1\text{-}B^7\text{-}X^2 \qquad (XXVIII),$$

worin

$OX^2$ für den Rest eines reversibel elektrochemisch reduzierbaren Redoxsystem steht, und

RED [1] für den Rest eines reversibel elektrichemisch oxidierbaren Redoxsystem steht,

$B^6$, $B^7$, $B^8$ die Brückenglieder sind

$X^1$ und $X^2$ jeweils für mindestens eine zur Polymerisation, Polykondensation oder Polyaddition befähigte Gruppe steht,

einer Polymerisations-, Polykondensations- oder Polyadditionsreaktion unterworfen werden.

Bei der Herstellung der Polymeren der Formeln (I) bis (VIII) handelt es sich um die Polymerisations-, Polykondensations-, Polyadditions- und polymeranologe Reaktionen der $RED_1$ und/oder $OX_2$ enthaltenden Monomeren. Es ist auch möglich, daß mindestens eine elektrochrome Komponente ($RED_1$ und/oder $OX_2$) unmittelbar bei dem Aufbau der Polymerkette entsteht.

Bevorzugtes Verfahren ist die Kettenpolymerisation, insbesondere bevorzugt ist die radikalische Polymerisation, der $RED_1$ und/oder $OX_2$ enthaltenden Monomeren, die in ihrer Struktur mindestens eine polymerisationsfahige C=C-Doppelbindung haben. Die Polymerisation der Monomere läuft in geeigneten Lösungsmitteln, z.B. aromatischen Kohlenwasserstoffen wie Toluol oder Xylol, aromatischen Halogenkohlenwasserstoffen wie Chlorbenzol, Ethern wie Tetrahydrofuran und Dioxan, Ketonen wie Aceton und Cyclohexanon, Alkoholen wie Methanol und Ethanol, und/oder Dimethylformamid, N-Methyl-2-Pyrrolidon, 1,2-Propylencarbonat in Gegenwart Polymerisationsinitiatoren, insbesonders radikalliefernder Polymerisationsinitiatoren, z.B. Azodiisobutyronitril oder Benzoylperoxid, bei erhöhten Temperaturen, in der Regel bei 30 bis 130°C, vorzugsweise bei 40 bis 70°C, möglichst unter Wasser- und Luftausschluß. Die Isolierung kann durch Ausfällen mit geeigneten Mitteln, z.B. Wasser, Methanol, Cyclohexan oder Dioxan erfolgen. Die Produkte können durch Umfällen gereinigt werden.

Ein ebenfalls bevorzugtes Verfahren ist die Polykondensation zu Polyamiden, Polyimiden, Polyaminen, Polyestern, Polyethern, Polycarbonaten aus den $RED_1$ und/oder $OX_2$ enthaltenden Monomeren, die in ihrer Struktur mindestens zwei entsprechende reaktionsfähige Gruppen haben, wie Halogen, -OH, -O-, -COOH, -COO-($C_1$-$C_4$)-Alkyl, -O-C(=O)-($C_1$-$C_4$)-Alkyl, $-COO^-$, $-NH_2$-, -NH-($C_1$-$C_4$)-Alkyl.

Besonders bevorzugt ist die Polyesterherstellung aus den oben genannten elektrochromen Monomeren, die zwei OH-Gruppen haben. Die Reaktion zwischen diesen Monomeren und beliebigen Dicarbonsäuredichloriden, z.B. Adipinsäuredichlorid, läuft in der Lösung bei der Entfernung des Wasserstoffchlorides mit dem entsprechenden Bindemittel, z.B. Triethylamin oder Pyridin, in dem Temperaturbereich zwischen 20° und 120°C, vorzugsweise bei 30 bis 70°C. Als Lösungsmittel benutzt man in der Regel aromatische Kohlenwasserstoffe wie Toluol oder Xylol, Ethern wie Dioxan, Halogenkohlenwasserstoffe wie Chloroform und 1,2-Dichlorethan und/oder Dimethylformamid, N-Methyl-2-Pyrrolidon, 1,2-Propylencarbonat. Die Isolierung kann durch Ausfällen mit geeigneten Mitteln, z.B. Wasser, Methanol, Cyclohexan oder Dioxan erfolgen.

Ein anderes besonders bevorzugtes Verfahren ist die Polyester- und Polyetherherstellung aus den elektrochromen Monomeren, die zwei primäre Halogen-Gruppen haben. Die Reaktion zwischen diesen Monomeren und beliebigen Dicarbonsäure Metallsalze, z.B. Adipinsäure Natriumsalz, oder beliebigen Metallsalzen der Bisphenole, z.B. 4,4'-Isopropylidenediphenol Dikaliumsalz, läuft in aprotischen wasserfreien Lösemitteln, wie Dimethylformamid, Dimethylsulfoxid, N-Methyl-2-Pyrrolidon, Hexamethylphosphorsäuretriamid, 1,3-Dimethyltetrahydro-2(1H)-pyrimidinon, bei erhöhten Temperaturen, in der Regel bei 30 bis 130°C, vorzugsweise bei 40 bis 80°C, und unter Luft- und Wasserausschluß. Die Isolierung kann durch Ausfällen mit geeigneten Mitteln, z.B. Wasser, Methanol oder Dioxan erfolgen.

Ein weiteres bevorzugtes Verfahren ist die Polyaddition zu Polyurethanen, Polyharnstoffen, Polyammonium-Verbindungen aus den $RED_1$ und/oder $OX_2$ enthaltenden Monomeren, die in ihrer Struktur auch mindestens zwei entsprechende reaktionsfähige Gruppen haben, wie Halogen, -OH, -N=C=O, $-NH_2$, oder das tertiäre Stickstoffatom, das drei gleiche oder verschiedene ($C_1$-$C_{12}$)-Alkyl-, ($C_7$-$C_{15}$)-Aralkyl-, ($C_6$-$C_{10}$)-Aryl-Substituenten trägt oder ein Glied des 4- bis 7-atomaren Ringes ist, der auch weitere Heteroatome enthalten darf.

Besonders bevorzugtes Verfahren ist die Polyurethanherstellung aus den elektrochromen Monomeren, die zwei primäre oder sekundäre OH-Gruppen haben. Die Reaktion zwischen diesen Monomeren und beliebigen aliphatischen oder aromatischen Diisocyanaten, z.B. Hexamethylendiisocyanat oder 4,4'-Methylen-bis(phenyisocyanat), läuft ohne zusätzliches Lösungsmittel oder in geeigneten Lösungsmitteln, z.B. aromatische Kohlenwasserstoffe wie Toluol oder Xylol, Ethern wie Tetrahydrofuran und Dioxan, Ketonen wie Aceton und Cyclohexanon, und/oder Dimethylformamid, N-Methyl-2-Pyrrolidon, 1,2-Propylencarbonat ohne den Katalysator oder in Gegenwart eines Katalysators, z.B. Zinn(II) octoat (®Desmorapid 10) oder Dibutylzinndilaurat (®Desmorapid 7), bei erhöhten Temperaturen, in der Regel bei 30 bis 150°C, vorzugsweise bei 60 bis 130°C, unter Wasser- und Luftausschluß.

Ein anderes besonders bevorzugtes Verfahren ist die Herstellung von Polyammonium-Verbindungen aus den elektrochromen Monomeren, die zwei primäre Halogen-Gruppen haben. Die Reaktion zwischen diesen Monomeren

und beliebigen aliphatischen oder aromatischen Verbindungen, die zwei tertiären Stickstoffatome haben, die drei gleiche oder verschiedene ($C_1$-$C_{12}$)-Alkyl-, ($C_7$-$C_{15}$)-Aralkyl-, ($C_6$-$C_{10}$)-ArylSubstituenten tragen oder die Glieder der 4- bis 7-atomaren Ringe sind, die auch weitere Heteroatome enthalten dürfen, z.B. N,N,N',N'-Tetramethylethylendiamin oder 4,4'-Bipyridil, läuft in geeigneten Lösungsmitteln, wie z.B. Aceton, Cyclohexanon, Dimethylformamid, N-Methyl-2-Pyrrolydon, Acetonitril, Propionitril, 3-Methoxypropionitril, Hydroxypropionitril, Glutaronitril, Nitromethan, 1,2-Ethandiol, Diethylenglykol, bei erhöhten Temperaturen, in der Regel bei 50 bis 190°C, vorzugsweise bei 70 bis 150°C, unter Wasser- und Luftausschluß.

Ein weiteres bevorzugtes Verfahren ist die polymeranaloge Reaktion der Polymere, die funktionelle Gruppen tragen, wie -OH, Halogen, -COOH, -COCl, -C(=O)-O-C(=O)-, -N=C=O, $-NH_2$, ein sekundäres oder tertiäres Stickstoffatom, das gleiche oder verschiedene ($C_1$-$C_{12}$)-Alkyl-, ($C_7$-$C_{15}$)-Aralkyl-, ($C_6$-$C_{10}$)-ArylSubstituenten trägt oder ein Glied eines 4- bis 7-atomaren Ringes ist, der auch weitere Heteroatome enthalten kann, mit den $RED^1$ und/oder $OX^2$ enthaltenden Monomeren, die in ihrer Struktur dann mindestens eine entsprechende reaktionsfähige Gruppe tragen, wie Halogen, -OH, -COOH, -COCl, -N=C=O, $-NH_2$, ein sekundäres oder tertiäres Stickstoffatom, das gleiche oder verschiedene ($C_1$-$C_{12}$)-Alkyl-, ($C_7$-$C_{15}$)-Aralkyl-, ($C_6$-$C_{10}$)-Aryl-Substituenten trägt oder ein Glied eines 4- bis 7-atomaren Ringes ist, der auch weitere Heteroatome enthalten kann.

Ein besonders bevorzugtes Verfahren ist die polymeranaloge Reaktion der Polymeren, die -N=C=O Gruppen tragen, mit den Monomeren, die -OH Gruppen tragen. Diese Reaktion läuft ohne zusätzliches Lösungsmittel oder in geeigneten Lösungsmitteln, beispielsweise in aromatischen Kohlenwasserstoffen wie Toluol oder Xylol, Ethern wie Tetrahydrofuran oder Dioxan, Ketonen wie Aceton und Cyclohexanon, und/oder Dimethylformamid, N-Methyl-2-Pyrrolidon, 1,2-Propylencarbonat ohne den Katalysator oder in Gegenwart eines Katalysators, z.B. Zinn(II)octoat (®Desmorapid 10) oder Dibutylzinndilaurat (Desmorapid 7), bei erhöhten Temperaturen, in der Regel bei 30 bis 150°C, vorzugsweise bei 60 bis 130°C, unter Wasser- und Luftausschluß ab.

Ein anderes besonders bevorzugtes Verfahren ist die polymeranaloge Reaktion der Polymeren, die -COCl Gruppen tragen, mit den Monomeren, die -OH Gruppen tragen. Diese Reaktion läuft in Lösung bei der Entfernung des Chlorwasserstoffs mit einem entsprechenden Bindemittel, z.B. ein Triethylamin oder Pyridin, im Temperaturbereich zwischen 20° und 120°C, vorzugsweise 30 bis 70°C ab. Als Lösungsmittel benutzt man in der Regel aromatische Kohlenwasserstoffe wie Toluol oder Xylol, , Ether wie Dioxan, Halogenkohlenwasserstoffe wie Chloroform und 1,2-Dichlorethan und/oder Dimethylformamid, N-Methyl-2-Pyrrolidon, 1,2-Propylencarbonat. Die Isolierung kann durch Ausfällen mit geeigneten Mitteln, beispielsweise Wasser, Methanol, Cyclohexan oder Dioxan erfolgen.

Ein besonders bevorzugtes Verfahren ist auch die polymeranaloge Reaktion der Polymeren, die $-NH_2$, ein sekundäres oder tertiäres Stickstoffatom, das gleiche oder verschiedene ($C_1$-$C_{12}$)-Alkyl-, ($C_7$-$C_{15}$)-Aralkyl-, ($C_6$-$C_{10}$)-Aryl-Substituenten trägt oder ein Glied des 4- bis 7-atomaren Ringes ist, der auch weitere Heteroatome enthalten kann, mit den Monomeren, die Halogen- Gruppen tragen. Diese Reaktion läuft in geeigneten Lösungsmitteln, z.B. Aceton, Cyclohexanon, Dimethylformamid, N-Methyl-2-Pyrrolidon, Acetonitril, Propionitril, 3-Methoxypropionitril, Hydroxypropionitril, Glutaronitril, Nitromethan, 1,2-Ethandiol, Diethylenglykol, bei erhöhten Temperaturen, in der Regel bei 50 bis 190°C, vorzugsweise bei 70 bis 150°C, unter Wasser- und Luftausschluß ab.

Bei der Herstellung der Polymeren der Formeln (I) bis (VIII) kann man auch die Kombination der oben genannten Verfahren benutzen, z.B. die Synthese des Polyesterprepolymers, das OH-Endgruppen trägt, mit der nachfolgenden Kettenverlängerung mit Diisocyanate.

Unter dem Begriff "Monomere" sind solche Substanzen gemeint, die durch oben genannte Polymerisationsverfahren in ein lösliches Polymer überführt werden können und den Formeln XXVI- XXVIII entsprechen:

$$X^1\text{-}B^6\text{-}OX^2\text{-}B^7\text{-}X^2 \qquad (XXVI),$$

$$X^1\text{-}B^6\text{-}RED^1\text{-}B^7\text{-}X^2 \qquad (XXVII),$$

$$X^1\text{-}B^6\text{-}OX^2\text{-}B^8\text{-}RED^1\text{-}B^7\text{-}X^2 \qquad (XXVIII),$$

worin

| | |
|---|---|
| $OX^2$ | für einen reversibel elektrochemisch reduzierbaren Substituenten steht, und |
| $RED^1$ | für einen reversibel elektrochemisch oxidierbaren Substituenten steht, |
| $B^6$, $B^7$, $B^8$ | die Brückenglieder sind, |
| $X^1$ und $X^2$ | jeweils für eine zur Polymerisation, Polykondensation oder Polyaddition befähigte Gruppen stehen. |

Bevorzugt sind die Monomere, die den Formeln XXVI- XXVIII entsprechen, worin

$OX^2$ für einen Rest der Formeln IX - XVIII und

$RED^1$ für einen Rest der Formeln XIX - XXV steht,

wobei
auf den Plätzen von $B^3$ und $B^4$ die Brückenglieder $B^6$, $B^7$ und $B^8$ stehen,

$X^1$ und $X^2$ für Halogen, -OH, -O-, -COOH, -COO-($C_1$-$C_4$)-Alkyl,-O-C(=O)-($C_1$-$C_4$)-Alkyl, $-COO^-$, $-NH_2$, -NH-($C_1$-$C_4$)-Alkyl, -N=C=O, oder das tertiäre Stickstoffatom, das drei gleiche oder verschiedene ($C_1$-$C_{12}$)-Alkyl-, ($C_7$-$C_{15}$)-Aralkyl-, ($C_6$-$C_{10}$)-Aryl-Substituenten trägt oder ein Glied des 4- bis 7-atomaren Ringes ist, der auch weitere Heteroatome enthalten darf, oder

$X^1$ oder $X^2$ für eine C=C-Doppelbindung, eine $-O-C(=O)-CH=CH_2$ oder $-O-C(=O)-C(CH_3)=CH_2$-Gruppe stehen.

Besonders bevorzugt sind die Monomere, die der Formel XXIX entsprechen

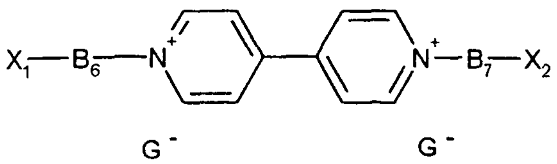

XXIX

,

in der
$B^6 = B^7 = -(CH_2)n-$,
$X^1 = X^2 = -OH$,
n=2- 11,

$G^-$ Halogenid, Tetrafluoroborat, Tetraphenylborat, Cyano-triphenylborat, Perchlorat, Dodecylsulfonat, Hexadecylsulfonat, Toluolsulfonat, Butylbenzolsulfonat, Dodecylbenzolsulfonat, Hexafluorophosphat, 7,8- oder 7,9-Dicarbanido-undecaborat (1-) ist.

Diese Monomere stellt man bei der direkten Quarternierung des 4,4'-Bipyridins mit ω-Halogen-1-alkanol, bevorzugt mit ω-Brom-1-alkanol, in einem aprotischen Lösungsmittel, bevorzugt sind N,N-Dimethylformamid, N,N-Dimethylacetamid, N-Methyl-2-Pyrrolidon, bei erhöhten Temperaturen, in der Regel bei 120 bis 200°C, vorzugsweise bei 150 bis 180°C, mit dem nachträglichen Ionenaustausch her, der durch Ausfallen in Alkohol oder durch Extraktion aus Wasser mit einem organischen Lösungsmittel, wie Toluol oder Methylenchlorid, erfolgt.

Besonders bevorzugt sind auch die Monomere, die der Formel XXIX entsprechen,
in der
$B^6 = B^7$ = o, m oder $p-CH_2-C_6H_4-CH_2-$,
$X^1 = X^2$ = Halogen, vorzugsweise -Cl,

$G^-$ Halogenid, Tetrafluoroborat, Tetraphenylborat, Cyano-triphenylborat, Perchlorat, Hexafluorophosphat, 7,8- oder 7,9-Dicarba-nido-undecaborat (1-) ist.

Diese Monomere stellt man bei der direkten Quarternierung des 4,4'-Bipyridins mit dem Überschuß α,α'-Halogen-o,m oder p-Xylol, bevorzugt mit α,α'- Chlor-m oder p-Xylol, in einem aprotischen Lösungsmittel, bevorzugt sind Acetonitril, N,N-Dimethylformamid, N,N-Dimethylacetamid, N-Methyl-2-Pyrrolidon, besonders bevorzugt ist Acetonitril, bei erhöhten Temperaturen, in der Regel bei 40 bis 150°C, vorzugsweise bei 70 bis 100°C, mit dem nachträglichen Ionenaustausch her, der durch Ausfallen in Alkohol, vorzugsweise in Methanol, Ethanol oder Propanol erfolgt.

Besonders bevorzugt sind die Monomere, die Formeln XXIX entsprechen,
in der
$B^6 = -(CH_2)_n$ mit n = 2 - 11 ist,
$B^7$ = -($C_6$-$C_{10}$)-Aryl, substituiertes -($C_6$-$C_{10}$)-Aryl, ($C_1$-$C_{18}$)-Alkyl, ($C_1$-$C_{18}$)-Alkenyl, ($C_7$-$C_{24}$)-Aralkyl, und

$X^1$ = -OH ist und
$X^2$ fehlt und

G- ausgewählt ist aus der Gruppe Halogenid, Tetrafluoroborat, Tetraphenylborat, Cyanotriphenylborat, Perchlorat, Dodecylsulfonat, Hexadecylsulfonat, Toluolsulfonat, Butylbenzolsulfonat, Dodecylbenzolsulfonat, Hexafluorophosphat, 7,8- oder 7,9-Dicarba-nido-undecaborat (1-).

Diese Monomere erhält man bei der zweistufigen direkten Quarterisnierung des 4,4'-Bipyridins. Erste Quarternierung erfolgt mit ω-Halogen-1-alkohol in aromatischen Kohlwasserstoffen, bevorzugt Toluol und o-Xylol, in der Regel bei 100 bis 200°C, vorzugsweise bei 120 bis 160°C. Die zweite Quarternierung erfolgt mit einem primären Halogenid, vorzugsweise mit Benzylhalogenid in einem aprotischen Lösungsmittel, bevorzugt N,N-Dimethylformamid, N,N-Dimethylacetamid, N-Methyl-2-Pyrrolydon, bei erhöhten Temperaturen, in der Regel bei 120 bis 200°C, vorzugsweise bei 150 bis 180°C. Ein Ionenaustausch erfolgt anschließend durch Ausfällen in Alkohol oder durch Extraktion aus Wasser mit einem organischen Lösungsmittel, wie Toluol oder Methylenchlorid.

Besonders bevorzugt sind auch die Monomere, die der Formel XXIX entsprechen,
in der
$B^6$ = o, m, p- $C_6H_4$-$CH_2$- oder ein Gemisch der Isomeren,
$X^1$ = -CH=$CH_2$,

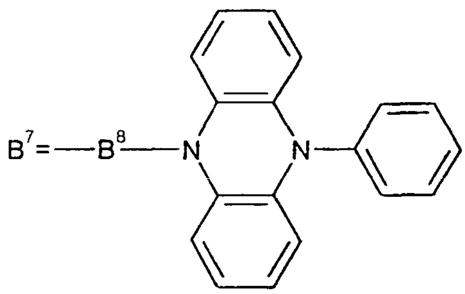

$X^2$ fehlt
und
$B^8$ = -$(CH_2)_n$-,
n = 2 - 18 oder
$B^8$ = o, m oder p-$CH_2$-$C_6H_4$-$CH_2$-,

$G^-$ Halogenid, Tetrafluoroborat, Tetraphenylborat, Cyano-triphenylborat, Perchlorat, Hexafluorophosphat, 7,8- oder 7,9-Dicarba-nido-undecaborat (1-) ist.

Die Herstellung dieser Monomere erfolgt auf folgende Weise. Durch die Umsetzung des Phenazins mit Phenyllithium und nachträglich mit α,ω-Dihalogenalkan oder mit α,α'-Halogen-Xylol bekommt man (ω-Halogenalkyl)- oder (α'-Halogenxylyl)-10-Phenyl-5,10-dihydrophenazin. Die Reaktion läuft in wasserfreien Ethern, wie Diethylether, THF, 1,2-Dimeth- und 1,2-Diethoxyethan, bevorzugt in THF, bei den Temperaturen zwischen -10° und 40°C, vorzugsweise bei 0° bis 30°C unter Argonatmosphäre. Die Quarternierung des 4,4'-Bipyridins mit diesen Produkten in Acetonitril bei 70°C bringt 1-[ω-(10-Phenyl-5,10-dihydro-5-phenazyl)-alkyl]-4-(4'-pyridyl)-pyridiniun halogenid oder 1-[α'-(10-Phenyl-5,10-dihydro-5-phenazyl)-α-xylyl]-4-(4'-pyridyl)-pyridiniun halogenid. Diese Substanzen setzt man letztendlich in N,N-Dimethylformamid, N,N-Dimethylacetamid, N-Methyl-2-Pyrrolydon, besonders bevorzugt in N-Methyl-2-Pyrrolydon, bei 50 bis 120°C vorzugsweise bei 60° bis 80°C unter Argonatmosphäre mit Vinylbenzylhalogenid, bevorzugt mit Vinylbenzylchlorid und Vinylbenzylbromid um.

Besonders bevorzugt sind die Monomere, die der Formel XXX entsprechen

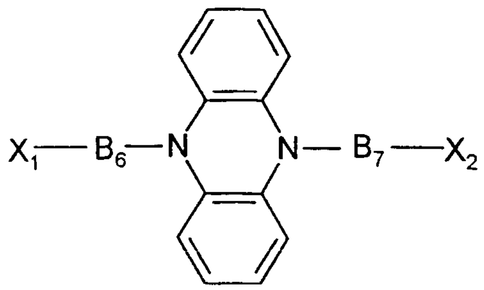

XXX

,

in der
$B^6 = B^7 = -(CH_2)_n-$,
n=2- 18,
$B^6 = B^7 = -(CH_2)_2-O-(CH_2)_2-$,
o, m oder p-$CH_2-C_6H_4-CH_2-$,
$X^1 = X^2$ = Halogen, vorzugsweise -Cl und -Br ist.

Die Herstellung erfolgt durch die Reaktion des Phenazins mit Natrium in den wasserfreien Ethern, wie 1,2-Dimeth- und 1,2-Diethoxyethan, Diethylenglikoldimethylether, bei den Temperaturen zwischen 40° und 140°C, vorzugsweise bei 70° bis 130°C unter Argonatmosphäre und der nachfolgenden Umsetzung mit einem 2 bis 5-maligen Überschuß eines entsprechenden Dihalogenides bei den Temperaturen zwischen 10° und 100°C, vorzugsweise bei 20° bis 70°C.

Besonders bevorzugt sind auch die Monomere, die der Formel XXX entsprechen,
in der
$B^6 = B^7 = -(CH_2)_n-$,
n=2- 18,
$B^6 = B^7 = -(CH_2)_2-O-(CH_2)_2-$,
o, m oder p-$CH_2-C_6H_4-CH_2-$;

$X^1 = X^2 =$ -O-C(=O)-($C_1$-$C_4$)-Alkyl, -O-C(=O)-CH=$CH_2$, oder -O-C(=O)-C($CH_3$)=$CH_2$ ist.

Die Herstellung erfolgt durch die Umsetzung der oben genannten Monomeren-Dihalogeniden mit den Natrium- oder Kaliumsalzen der entsprechenden Säuren in einem wasserfreien aprotischen Lösungsmittel, wie N,N-Dimethylformamid, N,N-Dimethylacetamid, Dimethylsulfoxid, N-Methyl-2-pyrrolidon, 1,3-Dimethyltetrahydro-2(1H)-pyrimidinon, bei erhöhten Temperaturen, in der Regel bei 30 bis 130°C, vorzugsweise bei 40 bis 80°C, und unter Luft- und Wasserausschluß.

Besonders bevorzugt sind auch die Monomere, die der Formel XXX entsprechen,
in der
$B^6 = -(CH_2)_n-$,
n=2- 18,
$B^7$ = -Ph, substituiertes Ph, $C_nH_{2n+1}$,
$X^1$ = -O-C(=O)-CH=$CH_2$, -O-C(=O)-C($CH_3$)=$CH_2$ ist und
$X^2$ fehlt.

Diese Monomere stellt man durch die Reaktion zwischen den oben genannten (ω-Halogenalkyl)-10-Phenyl-5,10 dihydrophenazin und den Natrium- oder Kaliumsalzen der entsprechenden Säuren in einem wasserfreien aprotischen Lösungsmittel, wie N,N-Dimethylformamid, N,N-Dimethylacetamid, Dimethylsulfoxid, N-Methyl-2-Pyrrolidon, 1,3-Dimethyltetrahydro-2(1H)-pyrimidinon, bei erhöhten Temperaturen, in der Regel bei 30 bis 130°C, vorzugsweise bei 40 bis 80°C, und unter Luft- und Wasserausschluß her.

Besonders bevorzugt sind auch die Monomere, deren Formeln XXX entsprechen,
in der
$B^6 = -(CH_2)_n-$ mit n = 2 - 11 ist,
$B^7$ = -($C_6$-$C_{10}$)-Aryl, substituiertes -($C_6$-$C_{10}$)-Aryl, ($C_1$-$C_{18}$)-Alkyl, ($C_7$-$C_{24}$)-Aralkyl,
$X^1$ = -OH ist und
$X^2$ fehlt.

Die Herstellung dieser Monomere erfolgt zunächst durch Umsetzung des Phenazins mit entsprechenden Lithium-Verbindung, z.B. mit Phenyllithium und nachträglich mit 1-Bromo-ω-Tetrahydropyranyloxyalkanen bei den Temperaturen zwischen -10° und 40°C, vorzugsweise bei 0° bis 30°C unter Argon-Atmosphäre zu 5-(ω-Tetrahydropyranyloxy-n-alkyl)-10-Phenyl-5,10-dihydrophenazine. Die Reaktion läuft in wasserfreien Ethern, wie Diethylether, THF, 1,2-Dimeth- und 1,2-Diethoxyethan, bevorzugt in THF. Die Abspaltung der Tetrahydropyranylgruppe erfolgt anschließend durch die Behandlung mit Salzsäure, Benzol- und Toluolsulfonsäure in einem Lösungsmittel, wie Methanol, THF, Dioxan, und in den Mischungen dieser Lösungsmitteln mit Wasser bei 10° bis 100°C unter Argon-Atmosphäre.

Besonders bevorzugt sind auch die Monomere, die der Formel XXX entsprechen,
in der
$B^6 = B^7 = -(CH_2)_n-$,
n=3-11,
$X^1 = X^2 = -OH$ ist.

Diese Monomere wurden auf folgende Weise synthetisiert. Durch die Reaktion des Phenazins mit Natrium in den wasserfreien Ethern, wie 1,2-Dimeth- und 1,2-Diethoxyethan, Diethylenglikoldimethylether, bei den Temperaturen zwischen 40° und 140°C, vorzugsweise bei 70° bis 130°C unter Argonatmosphäre und der nachfolgenden Umsetzung mit 1-Bromo-ω-Tetrahydropyranyloxyalkanen bei den Temperaturen zwischen 10° und 100°C, vorzugsweise bei 20° bis 70°C stellt man 5,10-Bis(ω-Tetrahydropyranyloxy-n-alkyl)-5,10-dihydrophenazine her. Die Abspaltung der Tetrahydropyranylgruppe erfolgt durch die Bearbeitung mit Salzsäure, Benzol- und Toluolschwefelsäure in einem Lösungsmittel, wie Methanol, THF, Dioxan, und in den Mischungen dieser Lösungsmitteln mit Wasser bei 10° bis 30°C unter Argon-Atmosphäre. Den Homolog mit n = 3 stellt man auch her, wenn man anstatt des 5,10-Bis(ω-Tetrahydropyranyloxy-n-alkyl)-5,10-dihydrophenazins direkt Trimethylenoxid einsetzt.

Analog - durch direkte Umsetzung Dinatriumdihydrophenazins mit α-Oxiranen - stellt man die anderen besonders bevorzugten Monomere her, die der Formel XXX entsprechen,
in der
$B^6 = B^7 = -CH_2-CH(C_nH_{2n+1})-$,
n=1-18,
$X^1 = X^2 = -OH$ ist.

Das erfindungsgemäße elektrochrome System kann ein Lösungsmittel enthalten, vorzugsweise ein dipolar aprotisches Lösemittel.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukeophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydiproptionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Vorzugsweise sind die erfindungsgemäßen Polymeren in mindestens einem dipolar aprotischen Lösemittel löslich, insbesondere bei Raumtemperatur löslich.

In einer besonders bevorzugten Ausführungsform sind die erfindungsgemäßen Polymeren in dem im elektrochromen System enthaltenen Lösemittel gelöst.

Das erfindungsgemäße elektrochrome System kann mindestens ein inertes Leitsalz enthalten.

Als inerte Leitsalze sind Lithium-, Natrium- und Tetraalkylammoniumsalze geeignet, insbesondere letztere. Die Alkylgruppen können 1 bis 18 C-Atome aufweisen und gleich oder verschieden sein. Bevorzugt sind Tetrabutylammoniumsalze. Als Anionen zu diesen Salzen, aber auch als Anionen G in den Formeln (IX)-(XV) kommen alle redox-inerten, farblosen Anionen in Frage.

Beispiele sind Tetrafluoroborat, Tetraphenylborat, Cyano-triphenylborat, Tetramethoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Naphthalinsulfonat, Biphenylsulfonat, Benzoldisulfonat, Naphthalindisulfonat, Biphenyldisulfonat, Nitrobenzolsulfonat, Dichlorbenzolsulfonat, Trifluormethylbenzolsulfonat, Hexafluorophosphat, Hexafluoroarsenat, Hexafluorosilicat, 7,8-or 7,9-Dicarba-nido-undecaborat(1-) or (2-), die gegebenenfalls an den B- und/oder C-Atomen durch eine oder zwei Methyl-, Ethyl- Butyl- or Phenyl-Gruppen substituiert sind, Dodecahydro-dicarbadodecoborat(2-) oder B-Methyl-C-phenyl-dodecahydrodicarbadodecarborat(1-). Bei mehrwertigen Anionen steht $G^-$ für ein Äquivalent dieses Anions, z.B. für 1/2 $SiF_6$.

Bevorzugte Anionen sind Tetrafluoroborat, Pentadecansulfonat, Dodecylbenzolsulfonat, Cyanotriphenylborat, 7,8-Dicarba-nido-undecaborat(1-).

Die Leitsalze werden vorzugsweise im Bereich 0 bis 1 molar eingesetzt.

Als weitere Zusätze kann das elektrochrome System Verdicker enthalten zur Steuerung der Viskosität. Das kann Bedeutung haben zur Vermeidung von Segregation, d.h. der Bildung von streifiger oder fleckiger Farbbildung bei längerem Betrieb einer das erfindungsgemäße elektrochrome System enthaltenden elektrochromen Vorrichtung im eingeschalteten Zustand und zur Steuerung der Ausbleichgeschwindigkeit nach Abschalten des Stroms.

Als Verdicker eignen sich alle für diese Zwecke üblichen Verbindungen, z.B. Polyacrylat, Polymethacrylat

(Luctite L®), Polycarbonat und Polyurethan.

Als weitere Zusätze für das elektrochrome System kommen UV-Absorber zur Verbesserung der Lichtechtheit in Frage. Beispiele sind Uvinul® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24® (2,2'-Dihydroxy-4-methoxybenzophenon, American Cyanamid Company), UVINUL® 3035 (Ethyl-2-cyano-3,3-diphenylacrylat, BASF), Uvinul® 3039 (2-Ethylhexyl-2-cyano-3,3-diphenylacrylat, BASF), UVINUL® 3088 (2-Ethylhexyl-2-cyano-3,3-diphenylacrylat, BASF), UVINUL® 3088 (2-Ethylhexyl-p-methoxycinnamat, BASF), CHIMASSORB®90 (2-Hydroxy-2-methoxybenzophenon, Ciba).

Die UV-Absorber werden im Bereich 0,01 bis 2 mol/l, vorzugsweise 0,04 bis 1 mol/l eingesetzt. Sie können auch als Mischungen eingesetzt werden, beispielsweise UVINUL®3939 und CHIMASSORB®90.

Das erfindungsgemäße elektrochrome System enthält die Substanzen der Formel (I), insbesondere der Formeln (II) - (VIII) jeweils in einer Konzentration von mindestens $10^{-4}$ mol/l, vorzugsweise 0,001 mol/l. Es können auch Mischungen meherer elektrochromer Substanzen der Formel (I) eingesetzt werden.

Das erfindungsgemäße elektrochrome System ist bestens als Bestandteil einer elektrochromen Vorrichtung geeignet. Ein weiterer Gegenstand der vorliegenden Erfindung sind demnach elektrochrome Vorrichtungen, enthaltend das erfindungsgemäße elektrochrome System. Der Aufbau einer elektrochromen Vorrichtung, die z.B. als Fensterscheibe, Autosonnendach, Automobil-Rückspiegel oder Display ausgebildet sein kann, ist im Prinzip bekannt. Die erfindungsgemäße elektrochrome Vorrichtung besteht aus zwei einander zugewandten, lichtdurchlässigen Glas- oder Kunststoffscheiben, von denen gegebenenfalls eine verspiegelt ist und deren einander zugewandten Seiten elektrisch leitfähig beschichtet sind, z. B. mit Indium-Zinn-Oxid (ITO), zwischen denen sich das erfindungsgemäße elektrochrome System befindet. Als leitfähige Materialien sind auch geeignet: Antimon-dotiertes Zinnoxid, Fluordotiertes Zinnoxid, Antimon-dotiertes Zinkoxid, Aluminium-dotiertes Zinkoxid, Zinnoxid; auch leitfähige organische Polymere wie gegebenenfalls substituierte Polythienyle, Polypyrrole, Polyaniline, Polyacetylen. Im Falle, daß eine der Scheiben verspiegelt ist, kann auch diese als leitfähige Schicht genutzt werden.

Die erfindungsgemäße elektrochrome Vorrichtung wird beispielsweise folgendermaßen gebaut. Dabei ist zwischen drei Grundtypen zu unterscheiden:

Typ 1: vollflächige elektrochrome Vorrichtung, beispielsweise für Fensterscheiben,

Typ 2: elektrisch abblendbare verspiegelte Vorrichtungen, beispielsweise Autospiegel,

Typ 3: elektrochrome Anzeigenvorrichtungen, beispielsweise Segment- oder Matrixanzeigen.

Bei Typ 2 werden Glas- oder Kunststoffscheiben verwendet, die auf einer Seite vollflächig mit einer transparenten leitfähigen Schicht beschichtet sind.

Bei Typ 2 werden Scheiben wie bei Typ 1 verwendet. Zusätzlich ist eine der beiden Scheiben verspiegelt. Diese Verspiegelung kann auf der zweiten, nicht leitfähig beschichteten Seite einer der beiden Platten aufgebracht sein. Sie kann jedoch auch statt der erwähnten leitfähigen Beschichtungen auf eine der beiden Platten aufgebracht sein und somit die Funktion der leitfähigen Schicht und der Verspiegelung gleichzeitig erfüllen. zur Verspiegelung können Silbeer, Chrom, Aluminium, Palladium oder Rhodium oder auch Palladium auf Chrom oder Rhodium auf Chrom oder andere bekannte Materialien verwendet werden. Man erhält so eine reflektierende elektrochrome Vorrichtung.

Bei Typ 3 kann die Bauweise wie bei Typ 1 oder 2 gewählt werden. Man erhält so eine transmissive oder eine reflektierende elektrochrome Anzeigevorrichtung. In jedem Fall ist jedoch mindestens eine der beiden leitfähigen Schichten in elektrisch voneinander getrennte Segmente aufgeteilt, die einzeln kontaktiert sind. Es kann aber auch nur eine der beiden Platten leitfähig beschichtet und in Segmente aufgeteilt sein. Die Trennung der Segmente kann beispielsweise erfolgen durch mechanisches Entfernen der leitfähigen Schicht beispielsweise durch Ritzen, Kratzen, Schaben oder Fräsen oder auf chemischem Wege beispielsweise durch ätzen mittels beispielsweise einer salzsauren Lösung von $FeCl_2$ und $SnCl_2$. Diese Entfernung der leitfähigen Schicht kann über Masken, z.B. solchen aus Photolack, örtlich gesteuert werden. Es können aber auch die elektrisch getrennten Segmente durch gezieltes, z.B. mittels Masken, Aufbringen, z.B. Sputtern oder Drucken, der leitfähigen Schicht hergestellt werden. Die Kontaktierung der Segmente erfolgt beispielsweise mittels feiner Streifen aus leitfähigem Material, womit das Segment mit einem Kontakt am Rande der elektrochromen Vorrichtung elektrisch leitend verbunden ist. Diese feinen Kontaktstreifen können entweder aus dem gleichen Material bestehen wie die leitfähige Schicht selbst und beispielsweise bei deren Aufteilung in Segmente wie oben beschrieben mit hergestellt werden. Sie können aber auch z.B. zur Verbesserung der Leitfähigkeit aus anderem Material wie feinen metallischen Leitern, beispielsweise aus Kupfer oder Silber, bestehen. Auch eine Kombination aus metallischem Material und dem Material der leitfähigen Beschichtung ist möglich. Diese metallischen Leiter können beispielsweise entweder in feiner Drahtform aufgebracht, z.B. aufgeklebt, werden oder aber aufgedruckt werden. Alle diese eben beschriebenen Techniken sind im allgemeinen aus der Herstellung von Flüssigkristalldisplays (LCD) bekannt.

Die Anzeigen können im Durchlicht oder auch reflektiv über eine Verspiegelung betrachtet werden.

Die beiden Platten werden mit den einander zugewandten leitfähig beschichteten und in Segmente aufgeteilten Seiten, getrennt durch beispielsweise einen Dichtungsring aufeinandergelegt und am Rand miteinander verklebt. Der Dichtungsring kann beispielsweise aus Kunststoff oder Dünnglas oder einem anderen gegenüber der elektrochromen Flüssigkeit inerten Material bestehen. Der Abstand zwischen den Platten kann aber auch hergestellt werden mittels anderer Abstandshalter, beispielsweise kleiner Kunststoff- oder Glaskügelchen oder bestimmter Sandfraktionen, wobei dann diese Abstandshalter zusammen mit einem Kleber aufgetragen werden und dann gemeinsam den Dichtungsring bilden. Der Dichtungsring enthält eine oder zwei Aussparungen, die zum Befüllen der elektrochromen Vorrichtung dienen. Der Abstand zwischen den beiden Platten liegt zwischen 0,005 und 2 mm, vorzugsweise 0,01 bis 0,5 mm. Bei großflächigen Anzeigevorrichtungen, insbesondere solchen aus Kunststoff, kann es vorteilhaft sein, mittels Abstandshaltern, beispielsweise Kunststoffkügelchen gleichen Durchmessers, die über die Fläche der Anzeigenvorrichtung verteilt sind, den Abstand der Platten konstant zu halten.

Diese Anzeigevorrichtung wird mit dem elektrochromen System befüllt über die Öffnung im Dichtungsring, wobei stets unter Feuchtigkeits- und Sauerstoffausschluß gearbeitet werden muß. Das Befüllen kann beispielsweise mittels feiner Kanülen oder aber über die Vakuumbefülltechnik erfolgen, bei der die Vorrichtung und die Flüssigkeit, eingefüllt in eine flache Schale, in einen evakuierbaren Behälter eingebracht werden. Dieser wird evakuiert. Dann wird die Anzeigevorrichtung, die nur eine Befüllöffnung enthält, mit dieser Öffnung in die Flüssigkeit getaucht. Beim Entfernen des Vakuums wird nun die Flüssigkeit in die Anzeigevorrichtung gedrückt.

Anschließend werden die Befüllöffnungen dicht verschlossen und verklebt.

Man kann jedoch auch so vorgehen, daß das elektrochrome System beispielsweise als Lösung oder Schmelze als Beschichtung auf eine leitfähig beschichtete Platte oder Folie aufgetragen wird, beispielsweise mit einer Rakel oder durch Spincoaten. Dann wird gegebenenfalls das Lösungsmittel teilweise oder ganz entfernt. Nun wird die zweite Platte oder Folie mit ihrer leitfähigen Seite auf das elektrochrome System aufgepreßt und der Stand in geeigneter Weise verklebt. Es kann aber auch auf das elektrochrome System eine leitfähige, beispielsweise metallische Beschichtung aufgedampft, aufgesputtert oder mittels beispielsweise einer Dispersion aufgetragen werden. Beispiele sind Aluminium oder leitfähige Polymere, beispielsweise auf Basis Polythiophen.

Gegebenenfalls muß auch hier der Rand beispielsweise mit einem Kleber oder einem Harz versiegelt werden.

Alle diese Arbeitsgänge müssen unter Inertgas, z.B. $N_2$ oder Ar, sowie unter Ausschluß von Feuchtigkeit durchgeführt werden.

Spezielle Ausführungsformen der obengenannten Typen 1 bis 3 können beispielsweise die folgenden sein, die ebenfalls Gegenstand der Erfindung sind:

Typ 1: aus dem Bereich Lichtschutz/Lichtfilter: Fensterscheiben für z.B. Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art.
Aus dem Bereich Sicherheit/Geheimhaltung: Trennscheiben für z.B. Raumteiler in z.B. Büros, Straßenfahrzeugen, Flugzeugen, Eisenbahnen, Sichtschutzscheiben an z.B. Bankschaltern, Türverglasungen, Scheiben für z.B. Motorrad- und Pilotenhelme.
Aus dem Bereich Design: Verglasung von Backöfen, Mikrowellengeräten, anderen Haushaltsgeräten, Möbeln.

Typ 2: Spiegel jeglicher Art, z.B. für Straßenfahrzeuge, Eisenbahnen, insbesondere plane, sphärische, asphärische Spiegel und Kombinationen daraus, z.B. sphärisch/asphärisch, Spiegelverglasung in Möbeln.

Typ 3: Anzeigevorrichtungen jeglicher Art, z.B. Segment- oder Matrixanzeigen, z.B. für Uhren, Computer, Elektrogeräte, Elektronikgeräte wie Radios, Verstärker, Fernseher, CD-Player etc., Zielanzeige in Bussen und Zügen, Abfahrts- oder Abiluganzeigen in Bahnhöfen und Flughäfen, Flachbildschirme, alle Anwendungen, die unter Typ 1 und 2 genannt sind, die mindestens eine schaltbare, statische oder variable Anzeigevorrichtung enthalten, z.B. Trennscheiben, die Anzeigen wie z.B. "Bitte nicht stören", "Schalter nicht besetzt" enthalten, z.B. Auto-Spiegel, die Anzeigen beliebiger Art enthalten, z.B. Anzeige der Temperatur, Störungen im Fahrzeug (z.B. Öltemperatur, offene Türen), Zeit, Himmelsrichtung.

Die erfindungsgemäße selbstlöschende einzellige elektrochrome Vorrichtung kann zusätzlich zu den oben beschriebenen elektrochromen Polymeren der Formeln (I), insbesondere den Formeln (II) - (VIII) auch andere enthalten, wie sie beispielsweise in US-A-4 902 108, Topics in Current Chemistry, Vol. 92, S. 1 - 44 (1980) und Angew. Chem. 90, 927 (1978) beschrieben sind. Andere geeignete elektrochrome Mischkomponenten sind beispielsweise Tetrazoliumsalze oder Komplexe oder Salze von Metallionen, z.B. $[Fe(C_5H_5)_2]^{0/1+}$. Eine Zumischung solcher Redoxsysteme kann beispielsweise vorteilhaft sein, um bei der Erfindungsgemäßen elektrochromen Vorrichtung den Farbton, z.B. des Displays, im eingeschalteten Zustand zu korrigieren oder zu intensivieren.

Mit den erfindungsgemäßen Polymeren lassen sich Lösungen hoher Farbdichte herstellen, die zur Erzeugung dünner Displayschichten von Vorteil sind. Diese Lösungen ermöglichen weiterhin den Bau von elektrochromen Systemen, die auslaufsicher sind und sich dennoch problemlos füllen lassen.

Die Systeme der vorliegenden Erfindung entmischen sich auch bei großen Abmessungen der Vorrichtungen bei andauerndem Betrieb im Schwerefeld (z.B. Konvektion) nicht. Weiterhin haben die erfindungsgemäßen elektrochromen Polymere den Vorteil, daß sie sich einfach herstellen lassen.

Die Erfindung der vorliegenden Anmeldung wird anhand der nachfolgenden Beispiele näher erläutert.

<u>**Beispiel 1**</u> Synthese der Monomeren

1.1. *5,10-Bis(5-Brom-n-pentyl)-5,10 dihydrophenazin*

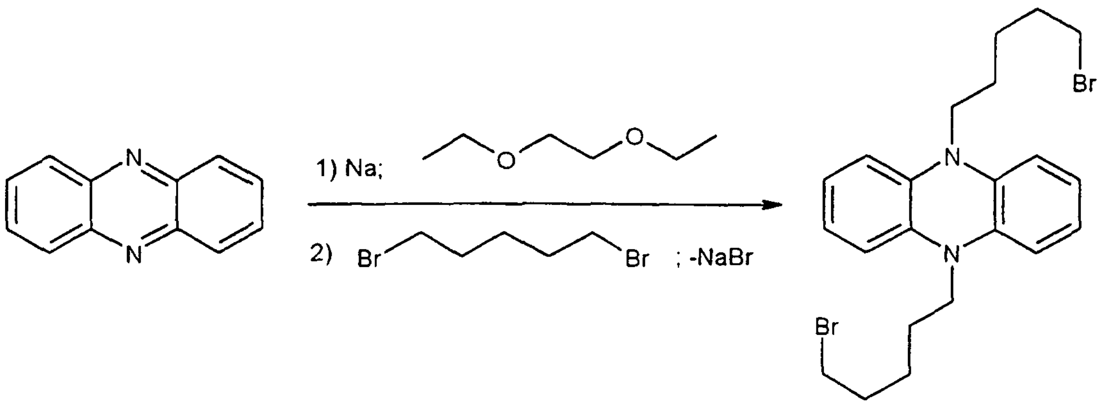


20 g (0,11 mol) Phenazin werden in 400 ml wasserfreiem 1,2-Diethoxyethan bei 80°C unter Argonatmosphäre gelöst. 7,4 g Natrium werden zugegeben. Die Reaktionsmischung wird bei 120°C mit Rückfluß 24 h intensiv gerührt und auf Raumtemperatur abgekühlt. Zu der gebildeten 5,10-Dinatrium-5,10-dihydrophenazin-Suspension wird schnell eine Lösung von 69 g (0,3 mol) 60 in 100 ml 1,2-Diethoxyethan gegossen. Nach 30 min Rühren wird die Reaktionsmischung von dem Niederschlag durch Filtration befreit. Wasserfreies 1,2-Diethoxyethan wird vollständig mit einem Rotationsverdampfer abdestilliert und für die weiteren Synthese benutzt. Das Produkt wird chromatographisch gereinigt (Kieselgel-Säule; Cyclohexan/Dioxan = 9/1) und aus 50 ml n-Butanol umkristallisiert. Die Ausbeute der leichtgelben Kristallen beträgt 11,7 g.

Elementaranalyse: $C_{22}H_{28}Br_2N_2$ (480,3)

| | | | | |
|---|---|---|---|---|
| Ber.: | C55,02; | H5,88; | Br33,27; | N5,83. |
| Gef.: | C55,10; | H5,85; | Br32,70; | N5,80. |

1.1a. Als Nebenprodukt dieser Reaktion entsteht *1,5-Di[5-(5-brompentyl)-5,10-dihydro-10-phenazyl]-pentan,*

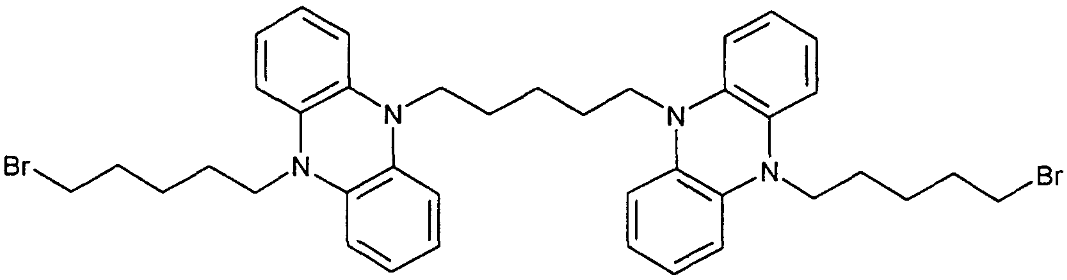

das chromatographisch von dem Hauptprodukt abgetrennt wird. Die Ausbeute beträgt 3,5 g.

| | | | | |
|---|---|---|---|---|
| Elementaranalyse: $C_{39}H_{46}Br_2N_4$ (730,64) | | | | |
| Ber.: | C64,11; | H6,35; | Br21,87; | N7,67. |
| Gef.: | C64,60; | H6,40; | Br21,20; | N7,70. |

Analog werden hergestellt:

1.2. *5,10-Bis[2(2-Chlorethoxy)-ethyl]-5,10 dihydrophenazin*

F.p. = 105°C

| | | | | |
|---|---|---|---|---|
| Elementaranalyse: $C_{20}H_{24}Cl_2N_2O_2$ (395,33) | | | | |
| Ber.: | C60,76; | H6,12; | C117,94; | N7,09; |
| Gef.: | C60,70; | H6,20; | C118,00; | N7,10; |

1.3. *5,10-Bis[p(Chlormethyl)-benzyl]-5,10 dihydrophenazin*

F.p. = 180°C (mit Zersetzung)

| | | | | |
|---|---|---|---|---|
| Elementaranalyse: $C_{28}H_{24}Cl_2N_2$ (459,42) | | | | |
| Ber.: | C73,20; | H5,27; | Cl15,43; | N6,10; |
| Gef.: | C72,90; | H5,60; | Cl15,40; | N5,90; |

1.4. *5,10-Bis[m(Chlormethyl)-benzyl]-5,10 dihydrophenazin*

F.p. = 148-149°C

| | | | | |
|---|---|---|---|---|
| Elementaranalyse: $C_{28}H_{24}Cl_2N_2$ (459,42) | | | | |
| Ber.: | C73,20; | H5,27; | C115,43; | N6,10; |
| Gef.: | C73,70; | H5,40; | C114,10; | N6,20. |

1.5. *5,10-Bis-[5(Methacryloyloxy)-pentyl]-5,10-dihydrophenazin*

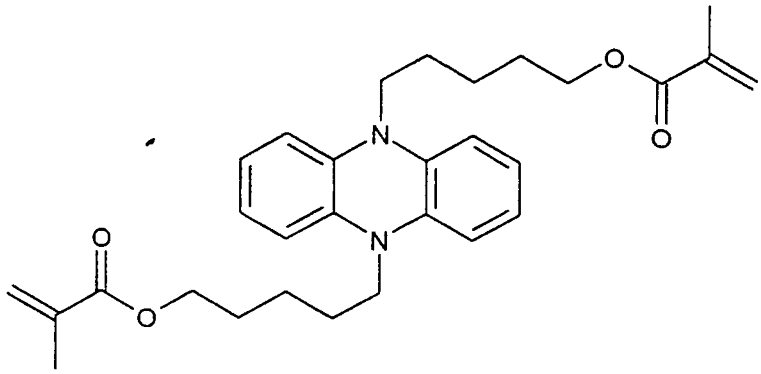

7,41 g (0,0182 mol) Monomer 1.1 und 4,52 g (0,0364 mol) Kaliummethacrylat werden in 40 ml DMPU 2h bei 100°C in der Argonatmosphäre gerührt, in einen Scheidetrichter übertragen, mit Ether versetzt, mit Wasser mehrmals gewaschen und mit Magnesiumsulfat getrocknet. Nach dem Abdestillieren des Lösungsmittels wird Produkt chromatographisch gereinigt (Kieselgel-Säule; Cyclohexan/ Dioxan = 9/1). Die Ausbeute der leichtgrünen Flüssigkeit beträgt 4,2 g.

| Elementaranalyse: $C_{30}H_{38}N_2O_4$ (490,65) | | | |
|---|---|---|---|
| Ber.: | C73,44; | H7,81; | N5,71; |
| Gef.: | C73,80; | H8,00; | N5,30; |

1.6. *5-(4-Methacryloyloxybutyl)-10-Phenyl-5,10 dihydrophenazin*

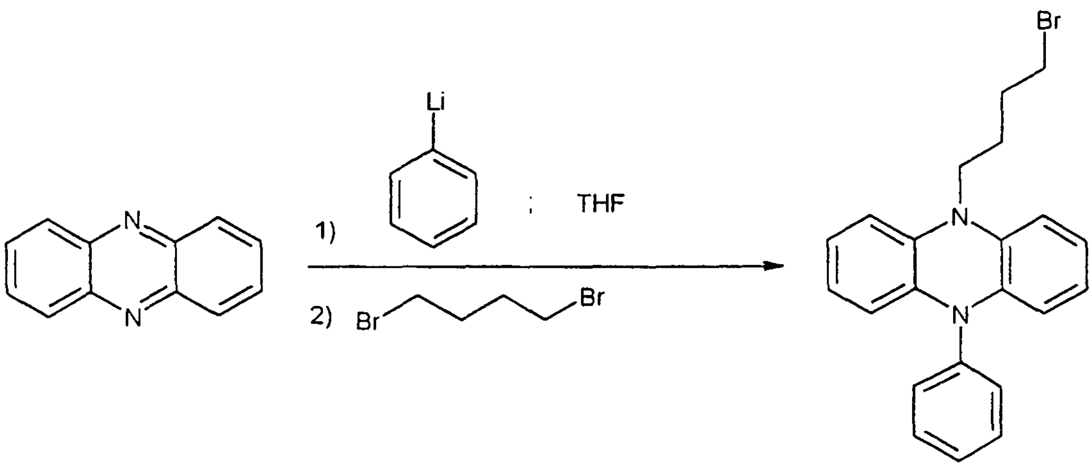

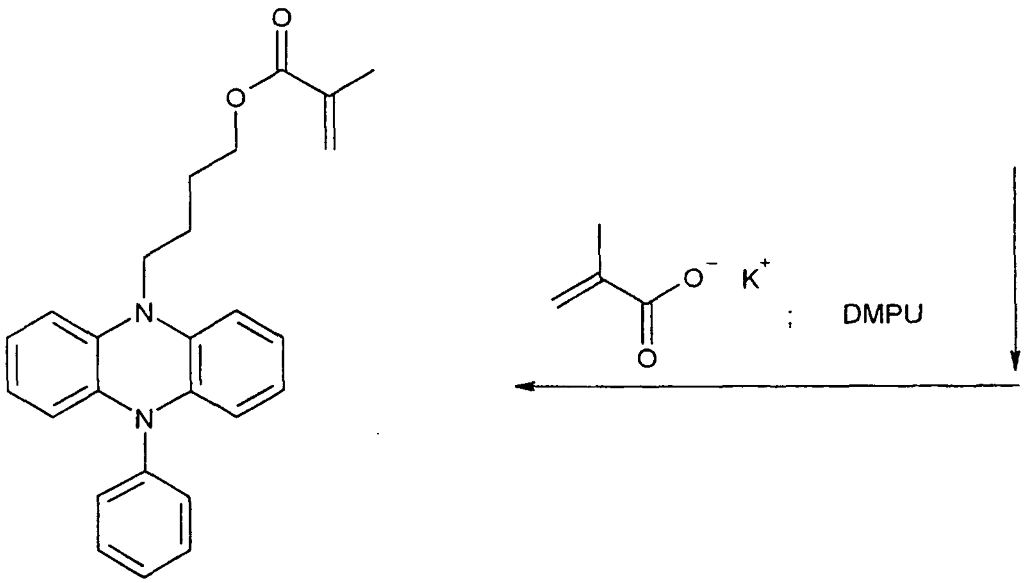


a) 29,9 g Phenazin werden unter Argonatmosphäre in 195 ml wasserfreiem THF suspendiert. 100 ml 20 gew.-%ige Phenyllithium-Lösung in Cyclohexan/Diethylether (7:3) werden in ca 90 min zugetropft, wobei die Temperatur bei max 35°C gehalten wird. Die Reaktionsmischung wird 30 min bei Raumtemperatur nachgerührt. Bei 15°C werden in einer Portion 98,2 ml 1,4-Dibrombutan zugegeben. Nach 6 h bei Raumtemperatur wird die Mischung mit 600 ml Wasser versetzt und bis pH 7,0 angesäurt. Die organische Phase wird abgetrennt, mit Wasser gewaschen und in Vakuum eingeengt. Schließlich wird überschüssiges 1,4-Dibrombutan bei einem Druck von 17 mbar abdestilliert. Der Rückstand wird chromatographisch gereinigt (Kieseigel-Säule; Cyclohexan/ Dioxan = 9/1). Die Ausbeute der gelbgrünen Kristallen *5-(4-Brombutyl)-10-Phenyl-5,10 dihydrophenazin* beträgt 23,6 g. F.p. = 115°C

| Elementaranalyse: $C_{22}H_{21}BrN_2$ (393,33) | | | |
|---|---|---|---|
| Ber.: | C67,18; | H5,38; | N7,12; |
| Gef.: | C67,10; | H5,70; | N6,70; |

b) 12,0 g (0,0305 mol) von diesem Produkt und 7,57 g (0,0610 mol) Kaliummethacrylat werden in 40 ml DMPU 2h bei 100°C in der Argon-Atmosphäre gerührt und weiter analog 1.5 bearbeitet. Man erhält 6,4 g gelbgrüner Kristallen. F.p. = 73°C

| Elementaranalyse: $C_{26}H_{26}N_2O_2$(398,51) | | | |
|---|---|---|---|
| Ber.: | C78,36; | H6,58; | N7,03; |
| Gef.: | C78,70; | H6,60; | N7,00; |

1.6.1. *5-(3-Hydroxypropyl)-10-Phenyl-5,10 dihydrophenazin*

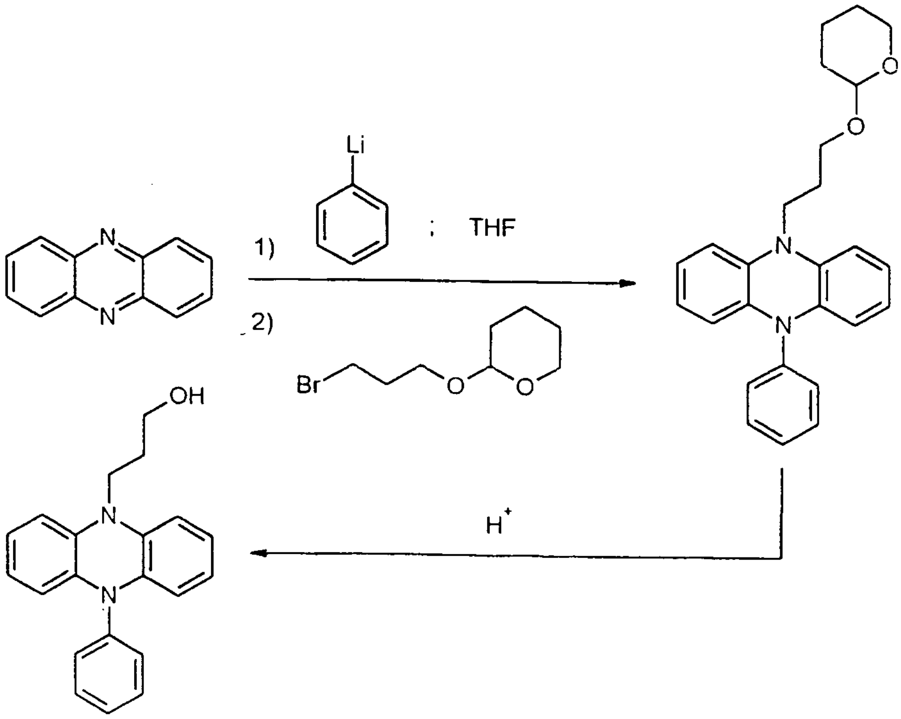


Die Synthese verläuft analog 1.6a, wobei 1-Brom-3-tetrahydropyranyloxypropan anstatt 1,4-Dibrombutan zugegeben wird. Reinigung erfolgt chromatographisch ($Al_2O_3$-Säule; Cyclohexan/ Dioxan = 9/1) mit anschließender Kristallisation aus Methanol. Die Ausbeute an hellgrünen Kristallen *5-(3-Tetrahydropyranyloxy-n-propyl)-10-Phenyl-5,10 dihydrophenazin* beträgt 42% d.Th..

36 g von diesem Produkt und 25,7g p-Toluolsulfonsäure-Monohydrat werden in 300 ml Methanol 2 h am Rückfluß gerührt. Die Reaktionsmischung wird mit $NaHCO_3$ neutralisiert, mit Chloroform versetzt, mit Wasser zweimal ausgewaschen und mit Magnesiumsulfat getrocknet. Nach dem Abdestillieren des Lösungsmittels wird das Produkt chromatographisch gereinigt (Kieselgel-Säule; Cyclohexan/Dioxan = 7/3) und aus Methanol kristallisiert. Die Ausbeute der leichtgrünen Kristallen beträgt 14,2 g.
Fp. = 135°C

Elementaranalyse: $C_{21}H_{20}N_2O$ (316,41)

| | | | |
|---|---|---|---|
| Ber.: | C79,72; | H6,37; | N8,85; |
| Gef.: | C79,30; | H6,60; | N8,80; |

Analog wird

1.6.2. *5-(11-Hydroxyundecyl)-10-Phenyl-5,10 dihydrophenazin*

Fp. = 70°C

Elementaranalyse: $C_{29}H_{36}N_2O_2$ (428,62)

| | | | |
|---|---|---|---|
| Ber.: | C81,27; | H8,47; | N6,54. |
| Gef.: | C80,00; | H8,60; | N6,60. |

hergestellt.

1.7. *5,10-Bis(2-Hydroxypropyl)-5,10 dihydrophenazin*

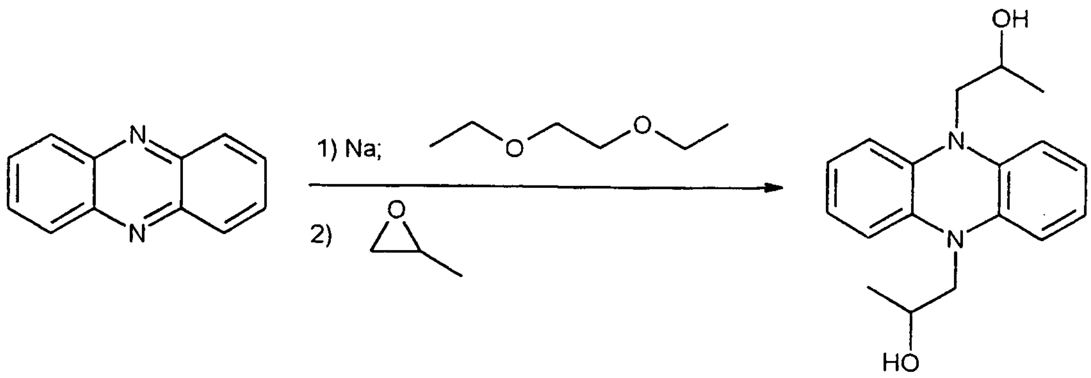


40 g (0,22 mol) Phenazin werden in 500 ml wasserfreies 1,2-Diethoxyethan bei 80°C unter Argon-Atmosphäre gelöst. 14 g Natrium werden zugegeben. Die Reaktionsmischung wird bei 120°C mit Rückfluß 24 h intensiv gerührt und bis Raumtemperatur abgekühlt. Zu der ausgebildeten 5,10-Dinatrium-5,10-dihydrophenazin-Suspension wird eine Lösung von 39 g (0,66 mol) 1,2-Propylenoxid in 50 ml 1,2-Diethoxyethan gegossen. Nach 1h Rühren bei Raumtemperatur und 2h bei 50°C wird die Reaktionsmischung von dem Niederschlag durch Filtration befreit. Wasserfreies 1,2-Diethoxyethan wird vollständig mit einem Rotationsverdampfer abdestilliert und für die weitere Synthese benutzt. Der feste Rest wird zusammen mit abfiltriertem Niederschlag mit 500 ml Methanol versetzt und 30 min gerührt. Die Lösung wird danach am Rotationsverdampfer eingeengt, in einen Scheidetrichter übertragen, mit Chloroform versetzt, mit Wasser mehrmals gewaschen und mit Magnesiumsulfat getrocknet. Nach dem Abdestillieren des Lösungsmittels wird das Produkt chromatographisch gereinigt (Kieselgel-Säule; Cyclohexan/Dioxan = 1/1) und aus 150 ml einer Mischung Aceton/Wasser (2/1) umkristallisiert. Die Ausbeute der leichtgrünen Kristallen beträgt 22,5 g.
Fp. = 156°C

| Elementaranalyse: $C_{18}H_{22}N_2O_2$ (298,39) | | | |
|---|---|---|---|
| Ber.: | C72,46; | H7,43; | N9,39. |
| Gef.: | C72,50; | H7,30; | N9,20. |

Analog werden hergestellt:

1.8. *5,10-Bis(2-Hydroxyethyl)-5,10 dihydrophenazin*

Fp. = 179°C

| Elementaranalyse: $C_{16}H_{18}N_2O_2$ (270,33) | | | |
|---|---|---|---|
| Ber.: | C71,09; | H6,71; | N10,36. |
| Gef.: | C71,00; | H6,50; | N10,10. |

1.9. *5,10-Bis(3-Hydroxypropyl)-5,10 dihydrophenazin* *

**[0107]** * enthält nach Angaben der Massenspektroskopie und Elementaranalyse ca. 30% von 5-*(3-Hydroxypropyl)-10-[3-(3-Hydroxypropyloxy)propyl]-5,10 dihydrophenazin* Fp. = 158°C

1.9a. *5,10-Bis(3-Hydroxypropyl)-5,10 dihydrophenazin*

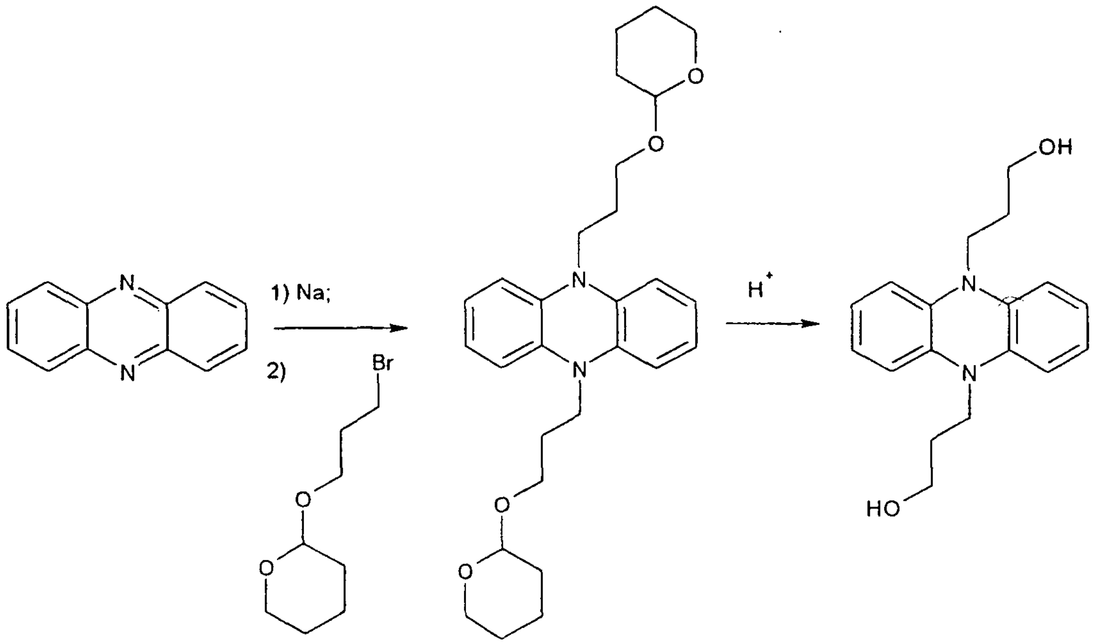


Dinatriumdihydrophenazin, das man analog 1.7 aus 20 g Phenazin und 7 g Natrium herstellt, wird mit 53 g 1-Brom-3-tetrahydropyranyloxypropan umgesetzt Die weitere Verarbeitung erfolgt analog 1.1. Man erhält 16,8 g farblose Kristalle von *5,10-Bis(3-Tetrahydropyranyloxy-n-propyl)-5,10-dihydrophenazin*
Fp. = 80°C

Elementaranalyse: $C_{28}H_{38}N_2O_4$ (466,63)

| | | | |
|---|---|---|---|
| Ber.: | C72,07; | H8,21; | N6,00. |
| Gef.: | C72,20; | H8,20; | N5,90. |

5 g von diesem Produkt werden in 36 ml einer Mischung aus 2N HCl und THF (1:10) bei Raumtemperatur 24 h gerührt. Die Reaktionsmischung wird mit $NaHCO_3$ neutralisiert, mit Chloroform versetzt, mit Wasser zweimal ausgewaschen und mit Magnesiumsulfat getrocknet. Die weitere Verarbeitung erfolgt analog 1.7. Die Ausbeute der leichtgrünen Kristalle beträgt 0,7 g.
Fp. = 154°C
Analog werden

1.9b. *5,10-Bis(6-Hydroxyhexyl)-5,10 dihydrophenazin*

Fp. = 95°C

Elementaranalyse: $C_{24}H_{34}N_2O_2$ (382,55)

| | | | |
|---|---|---|---|
| Ber.: | C75,35; | H8,96; | N7,32, |
| Gef.: | C75,30; | H8,70; | N7, 20 |

und

1.9c. *5,10-Bis(11-Hydroxyundecyl)-5,10 dihydrophenazin*

Fp. = 86°C

Elementaranalyse: $C_{34}H_{54}N_2O_2$ (522,82)

(fortgesetzt)

| | | | |
|---|---|---|---|
| Ber.: | C78,11; | H10,41; | N5,36, |
| Gef.: | C78,10; | H 10,30; | N5, 30 |

hergestellt.

1.10. *1,1'-Di[p(Chlormethyl)-benzyl]-4,4'-bipyridinium difluoroborat*

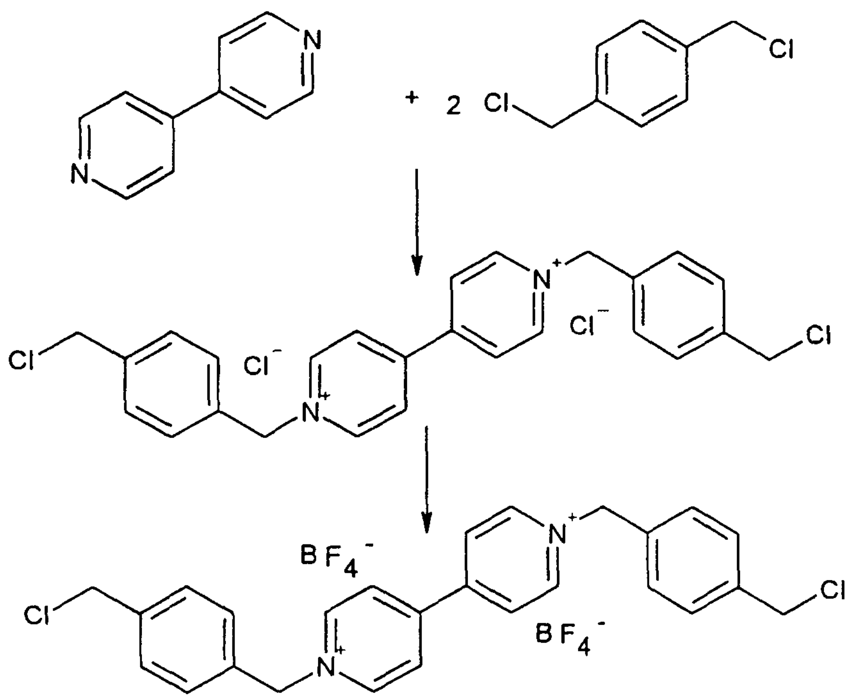

a) 34,3 g (0,22 mol) 4,4'-Dipyridyl und 106 g (0,66 mol) $\alpha,\alpha'$-Dichloro-p-xylol werden in 500 ml Acetonitril 4h bei 90°C unter Argon-Atmosphäre gerührt. Nach dem Abkühlen wird der Niederschlag abfiltriert und mit Acetonitril ausreichend gewaschen. Nach dem Trocken erhält man 88,1 g *1,1'-Di[p(Chlormethyl)-benzyl]-4,4'-bipyridinium dichlorid.*
b) 50,6 g von diesem Substanz werden in 200 ml Methanol gelöst. Eine konzentrierte Lösung von 131 g (0,4 mol) Tetrabutylammoniumtetrafluoroborat in Methanol wird zugegeben. Nach eine Stunde wird weißer Niederschlag abfiltriert, mit Methanol gewaschen und getrocknet. Die Ausbeute an Monomer 1.10 beträgt 40 g.

Elementaranalyse: $C_{26}H_{24}B_2Cl_2F_8N_2$ (609,01)

| | | | |
|---|---|---|---|
| Ber.: | C51,28; | H3,97; | N4,60; |
| Gef.: | C50,40; | H4,20; | N4,70. |

1.11. *1,1'-Di(11-Hydroxyundecyl)-4,4'-bipyridinium dibromid*

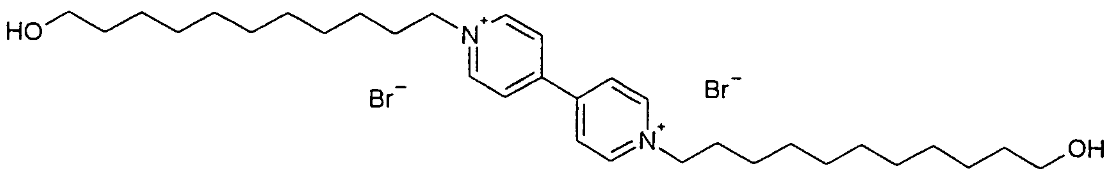

wird analog 1.10a unter Verwendung von DMF anstelle von Acetonitril und bei 160°C in der 2h Reaktionszeit hergestellt,

Elementaranalyse: $C_{32}H_{54}Br_2N_2O_2$ (658,61)

| | | | | |
|---|---|---|---|---|
| Ber.: | C58,36; | H8,26; | Br24,26; | N4,25. |
| Gef.: | CS8,20; | H8,20; | Br24,10; | N4,25. |

Auf Basis des Produktes von 1.11 werden analog 1.10b die folgenden Monomere hergestellt:

1.12. *1,1'-Di(11-Hydroxyundecyl)-4,4'-bipyridinium difluoroborate*

Elementaranalyse: $C_{32}H_{54}B_2F_8N_2O_2$ (672,4)

| | | | |
|---|---|---|---|
| Ber.: | C57,16; | H8,09; | N4,17. |
| Gef.: | C58,20; | H8,50; | N4,20. |

1.13. *1,1'-Di(11-Hydroxyundecyl)-4,4'-bipyridinium ditetraphenylborat*

Elementaranalyse: $C_{80}H_{94}B_2N_2O_2$ (1137,28)

| | | | |
|---|---|---|---|
| Ber.: | C84,49; | H8,33; | N2,46. |
| Gef.: | C84,50; | H8,50; | N2,50. |

1.14. *1,1'-Di(11-Hydroxyundecyl)-4,4'-bipyridinium di(cyanotriphenylborat)*

Elementaranalyse: $C_{70}H_{84}B_2N_4O_2$ (1035,1)

| | | | |
|---|---|---|---|
| Ber.: | C81,23; | H8,18; | N5,41. |
| Gef.: | C80,70; | H8,20; | N5,20. |

1.15. *1,1-Di(11-Hydroxyundecyl)-4,4'-bipyridinium didodecylsulfonat*

20 g (0,03 mol) des Monomers 1.9 und 19,8g (0,072 mol) Natriumdodecylsulfonat werden beim Rühren unter Rückfluß in 150 ml einer Mischung aus Methanol/Wasser (1:2) gelöst. Diese Lösung wird zu einem Zweiphasensystem aus 600 ml Methylenchlorid und 200 ml Wasser zugegeben und 2 h mit Rückfluß intensiv gerührt. Nach dem Abkülen wird die organische Schicht abgetrennt und im Vakuum zur Trockene eingedampft. Den Rückstand wäscht man mit Aceton, trocknet im Vakuum bei Raumtemperatur und im Hochvakuum ($10^{-3}$ mbar) 5 h bei 150°C. Die Ausbeute beträgt 20,6 g.

Elementaranalyse: $C_{56}H_{104}N_2O_8S_2$ (997,6)

| | | | |
|---|---|---|---|
| Ber.: | C67,42; | H10,51; | N2,81. |
| Gef.: | C65,80; | H10,50; | N2,50. |

Analog wird

1.16. *1,1'-Di(11-Hydroxyundecyl)-4,4'-bipyridinium dihexadecylsulfonat* hergestellt.

1.17. *1-(Vinyl-benzyl)- 1'-benzyl -4,4'-bipyridinium dichlorid*

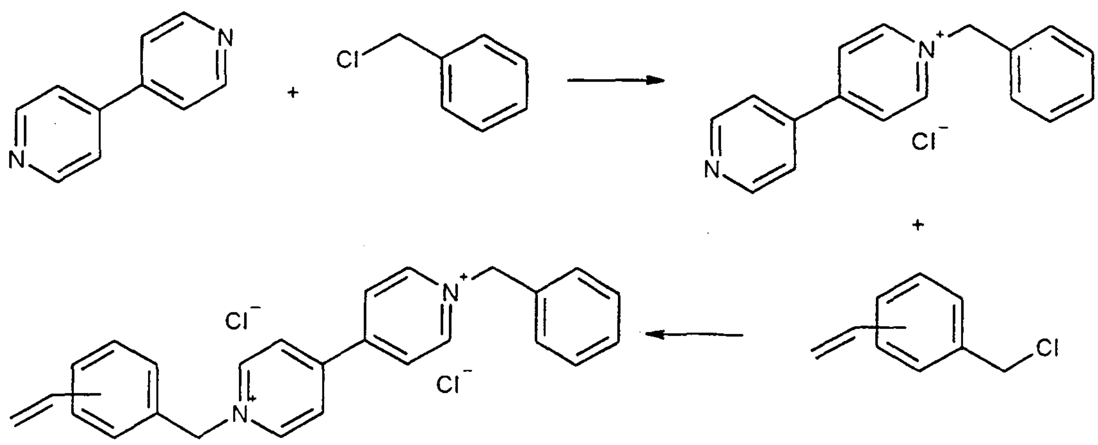

a) 15,6 g 4,4'-Dipyridyl und 12,7 g Benzylchlorid werden in 300 ml Toluol mit Rückfluß 4 h gerührt. Der Niederschlag wird von der heißen Lösung abfiltriert, mit heißem Toluol reichlich gewaschen und im Vakuum getrocknet. Die Ausbeute an *1-Benzyl-4-(4-pyridyl)-pyridinium chlorid* beträgt 25,2 g.

Elementaranalyse: $C_{17}H_{15}N_2Cl$ (282,78)

| | | | | |
|---|---|---|---|---|
| Ber.: | C71,21; | H5,35; | N9,91; | Cl 12,54 |
| Gef.: | C71,90; | H5,60; | N9,70; | Cl 12,60. |

b) 20 g (0,056 mol) dieses Produktes werden in 200 ml DMF bei 150°C gelöst, 10,3 g (0,067 mol) Vinylbenzylchlorid wird zugegeben, und die Reaktionsmischung wird 4 h gerührt. Nach dem Abkühlen auf 100°C wird der Niederschlag abfiltriert, mit DMF und Toluol gewaschen und getrocknet. Das rosafarbige Produkt wird in Wasser mit Aktivkohle 15 min aufgerührt, von der Aktivkohle durch Filtration befreit und im Vakuum zur Trockene eingedampft. Die Ausbeute an hellgelbem *1-(Vinyl-benzyl)- 1'-benzyl -4-4'-bipyridinium dichlorid* beträgt 15,3 g.Auf der Basis von diesem Produkt werden analog 1.10b die folgenden Monomere hergestellt:

1.18. *1-(Vinyl-benzyl)-1'-benzyl-4,4'-bipyridinium difluoroborate*

Elementaranalyse: $C_{26}H_{24}B_2N_2F_8$ (538,09)

| | | | |
|---|---|---|---|
| Ber.: | C58,04; | H4,50; | N5,21 |
| Gef.: | C57,10; | H4,60; | N5,30. |

1.19. *1-(Vinyl-benzyl)-1'-benzyl-4,4'-bipyridiniumditetraphenylborat*

*1.20. 1-(Vinyl-benzyl)-1'-[4-(10-phenyl-5,10-dihydro-5-phenazyl)-butyl]-4,4'-bipyridiniun difluoroborat*

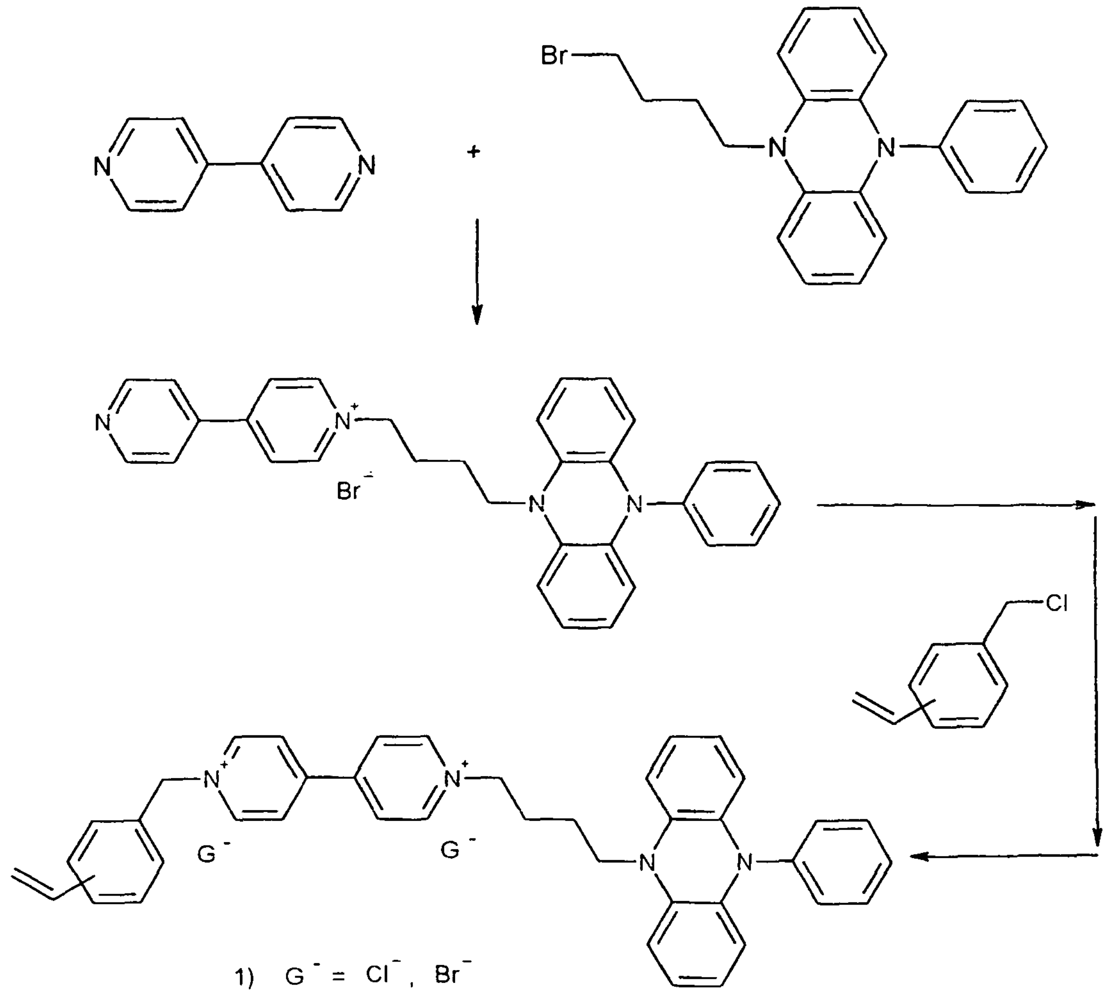

1) $G^- = Cl^-, Br^-$

2) $G^- = BF_4^-$

a) 20,3 g 4,4'-Dipyridyl und 24,9 g *5-(4- Brombutyl)- 10- Phenyl- 5,10 dihydrophenazin* (1.6.a) werden in 330 ml 24h bei 70°C unter Argon-Atmosphäre gerührt. Nach dem Abkühlen wird abgesaugt und mit 150 ml Aceton gewaschen. Nach dem Trocken erhält man 28,6 g *1-[4-(10- Phenyl- 5,10- dihydro- 5- phenazyl)-butyl]- 4-(4'- pyridyl)-pyridinium-bromid*

| Elementaranalyse: $C_{32}H_{29}N_4Br$ (549,51) | | | | |
|---|---|---|---|---|
| Ber.: | C69,94; | H5,32; | N10,20; | Br14,54; |
| Gef.: | C69,60; | H5,50; | N10,00; | Br14,90. |

b) 27 g dieses Produktes und 38 ml Vinylbenzylchlorid werden in 310 ml N-Methyl-2-pyrrolidon 15 h bei 70°C unter Argon-Atmosphäre gerührt. Nach dem Abkühlen wird mit 600 ml Toluol verdünnt. Das ausgefallende Produkt wird abfiltriert, mit Toluol und Hexan gewaschen, im Vakuum getrocknet. Man erhält 21,2 g eines dunkelgrünen Produktes. 3,95 g davon werden in 100 ml Methanol gelöst und mit einer Methanol-Lösung von 18,2 g Tetrabutylammoniumtetrafluoroborat versetzt. Das ausfallende hell-grüne Produkt wird abfiltriert, mit Methanol ausreichend gewaschen und getrocknet. Die Ausbeute beträgt 1,35 g.

| Elementaranalyse: $C_{41}H_{38}B_2F_8N_4$ (760,39) | | | |
|---|---|---|---|
| Ber.: | C64,76; | H5,04; | N7,37; |
| Gef.: | C64,40; | H5,30; | N7,30. |

Analog wird

1.21. *1-(Vinyl-benzyl)-1'-[4-(10-phenyl-5,10-dihydro-5-phenazyl)-butyl]-4,4'-bipyridiniun ditetraphenylborat*

hergestellt.

*1.22. 1-(11-Hydroxyundecyl)-1'-benzyl-4,4'-bipyridinium dibromid*

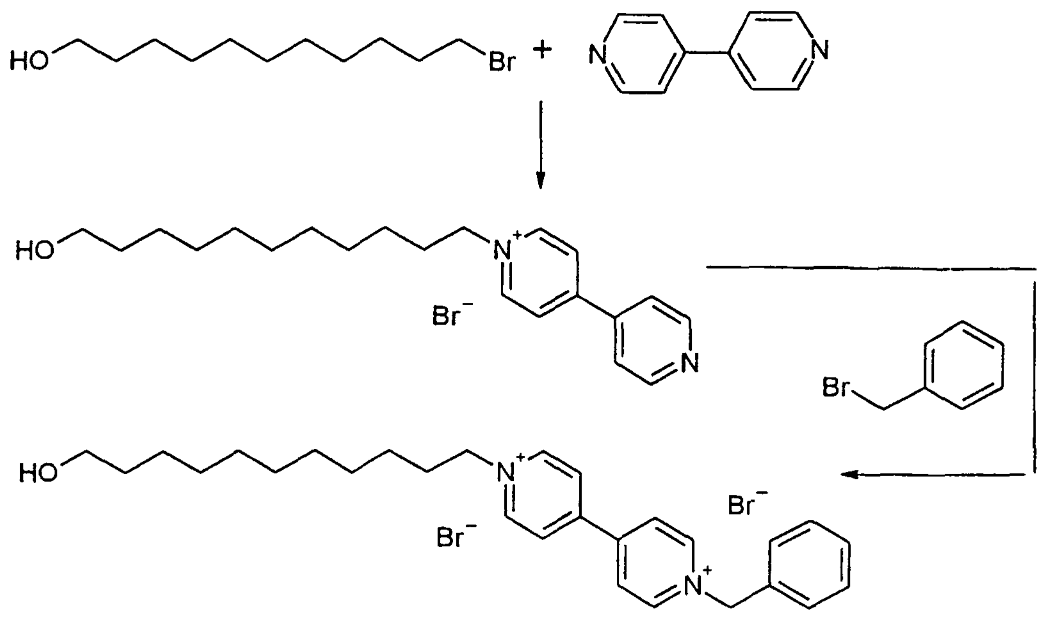

a) 70 g 11-Bromundecanol in 50 ml o-Xylol werden beim Rühren unter Rückfluß zu einer Lösung 56,6 g (30% Überschuß) 4,4'-Dipyridyl in 100 ml o-Xylol zugegeben, und die Reaktionsmischung wird 2 h weiter gerührt. Nach dem Abkühlen auf 100°C wird der Niederschlag von der heißen Lösung abfiltriert, mit heißem o-Xylol und nachträglich mit heißem Toluol reichlich gewaschen und im Vakuum getrocknet. Die Ausbeute an *1-(11-Hydroxyundecyl)-4-(4'-pyridyl)pyridinium bromid* beträgt 83 g.

| Elementaranalyse: $C_{21}H_{32}BrN_2O$ (408,4) | | | | |
|---|---|---|---|---|
| Ber.: | C61,76; | H7,90; | Br19,56; | N6,86. |
| Gef.: | C61,20; | H7,70; | Br20,20; | N6,70. |

b) 35g von diesem Produkt werden in 100 ml N-Methyl-2-pyrrolidon bei 150°C gelöst. 17,7 g Benzylbromid werden tropfenweise zu dieser Lösung zugegeben. Die Reaktionsmischung wird 0,5 h weiter gerührt. Nach dem Abkühlen bis 100°C wird der Niederschlag von der heißen Lösung abfiltriert, mit heißem NMP und nachträglich mit heißem Dioxan reichlich gewaschen und im Vakuum getrocknet. Die Ausbeute von dem hellgelben Produkt beträgt 50 g.Auf der Basis dieses Produktes 1.10b werden analog die folgenden Monomere hergestellt:

1.23. *1-(11-Hydroxyundecyl)-1'-benzyl-4,4'-bipyridinium difluoroborate*

Elementaranalyse: $C_{28}H_{38}B_2F_8N_2O$ (592,23)
Ber.: C56,79; H6,47; N4,73.
Gef.: C56,80; H6,40; N4,70.

*1.24. 1-(11-Hydroxyundecyl)-1'-benzyl-4,4'-bipyridinium di(cyanotriphenylborat)*

| Elementaranalyse: $C_{66}H_{68}B_2N_4O$ (954,93) | | | |
|---|---|---|---|
| Ber.: | C83,02; | H7,18; | N5,87. |
| Gef.: | C82,60; | H7,20; | N5,90. |

**Beispiel 2** Synthese der Polymeren

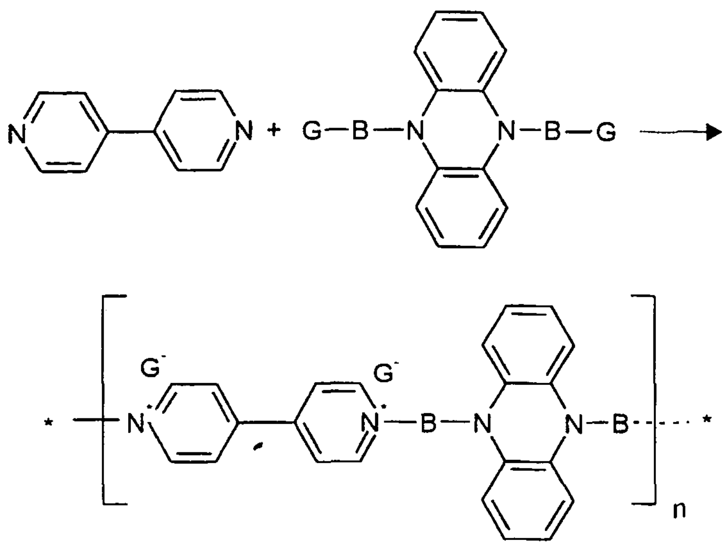

1) G = Cl, Br; $G^-$ = $Cl^-$, $Br^-$
2) $G^-$ = $BF_4^-$

2.1. B = $-(CH_2)_5-$ ; $G^-$ = $BF_4^-$

3,25 g (0,0208 mol) 4,4'-Bipyridin und 10 g (0,0208 mol) Monomer 1.1 werden in 30 ml Diethylenglykol bei 180°C unter Argon-Atmosphäre 4 h gerührt, abgekühlt, mit 300 ml Dioxan versetzt und 30 min unter Rückfluß gekocht. Der Niederschlag wird von der Lösung abgetrennt und in 50 ml Methanol gelöst. Diese Lösung wird in eine Lösung von 30 g Tetrabutylammoniumtetrafluoroborat in 300 ml Methanol unter gutem Rühren getropft.

Ein grüner Niederschlag wird abgesaugt, mehrmals mit Methanol gewaschen und im Vakuum getrocknet. Ausbeute: 8,2 g.
Analog wird das Polymer

2.2. B = $-(CH_2)_2-O-(CH_2)_2-$ ; $G^- = BF_4^-$ auf der Basis von Monomer 1.2 hergestellt.

2.3. B = p-$(-CH_2-C_6H_4-CH_2-)$; $G^- = BF_4^-$

3,4 g (0,0218 mol) 4,4'-Bipyridin und 10 g (0,0218 mol) Monomer 1.3 werden in 30 ml DMF bei 50°C unter Argon-Atmosphäre 24 h gerührt. Der weitere Lauf der Synthese ist analog 2.1. Ausbeute: 12,7 g.
Analog wird das Polymer

2.4. B = m-$(-CH_2-C_6H_4-CH_2-)$; $G^- = BF_4^-$ auf der Basis von Monomer 1.4 hergestellt.

In einer elektrochromen Vorrichtung gemäß Beispiel 10 wird für das Polymer 2.4 eine graublaue Färbung mit Absorptionsmaxima bei 453, 482, 565, 606, 662 nm erzielt.
Alle anderen Polymere des Beispiels 3 zeigen bei diesen Bedingungen ähnliche blaugrüne Färbung mit mehreren Absorptionmaxima, die zwei stärkste von denen liegen in den Bereichen 455-490 nm und 590-620 nm.

2.5. 1.0 g (0,00217 mol) Monomer 1.3, 1,32 g (0,00217 mol) Monomer 1.10 und 0,801 g (0,00435 mol) 1,2-Bis(4-pyridyl) ethan werden in 10 ml DMF 4 h unter Argonatmosphäre bei 80°C gerührt:

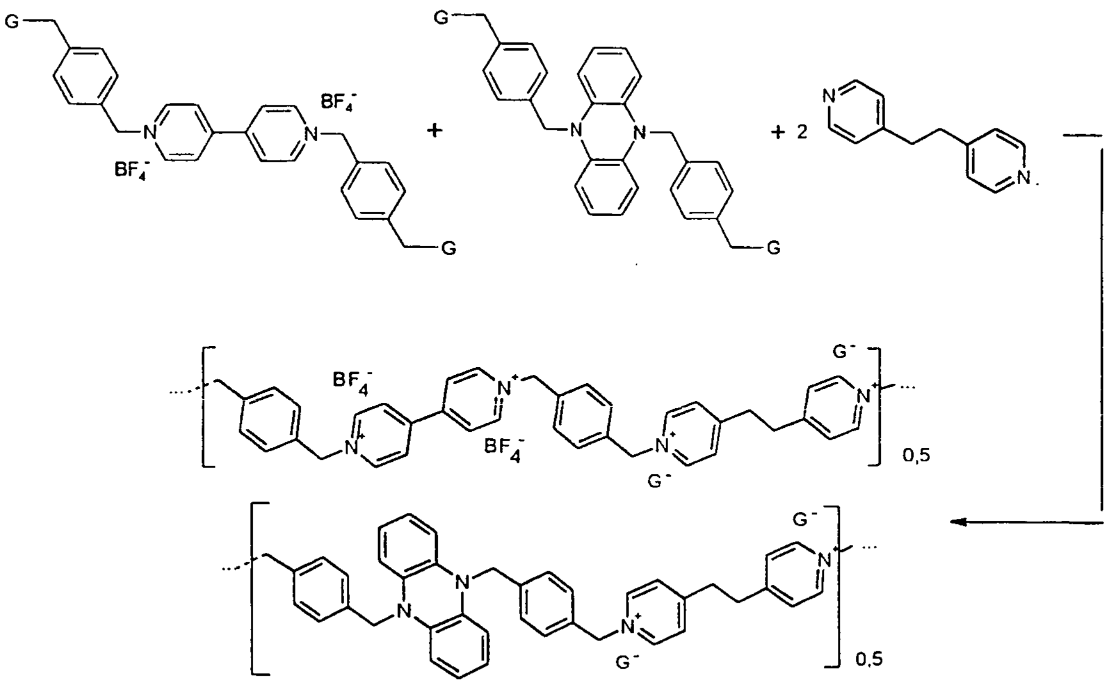

1) G = Cl, $G^- = Cl^-$,

2) $G^- = BF_4^-$

Die Reaktionsmischung wird im Vakuum zur Trockene eingeengt und weiter 2.1 analog bearbeitet. Ausbeute 0,9 g.

2.6. 5,72 g (0,005 mol) Monomer 1.13, 1,5 g (0,005 mol) Monomer 1.7 und 2,52 g (0,01 mol) 4,4'-Methylen-bis(phenylisocyanat) werden in 15 ml DMF bei 80°C unter Argonatmosphäre 48 h gerührt.

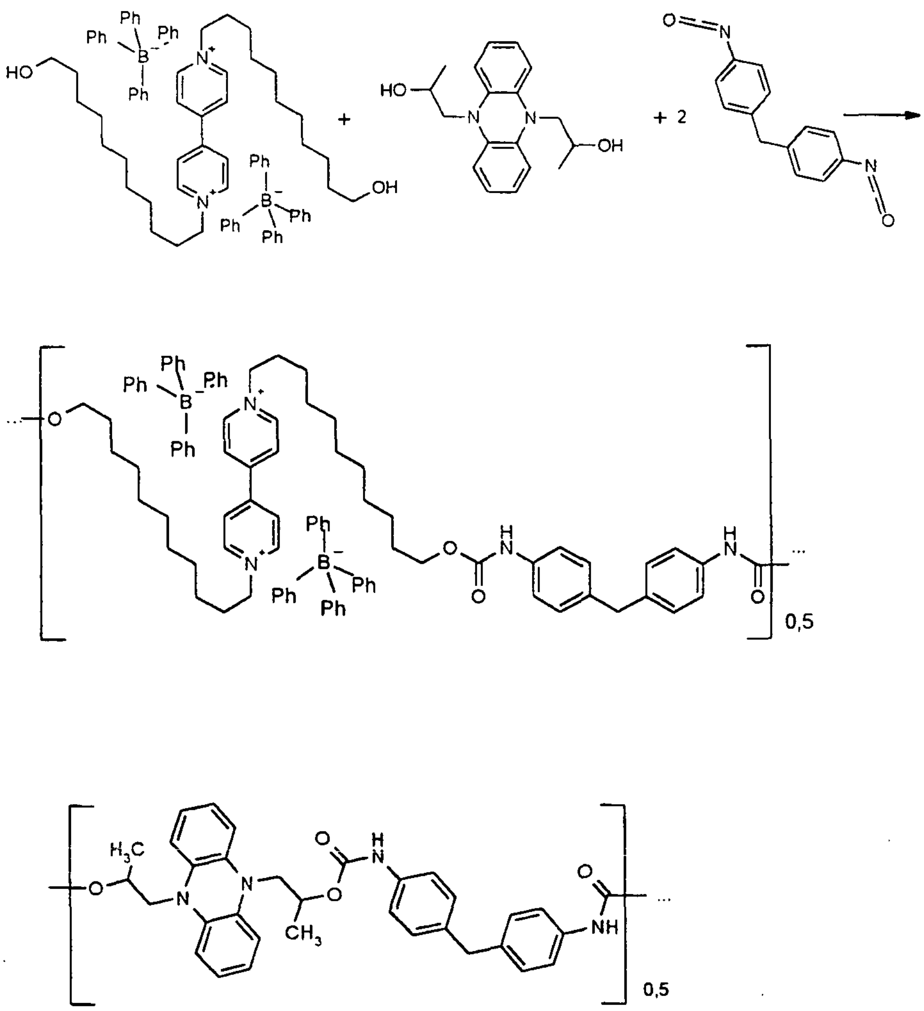

Die Reaktionsmischung wird im Vakuum zur Trockene eingeengt. Der Rückstand wird dreimal mit Methanol aufgeckocht, abfiltriert und im Vakuum getrocknet. Ausbeute beträgt 7,78 g.

2.7. wird analog 2.6 aus den Monomeren 1.12 und 1.7 hergestellt. Ausbeute: 66,8% d.Th.

**<u>Beispiel 3</u>** Synthese der Polymeren (nicht anmeldungsgemäß)

3.1. G' = $BF_4^-$ :

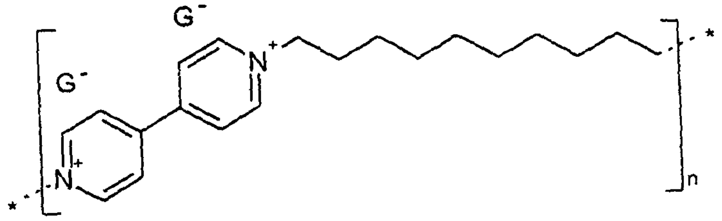

9,4 g (0,06 mol) 4,4'-Bipyridin und 18 g (0,06 mol) 1, 10- Dibromdecan werden in 30 ml Diethylenglykol bei 190°C unter

Argonatmosphäre 4 h gerührt, abgekühlt, mit 300 ml Dioxan versetzt und 30 min mit Rückfluß gekocht. Der Niederschlag wird von der Lösung abgetrennt und in 100 ml Methanol gelöst. Diese Lösung wird in die Lösung von 60 g Tetrabutylammoniumtetrafluoroborat in 600 ml Methanol unter gutem Rühren zugetropft. Ein Niederschlag wird abgesaugt, mehrmals mit Methanol gewaschen und im Vakuum getrocknet. Ausbeute: 5,0 g.

In einer elektrochromen Vorrichtung gemäß Beispiel 5 wird für das Polymer 3.1 in einer Lösung mit 5,10-Dimethyl-5,10-Dihydrophenazin eine blaugrüne Färbung mit Absorptionmaxima bei 435, 450, 462, 570, 604, 660 nm erzielt.

Alle anderen Polymere des Beispiels 3 zeigen bei diesen,Bedingungen ähnliche blaugrüne Färbung mit mehreren Absorptionmaxima, die beiden intensivsten liegen in den Bereichen 455-490 mn und 590-620 nm.

3.2. Ein Polymer folgender Struktur:

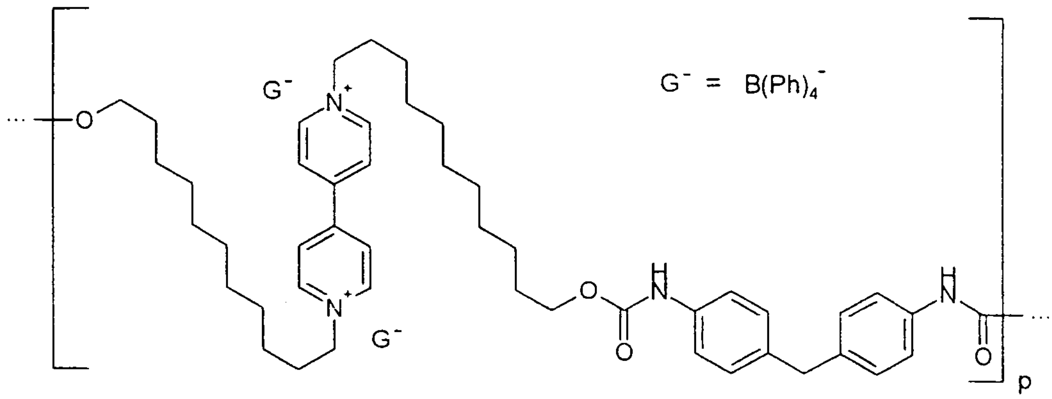

wird aus 3g (0,00264 mol) Monomer 1.13 und 0,66 g (0,00264 mol) 4,4'-Methylen-bis(phenylisocyanat) analog 2.6 hergestellt. Ausbeute beträgt 3,3 g.

3.3. Ein Polymer mit $G^- = BF_4^-$ wird aus 5,45 g (0,0081 mol) Monomer 1.12 und 2,03 g (0,0081 mol) 4,4'-Methylen-bis(phenylisocyanat) analog 3.2 hergestellt. Die Ausbeute beträgt 2,2 g.

3.4. $G^- = BF_4^-$ :

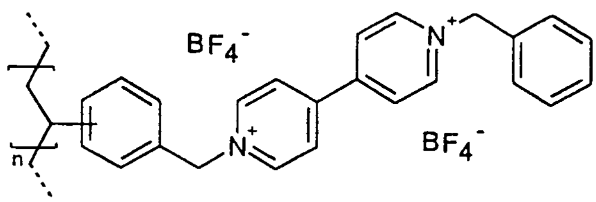

1.0 g Monomer 1.18 und 0,05 g $\alpha,\alpha'$-Azo-isobutyronitril werden in 10 ml DMF bei 70°C unter Argon-Atmosphäre 48 h gerührt und im Vakuum zur Trockene eingeengt. Der Rückstand wird dreimal mit Methanol aufgeckocht, abfiltriert und im Vakuum getrocknet. Die Ausbeute beträgt 0,09 g.

**Beispiel 4** Synthese der Polymeren

4.1. 2 g (0,00435 mol) Monomer 1.3 und 1,325g (0,00435 mol) 4,4'-Isopropylidenediphenol Dikaliumsalz:

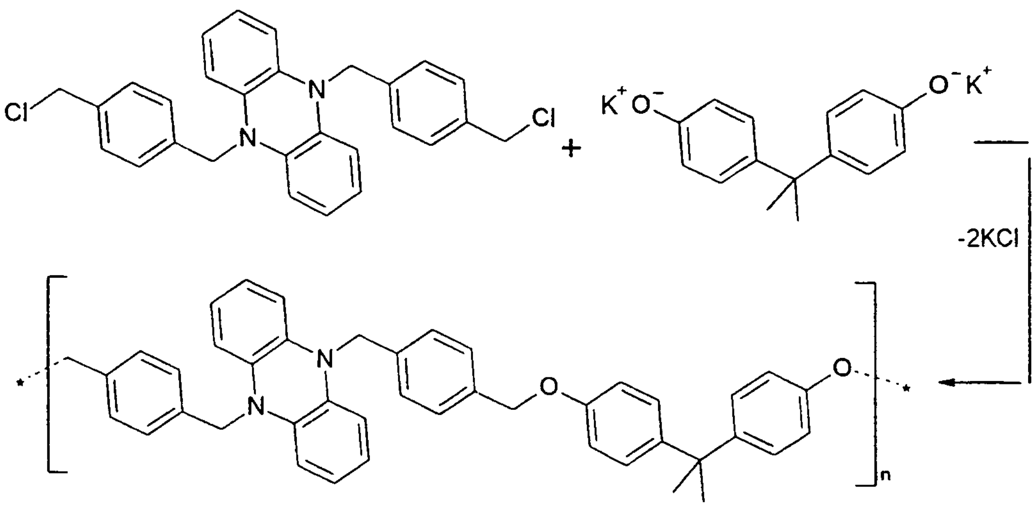


werden in 6 ml 1,3-Dimethyl-3,4,5,6-tetrahydro-2(1H)-pyrimidinon bei 110°C unter Argon-Atmosphäre 4 h gerührt, abgekühlt und mit 200 ml Wasser versetzt. Der Niederschlag wird von der Lösung abgetrennt, in Methanol mehrmals mit Rückfluß gekocht und in Hochvakuum bei 150°C 2h getrocknet. Ausbeute: 0,65 g.

4.2. Das Polymer folgender Struktur:

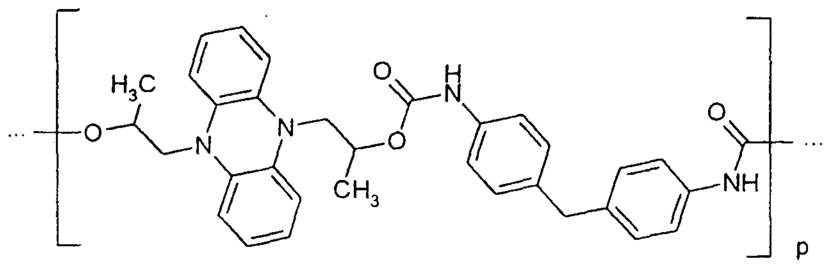

wird aus Monomer 1.7 und 4,4'-Methylen-bis(phenylisocyanat) 3.2 analog hergestellt. Ausbeute: 43% d.Th.

**Beispiel 5** (nicht anmeldungsgemäß)

Es wurde eine elektrochrome Zelle aus zwei ITO-beschichteten Glasplatten und einem Dichtungsring (Dicke 0.2 mm) gebaut, wie sie in US-A 4,902,108 in den Beispielen 1 bis 3 beschrieben ist. Sie wurde über eine Öffnung in dem Dichtungsring befüllt mit einer Lösung von 94 mg der polymeren elektrochromen Verbindung 3.1 und von 42 mg des Dihydrophenazins der Formel

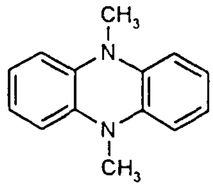

in 10 ml wasserfreiem Propylencarbonat. Die Farbe der Lösung in der Zelle war blaßgelb. Nach Anlegen einer Spannung von 0.9 V färbte sich die Lösung rasch tief blaugrün, nach Abschalten der Stromzufuhr entfärbte sich der Zellinhalt innerhalb von ca. 30 s wieder und resultierte in dem ursprünglichen Blaßgelb. Mehr als 100 000 solcher Schaltzyklen wurden ohne irgendwelche Veränderungen überstanden.

Die blaugrüne Färbung zeigte Absorptionmaxima bei 435, 450, 462, 570, 604, 660 nm.

Wenn die Glasscheibe gegenüber der ITO-beschichteten Seite versilbert war, erhielt man einen verdunkelbaren Spiegel.

**<u>Beispiel 6</u>** (nicht anmeldungsgemäß)

Es wurde wie in Beispiel 5 beschrieben ein Versuch gemacht, wobei anstelle von Polymer 3.1 Polymer 3.3 genommen wurde. Nach dem Anlegen einer Gleichspannung von 0,9 V färbte sich der blaßgelbe Zellinhalt rasch intensiv grünlich blau. Diese Farbe verschwand nach dem Abschalten der Spannung wieder, wobei ein Kurzschließen der Zelle zu einer rascheren Entfärbung führte.

**<u>Beispiel 7</u>**

Es wurde eine elektrochrome Zelle aus zwei ITO-beschichteten Glasplatten gebaut. Dies geschah mit einem geeigneten Kleber als Dichtmaterial, in den der Abstandhalter (fein gemahlener Quarzsand mit definierter Verteilung des Korndurchmessers d(max.) = 200 μm) eingerührt war.

Die Befüllung der Zelle mit einer Lösung, die 0,02 molar an der polymeren elektrochromen Verbindung 2.7 in wasserfreiem Dimethylformamid (DMF) war, erfolgte unter Stickstoff-Atmosphäre in einer Glovebox. Der Versclùß der Zelle erfolgte ebenfalls in der Glovebox mit einem geeigneten Dichtmaterial. Der Zellinhalt war vor dem Anlegen einer Spannung blaßgelb bis farblos. Nach dem Anlegen einer Gleichspannung von 0,9 V färbte sich der Zellinhalt rasch intensiv grünlich blau. Diese Farbe verschwand nach dem Abschalten der Spannung wieder, wobei ein Kurzschließen der Zelle zu einer rascheren Entfärbung führte. Der Endzustand der Zellfärbung war dann wieder blaßgelb, wie zu Beginn.

**<u>Beispiel 8</u>**

Es wurde wie in Beispiel 7 beschrieben ein Versuch gemacht, wobei anstatt des Polymers 2.7 Polymer 2.6 genommen wurde. Die Farbänderung des Zellinhaltes ist nach dem Anlegen und nach dem Abschalten einer Gleichspannung von 0,9 V analog Beispiel 7.

**<u>Beispiel 9</u>**

Es wurde wie in Beispiel 7 beschrieben ein Versuch gemacht, wobei anstatt 0,02 molarer Lösung des Polymers 2.7 eine Lösung von zwei Polymeren 3.3 und 4.2 (jedes in 0,01 molar) genommen wurde. Die Farbänderung des Zellinhaltes ist nach dem Anlegen und nach dem Abschalten einer Gleichspannung von 0,9 V analog Beispiel 7.

**<u>Beispiel 10</u>**

Es wurde eine elektrochrome Anzeigevorrichtung (Display) gebaut.

Eine mit ITO beschichtete Glasplatte (Widerstand 12 Ω/□) wurde mit einem handelsüblichen Photolack, z.B. ®Positiv 20 (Kontakt Chemie, Iffezheim) auf der beschichteten Seite besprüht und im Dunkeln bei 50 bis 70°C während 1 h getrocknet. Dann wurde die Lackschicht mit einer Folie bedeckt, die gemäß Fig. 1 schwarze Segmente in einer transparenten Umgebung enthielt. Diese Folie wurde gemäß einer am Computer hergestellten Vorlage mit einem Laserdrucker bedruckt. Durch diese Folie wurde nun die Photolackschicht mit UV-Licht (aus einer Quecksilberlampe, z.B. ®HBO 200W/2 (Osram) oder aus einer Xenon-Hochdrucklampe ®XBO 75W/2 (Osram) während 1 bis 5 min belichtet. Die Folie wurde entfernt und die Lackschicht in einem Natronlaugebad (7 g Natriumhydroxid pro Liter Wasser) so

behandelt, daß die unbelichteten Stellen abgespült wurden. Nun wurde die so vorbereitete Glasplatte in ein Bad aus 67 g $FeCl_2$ x 4 $H_2O$, 6 g $SnCl_2$ x 2 $H_2O$, 104 ml Wasser und 113 ml 37-gew.-proz. Salzsäure gelegt, wodurch die ITO-Schicht an den lackfreien, ehemals unbelichteten Stellen abgelöst wurde. Die verbliebene Lackschicht wurde mit Aceton entfernt. Man erhielt eine Glasplatte (1), die Segmente (4), Leiterverbindungen (3) und Kontakte (2) trug.

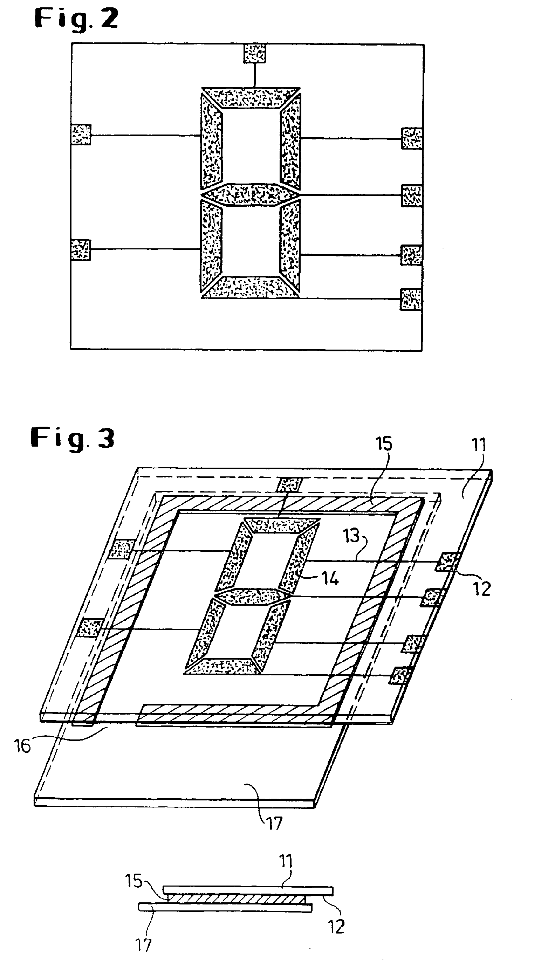

Aus einer 0.05 mm dicken Polyethylenfolie wurde ein rechteckiger Ring ausgeschnitten. An einer seiner Längsseiten wurde ein etwa 1-2 cm langes Stück entfernt (5). Diese Folie wurde nun auf die mit ITO beschichtete Seite einer zweiten Glasplatte (7) gelegt. Außerhalb der Folie - mit Ausnahme der Öffnung (6) - wurde ein Zweikomponentenkleber, beispielsweise UHU® plus endfest 300 (UHU GmbH, Bühl) aufgestrichen. Nun wurde die wie oben beschrieben hergestellte geätzte Glasplatte (1) so auf die Folie gelegt, daß die ITO-Schicht auf der Seite der Folie lag (s. Abbildung 2). Man ließ nun den Zweikomponentenkleber aushärten, eventuell durch leichtes Erwärmen auf ca. 40 °C.

Nun wurde die Zelle unter Stickstoffatmosphäre mit einer Lösung aus 572 mg der polymeren elektrochromen Substanz 2.4 in 10 ml wasserfreiem Propylencarbonat über die Öffnung (6) befüllt, beispielsweise mit Hilfe einer feinen Pipette oder durch Einziehen der Lösung im Vakuum. Die Einfüllöffnung (6) wurde nun mit einem passenden Stück Polyethylenfolie gefüllt und mit Zweikomponentenkleber dicht verschlossen.

Durch Anlegen einer Spannung von 0.9 V an die Kontakte (2) der Segmente (Minuspol) und die nichtgeätzte zweite Platte (7) (Pluspol) bildete sich während 2 s ein tief graublaues Bild der kontaktierten Segmente aus. Es konnten so alle mittels 7 Segmenten darstellbaren Buchstaben und Ziffern graublau auf blaßgelbem Untergrund dargestellt werden. Durch Abschalten der Spannung und Kurzschließen der Kontakte verschwand das Bild während einiger Sekunden wieder. Die Segmente wurden kantenscharf abgebildet. Auch nach mehrstündigem Dauerbetrieb in senkrechter Stellung der elektrochromen Anzeigevorrichtung waren die Segmente gleichmäßig gefärbt und zeigten scharfe Kanten.

Mehr als 100 000 solcher Schaltcyclen wurden ohne Veränderung überstanden. Die graublaue Färbung zeigte Absorptionsmaxima bei 453, 482, 565, 606, 662 nm.

__Beispiel 11__ (nicht anmeldungsgemäß)

Beispiel 5 wurde wiederholt, jedoch wurden der elektrochromen Lösung 1,44 g des UV-Absorbers der Formel

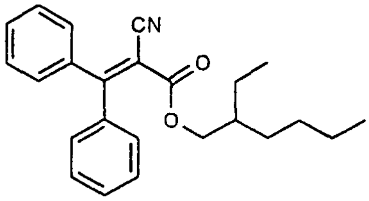

zugesetzt. Das Verhalten der Zelle beim Ein- und Ausschalten des Stromes blieb unverändert. Während die Zelle nach Beispiel 5 nach 14 Tagen Belichtung im Xenontester im ausgeschalteten Zustand bereits braun verfärbt war, blieb diese Zelle unter gleichen Bedingungen farblich und in ihrer Funktion völlig unverändert.

__Beispiel 12__

Beispiel 10 wurde wiederholt, jedoch wurden der elektrochromen Lösung 1,16 g des UV-Absorbers der Formel

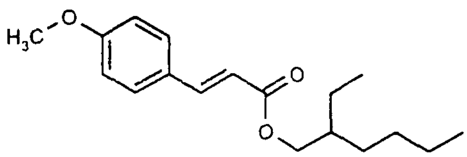

zugesetzt. Das Verhalten der Anzeigevorrichtung beim Ein- und Ausschalten des Stromes blieb unverändert. Während die Zelle nach Beispiel 10 nach 14 Tagen Belichtung im Xenontester im ausgeschalteten Zustand bereits braun verfärbt war, blieb diese Zelle unter gleichen Bedingungen farblich und in ihrer Funktion völlig unverändert.

**Beispiel 13** (nicht anmeldungsgemäß)

Es wurde wie in Beispiel 6 beschrieben eine mit ITO beschichtete Glasplatte geätzt. Man erhielt eine Glasplatte (1), die Segmente (4), Leiterverbindungen (3) und Kontakte (2) trug.

Eine zweite mit ITO beschichtete Glasplatte (7) wurde unter Stickstoff-Atmosphäre in einer Glovebox mit einer 30 gew.-proz. Lösung des in Beispiel 6 benutzten elektrochromen Polymeren in Dimethylformamid auf der mit ITO beschichteten Seite auf etwa ¾ der Fläche gleichmäßig bestrichen. Ebenfalls in der Glovebox wurde die Platte (1) mit ihrer geätzten Seite auf diesen Lösungsauftrag aufgelegt, so daß die beiden Platten wie in Fig. 2 gezeigt aufeinander zu liegen kamen. Die beiden Platten wurden nun mit der Hand kräftig aufeinander gepreßt und leicht gegeneinander verrieben, so daß eventuell eingeschlossene Luftblasen entweichen konnten. Dabei wurde ein Teil der viskosen Lösung herausgepreßt und sorgsam mit einem Tissue-Papier abgewischt. Die Schichtdicke der Lösungsschicht zwischen den beiden Platten betrug nun 30 μm. In der Glovebox wurden nun mit einer Heißklebepistole ®Pattex Supermatic (Henkel KGaA, Düsseldorf) die vier Kanten der zwischen den Platten (1) und (7) eingesperrten Lösungsschicht versiegelt. Anschließend wurde die ausgehärtete Heißklebernaht mit einem Epoxi-Kleber ®Körapox 735 (Kömmerling, Pirmasenz) umhüllt und somit mechanisch stabilisiert. Die Aushärtung des Epoxi-Klebers erfolgte bei Raumtemperatur über Nacht.

Man erhielt so eine Zelle, die der des Beispiels 10 ähnlich war, aber mit geringerem Schichtabstand.

Durch Anlegen einer Spannung von 1.2 V an die Kontakte (2) der Segmente (Minuspol) und die nichtgeätzte zweite Platte (7) (Pluspol) bildete sich innerhalb 1 s ein tief blaugraues Bild der kontaktierten Segmente aus. Es konnten so alle mittels 7 Segmenten darstellbaren Buchstaben und Ziffern blaugrau auf blaßgelbem Untergrund dargestellt werden. Durch Abschalten der Spannung und Kurzschließen der Kontakte verschwand das Bild innerhalb 1 s wieder. Die Segmente wurden kantenscharf abgebildet. Auch nach mehrstündigem Dauerbetrieb in senkrechter Stellung der elektrochromen Anzeigevorrichtung waren die Segmente gleichmäßig gefärbt und zeigten scharfe Kanten.

Mehr als 10 000 solcher Schaltcyclen wurden ohne Veränderung überstanden. Die blaugraue Färbung zeigte Absorptionsmaxima bei 453, 482, 565, 606, 662 nm.

**Beispiel 14** (nicht anmeldungsgemäß)

Zwei mit ITO beschichtete Platten (Widerstand 12 Ω/□) im Format 5x5 cm2 wurden unter Stickstoff-Atmosphäre in der Glovebox mit einer 0.075-molaren Lösung des in Beispiel 6 verwendeten elektrochromen Polymeren in Dimethylformamid auf der ITO-Seite auf etwa ¾ der Fläche gleichmäßig bestrichen und exakt waagrecht gelagert. Während 4-5 h verdunstete das Lösungsmittel in der Stickstoffatmosphäre komplett und man erhielt einen blaßgelben, transparenten Überzug des elektrochromen Polymeren auf den Platten. Nun wurden in der Glovebox auf eine dieser Beschichtungen 5 Tropfen einer 25 gew.-proz. Lithiumperchloratlösung in Acetonitril aufgetragen. Die zweite Platte wurde mit ihrer beschichteten Seite so auf diese Lösung aufgelegt, daß die mit dem Polymeren beschichteten Flächen übereinander zu liegen kamen und die nicht beschichteten Flächen nach je einer Seite frei abstehen. Die Platten wurden nun zusammengedrückt und die austretende Lösung mit einem Tissue-Tuch abgewischt. Der Abstand zwischen den beiden mit ITO beschichteten Glasplatten betrug nun 10 μm. Wie in Beispiel 13 beschrieben wurde nun die Vorrichtung an den vier Kanten mit Heißkleber abgedichtet und mit Epoxi-Kleber gesichert.

Man erhielt so eine elektrochrome Vorrichtung. Durch Anlegen einer Spannung von 1.5 V an die beiden abstehenden, nicht beschichteten Flächen der beiden Platten erhielt man während 1-2 s eine intensive flächige blaugraue Einfärbung, die nach Abschalten der Spannung und Kurzschluß während 1-2 s wieder vollständig verschwand

## Patentansprüche

**1.** Polymer der Formel I,

$$E\text{-}[\cdots(B_1\text{-}Z\text{-})_a\cdots(B_2\text{-}Y\text{-})_b\cdots]_c\text{-}B\text{-}E \qquad \text{(I),}$$

worin
die Einheiten $-B_1$-Z- und $-B_2$-Y- alternierend, statistisch oder blockweise miteinander verknüpft sind,

Y und Z unabhängig voneinander ein Rest $RED_1$ oder $OX_2$ ist, wobei
$OX_2$ für einen reversibel elektrochemisch reduzierbaren Substituenten steht, der durch Elektronenaufnahme an einer Kathode in $RED_2$ übergeht, wobei mit der Elektronenaufnahme eine Zunahme der Extinktion im sichtbaren Bereich des Spektrums von einer farblosen oder schwach gefärbten Form in eine gefärbte Form verbunden ist und wobei nach Ladungsausgleich jeweils die farblose bzw. schwach gefärbte Form zurückgebildet wird, und
$RED_1$ für einen reversibel elektrochemisch oxidierbaren Substituenten steht, der durch Elektronenabgabe an

einer Anode in $OX_1$ übergeht, wobei mit der Elektronenabgabe eine Zunahme der Extinktion im sichtbaren Bereich des Spektrums von einer farblosen oder schwach gefärbten Form in eine gefärbte Form verbunden ist und wobei nach Ladungsausgleich die farblose bzw. schwach gefärbte Form zurückgebildet wird, und
B für $B_1$ oder $B_2$ steht,
$B_1$ und $B_2$ gleiche oder unterschiedliche Brückenglieder sind, die unabhängig von einander für -O-, $-CH_2-$ oder $-(CH_2)_n-$ mit n = 1 bis 1b Stehen
E eine Endgruppe der Polymerkette ist,
a und b für die Molenbrüche der Monomereinheiten $-B_1$-Z- und $-B_2$-Y- stehen, die beliebige Werte zwischen 0 und 1 aufweisen, wobei a = 1-b ist,
c für einen zahlenmittleren Polymerisationsgrad $c_n$ steht und 3 bis 200 000 beträgt, wobei das Verhältnis zwischen $c_n$ und dem gewichtsmittleren Polymerisationsgrad $c_w$ (Polymolaritätsindex) $Q = c_w/c_n$ zwischen 1,1 und 100 liegt mit der Maßgabe, daß gleichzeitig mindestens ein $RED_1$ als auch mindestens ein $OX_2$ in der Polymer Kette novalent gebunden sind.

2. Verfahren zur Herstellung der Polymere gemäß Anspruch 1, **dadurch gekennzeichnet, dass** ein oder mehrere $RED_1$ und/oder $OX_2$ enthaltende Monomere der Formeln XXVI - XXVIII

$$X^1\text{-}B^6\text{-}OX^2\text{-}B^7\text{-}X^2 \qquad (XXVI),$$

$$X^1\text{-}B^6\text{-}RED^1\text{-}B^7\text{-}X^2 \qquad (XXVII),$$

$$X^1\text{-}B^6\text{-}OX^2\text{-}B^8\text{-}RED^1\text{-}B^7\text{-}X^2 \qquad (XXVIII),$$

worin

$OX^2$ für den Rest eines reversibel elektrochemisch reduzierbaren Redoxsystem steht, und
$RED^1$ für den Rest eines reversibel elektrochemisch oxidierbaren Redoxsystem steht,
$B^6$,$B^7$, $B^8$ die Brückenglieder sind,
$X^1$ und $X^2$ jeweils für mindestens eine zur Polymerisation, Polykondensation, Polyaddition oder zur polymeranalogen Reaktion befähigte Gruppe steht,

einer Polymerisations-, Polykondensations-, Polyadditionsreaktion oder polymeranaloge Reaktion unterworfen werden, wobei das anstehende Polymer in wenigstens einem dipolar aprotischen Lösungsmittel gelöst ist.

3. Verfahren gemäß Anspruch 2, **dadurch gekennzeichnet, dass** in den Monomeren der Formeln XXVI bis XXVIII

$OX^2$ für einen Rest der Formeln IX bis XVIII steht,

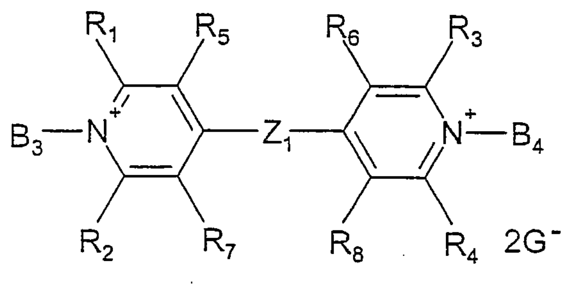

(IX)

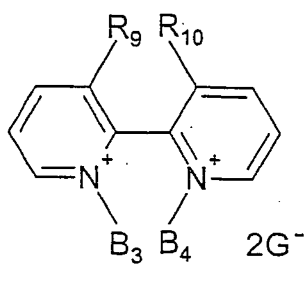

(X)

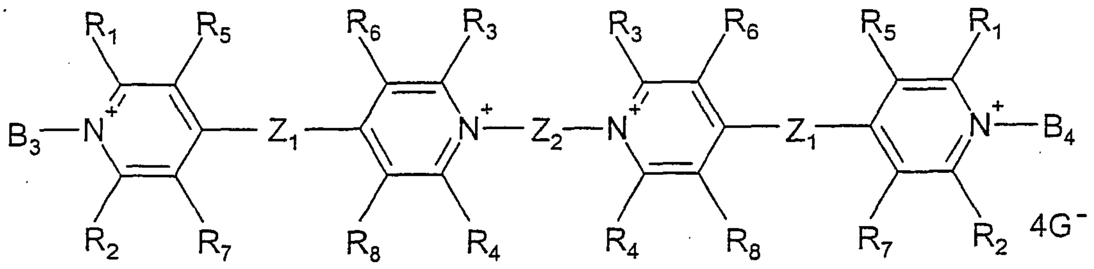

(XI)

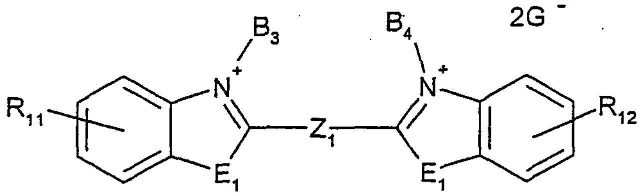

(XII)

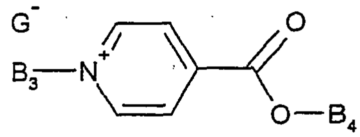

(XIII)

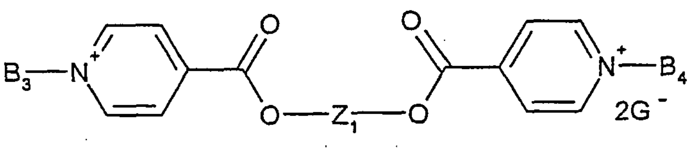

(XIV)

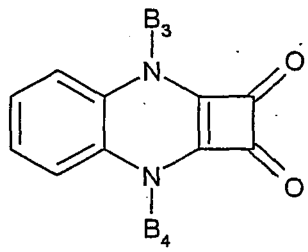

(XV)

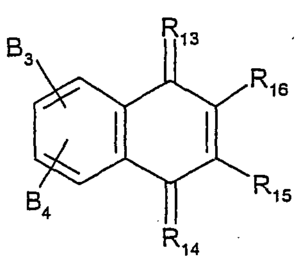

(XVI)

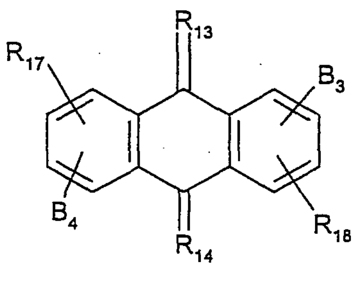

(XVII)

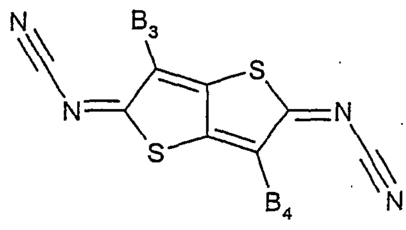

(XVIII)

worin

$R_1$ bis $R_4$ unabhängig voneinander Wasserstoff, $(C_1-C_8)$-Alkyl, $(C_2-C_{12})$-Alkenyl, $(C_3-C_7)$-Cycloalkyl, $(C_7-C_{15})$-Aralkyl oder $(C_6-C_{10})$-Aryl sind,
$R_5$ und $R_6$ oder $R_7$ und $R_8$ Wasserstoff oder gemeinsam eine $-(CH_2)_2-$ oder $-(CH_2)_3$-Brücke sind,
$R_9$ und $R_{10}$ unabhängig voneinander Wasserstoff oder paarweise eine $-(CH_2)_2-$, $-(CH_2)_3-$ oder -CH=CH-Brücke sind,
$R_{11}$, $R_{12}$, $R_{17}$ und $R_{18}$ unabhängig voneinander Wasserstoff, $(C_1-C_4)$-Alkyl, $(C_1-C_4)$-Alkoxy, Halogen, Cyano, Nitro oder $(C_1-C_4)$-Alkoxycarbonyl sind,
$R_{13}$ und $R_{14}$ unabhängig voneinander O, N-CN, $C(CN)_2$ oder N-$(C_6-C_{10})$-Aryl- sind,
$R_{15}$ und $R_{16}$ eine -CH=CH-CH=CH-Brucke ist,
$E_1$ ein O- oder S-Atom ist,
$Z_1$ eine direkte Bindung, -CH=CH-, $-C(CH_3)=CH-$, -C(CN)=CH-, -CCl=CCl-, -C(OH)=CH-, -CCl=CH-,-C≡C-, -CH=N-N=CH-,
$-C(CH_3)=N-N=C(CH_3)-$ oder -CCl=N-N=CCl- ist,
$Z_2$ $-(CH_2)_r-$, p oder m- $CH_2-C_6H_4-CH_2-$ ist,
r eine ganze Zahl von 1 bis 10 ist und
$G^-$ ein unter den Bedingungen redox-inertes, farbloses Anion ist,

und

$RED^1$ für einen Rest aus Verbindungen der Formeln XIX bis XXV steht,

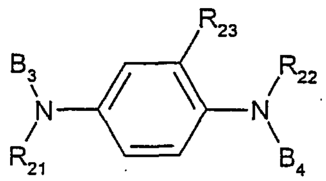

(XIX)

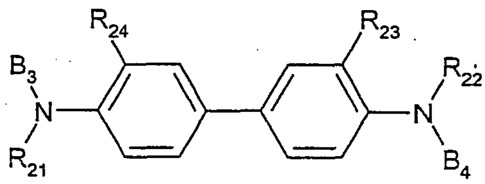

(XX)

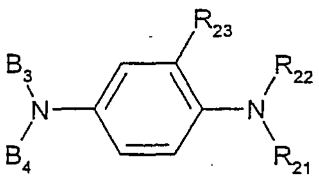

(XXI)

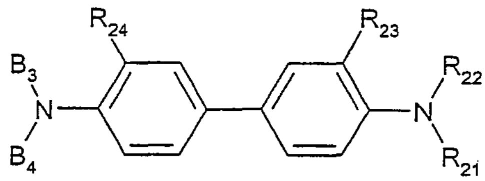

(XXII)

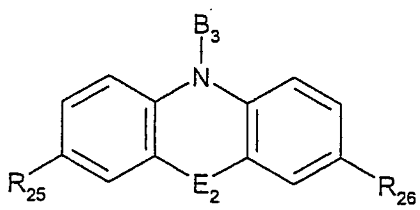

(XXIII)

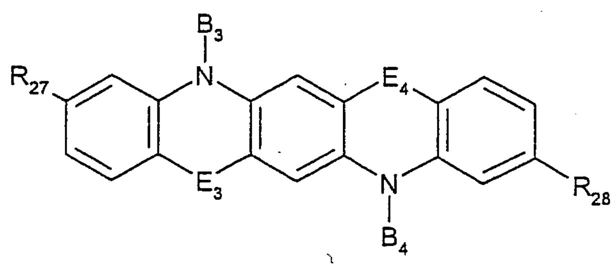

(XXIV)

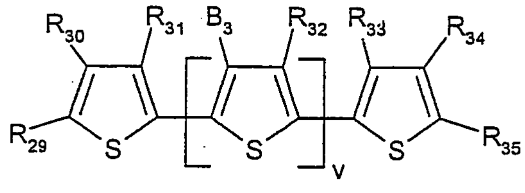

(XXV)

worin

$R_{21}$ und $R_{22}$ $(C_1\text{-}C_8)$-Alkyl, $(C_2\text{-}C_{12})$-Alkenyl, $(C_3\text{-}C_7)$-Cycloalkyl, $(C_7\text{-}C_{15})$-Aralkyl oder $(C_6\text{-}C_{10})$-Aryl sind,
$R_{23}$ bis $R_{28}$ unabhängig voneinander Wasserstoff, $(C_1\text{-}C_4)$-Alkyl, $(C_1\text{-}C_4)$-Alkoxy, Halogen, Cyano, Nitro oder $(C_1\text{-}C_4)$-Alkoxycarbonyl oder $(C_6\text{-}C_{10})$-Aryl sind, und
$R_{26}$ zusätzlich $NR^{37}R^{37}$ bedeuten,
$R_{29}$ bis $R_{35}$ unabhängig voneinander Wasserstoff, $(C_1\text{-}C_4)$-Alkyl, $(C_1\text{-}C_4)$-Alkoxy, Cyano, $(C_1\text{-}C_4)$-Alkoxycarbonyl oder $(C_6\text{-}C_{10})$-Aryl sind, oder
$R_{29}$, $R_{30}$ und $R_{34}$, $R_{35}$ unabhängig voneinander gemeinsam eine $-(CH_2)_3-$, $-(CH_2)_4-$ oder -CH=CH-CH=CH-Brücke sind,
$E_2$ ein O- oder S-Atom oder die Gruppen N-$B_4$, $C(CH_3)_2$, C=O oder $SO_2$ ist,
$E_3$ und $E_4$ ein O- oder S-Atom oder die Gruppe $NR_{36}$ sind,
$R^{36}$ und $R^{37}$ unabhängig voneinander $(C_1\text{-}C_{12})$-Alkyl, $(C_2\text{-}C_8)$-Alkenyl, $(C_3\text{-}C_7)$-Cycloalkyl, $(C_7\text{-}C_{15})$-Aralkyl oder $(C_6\text{-}C_{10})$-Aryl bedeuten und $R^{36}$ zusätzlich Wasserstoff bedeutet oder
$R^{37}$ in der Bedeutung von $NR^{37}R^{37}$ gemeinsam mit dem N-Atom, an das sie gebunden sind, einen fünf- oder sechsgliedrigen, gesättigten Ring bilden, der weitere Heteroatome enthalten kann, und
v eine ganze Zahl von 1 bis 20 ist,

falls $B_3$ gleich $B_4$ ist, $B_3$ und $B_4$ gleich $B_1$ oder $B_2$ sind und

$B_1$ und $B_2$ die in Anspruch 1 angegebene Bedeutung haben,

auf den Plätzen von $B^3$ und $B^4$ die Brückenglieder $B^6$, $B^7$ und $B^8$ stehen,

$X^1$ und $X^2$ jeweils für Halogen, -OH, $-O^-$, -COOH, -COO-$(C_1\text{-}C_4)$-Alkyl, -O-C(=O)-$(C_1\text{-}C_4)$-Alkyl, $-COO^-$, $-NH_2$, -NH-$(C_1\text{-}C_4)$-Alkyl, -N=C=O, oder ein tertiäres Stickstoffatom, das drei gleiche oder verschiedene $(C_1\text{-}C_{12})$-Alkyl-, $(C_7\text{-}C_{15})$-Aralkyl-, $(C_6\text{-}C_{10})$-Aryl-Substituenten trägt oder ein Glied des 4- bis 7-atomaren Ringes ist, der auch weitere Heteroatome enthalten darf, oder
$X^1$ oder $X^2$ für eine C=C-Doppelbindung, eine $-O-C(=O)-CH=CH_2$ oder $-O-C(=O)-C(CH_3)=CH_2$-Gruppe steht.

4. Verfahren gemäß Anspruch 2, **dadurch gekennzeichnet, dass** die elektrochromen Monomeren der Formeln (XXVI) bis (XXVIII), in der $X^1$ und $X^2$ primäre oder sekundäre OH-Gruppen sind, mit aliphatischen oder aromatischen Diisocyanaten polykondensiert werden.

5. Verfahren gemäß Anspruch 2, **dadurch gekennzeichnet, dass** die elektrochromen Monomeren der Formeln (XXVI) bis (XXVIII), in der $X^1$ und $X^2$ primäre Halogen-Gruppen sind, mit aliphatischen oder aromatischen Verbindungen, die zwei tertiäre Stickstoffatome besitzen, die ihrerseits drei gleiche oder verschiedene $(C_1\text{-}C_{12})$-Alkyl-, $(C_7\text{-}C_{15})$-Aralkyl-, $(C_6\text{-}C_{10})$-Aryl-Substituenten tragen oder die Glieder der 4- bis 7-atomaren Ringe sind, polyaddiert werden.

6. Verfahren gemäß Anspruch 2, **dadurch gekennzeichnet, dass** die elektrochromen Monomeren der Formeln (XXVI) bis (XXVIII), in der $X^1$ und $X^2$ oder beide eine C=C-Doppelbindung sind, durch radikalische Polymerisation polymerisiert werden.

7. Verfahren gemäß Anspruch 2, **dadurch gekennzeichnet, dass** die elektrochromen Monomeren der Formeln (XXVI) bis (XXVIII), in der $X^1$ und $X^2$ OH-Gruppen sind, mit Dicarbonsäuredichloriden polykondensiert werden.

**8.** Elektrochrome Monomere, die der Formel XXX entsprechen

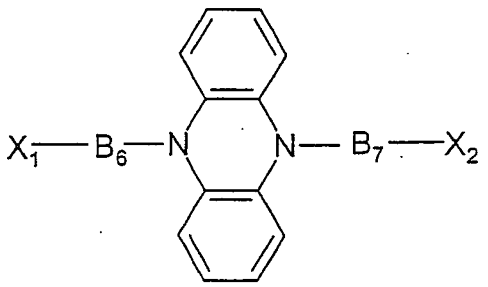

XXX

,

worin
$B^6 = B^7$= $-(CH_2)_n-$ mit n = 2 - 18 ist, oder
$B^6 = B^7$ = $-(CH_2)_2-O-(CH_2)_2-$ oder o, m oder p-$CH_2-C_6H_4-CH_2-$ ist,
und $X^1 = X^2$ = Halogen ist,
oder
$B^6 = B^7$ = $-(CH_2)_n-$ mit n = 2 - 18 ist, oder
$B^6 = B^7$ = $-(CH_2)_2-O-(CH_2)_2-$ ist, oder
o, m oder p-$CH_2-C_6H_4-CH_2-$ ist,
$X^1 = X^2$ = -O-C(=O)-($C_1$-$C_4$)-Alkyl oder -O-C(=O)-CH=$CH_2$ oder -O-C(=O)-C($CH_3$)=$CH_2$,
oder
$B^6$= $-(CH_2)_n-$ mit n = 2 - 18 ist,
$B^7$=-Ph ist,
$X^1$ = -O-C(=O)-CH=$CH_2$ oder -O-C(=O)-C($CH_3$)=$CH_2$ ist und
$X^2$ fehlt, oder
$B^6$= $-(CH_2)_n$ mit n = 2 -11 ist,
$B^7$= -($C_6$.$C_{10}$)-Aryl, substituiertes -($C_6$-$C_{10}$)-Aryl, ($C_1$-$C_{18}$)-Alkyl, ($C_7$-$C_{24}$) Aralkyl,
$X^1$ = -OH ist und
$X^2$ fehlt, oder
$B^6 = B^7$ = $-(CH_2)_n-$ mit n = 3 - 11 ist,
und $X^1 = X^2$ = -OH ist, oder
$B^6$= $B^7$ = $-CH_2-CH(C_nH_{2n+1})-$ mit n = 1 - 18 ist,
und $X^1 = X^2$ = -OH ist.

**9.** Elektrochromes System enthaltend ein Polymer gemäß Anspruch 1.

**Claims**

**1.** Polymer of the formula I

$$E\text{-}[\cdots (B_1\text{-}Z\text{-})_a \cdots (B_2\text{-}Y\text{-})_b \cdots]_c\text{-}B\text{-}E \qquad (I),$$

in which
the units $-B_1$-Z- and $-B_2$-Y- are linked to one another alternatingly, randomly or in blocks,

Y and Z, independently of one another, are a radical $RED_1$ or $OX_2$, where
$OX_2$ is a reversibly electrochemically reducible substituent which is converted into $RED_2$ by electron take-up at a cathode, where an increase in the absorbance in the visible region of the spectrum from a colourless or weakly coloured form into a coloured form is associated with the electron take-up, and where in each case the colourless or weakly coloured form is re-formed after charge equalization,
$RED_1$ is a reversibly electrochemically oxidizable substituent which is converted into $OX_1$ by electron release at an anode, where an increase in the absorbance in the visible region of the spectrum from a colourless or weakly coloured form into a coloured form is associated with the electron release, and where the colourless or weakly coloured form is re-formed after charge equalization, and

B is $B_1$ or $B_2$,
$B_1$ and $B_2$ are identical or different bridging units, which, independently of one another, are -O-, $-CH_2-$ or $(CH_2)$ n, where n = 1 to 16,
E is an end group of the polymer chain,
a and b are the molar fractions of the monomer units $-B_1$-Z- and $-B_2$-Y-, which have any desired values between 0 and 1, where a = 1-b,
c is a number-average degree of polymerization $c_n$ and is from 3 to 200,000, where the ratio between $c_n$ and the weight-average degree of polymerization $c_w$ (polymolarity index) $Q = c_w/c_n$ is between 1.1 and 100, with the proviso that, at the same time, at least one RED and at least one $OX_2$ are covalently bonded in the polymer chain.

2. Process for the preparation of the soluble polymers according to Claim 1, **characterized in that** one or more $RED_1$- and/or $OX_2$-containing monomers of the formulae XXVI - XXVIII

$X^1$-$B^6$-$OX^2$-$B^7$-$X^2$ (XXVI),

$X^1$-$B^6$-$RED^1$-$B^7$-$X^2$ (XXVII),

$X^1$-$B^6$-$OX^2$-$B^8$-$RED^1$-$B^7$-$X^2$ (XXVIII),

in which

$OX^2$ is the radical of a reversibly electrochemically reducible redox system, and
$RED^1$ is the radical of a reversibly electrochemically oxidizable redox system,
$B^6$, $B^7$ and $B^8$ are the bridging units,
$X^1$ and $X^2$ are each a group which is capable of addition polymerization, polycondensation or polyaddition or a group which is capable of polymer-analogous reaction,

are subjected to an addition polymerization, polycondensation or polyaddition reaction or a polymer-analogous reaction.

3. Process according to Claim 2, **characterized in that**, in the monomers of the formulae XXVI bis XXVIII,

$OX^2$ is a radical of the formulae IX to XVIII,

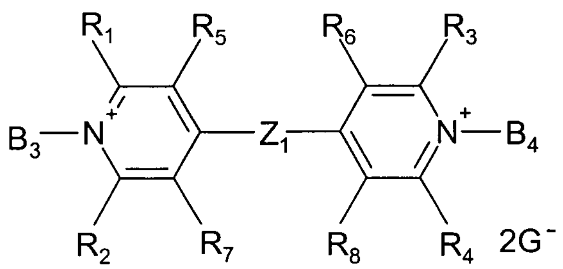

(IX)

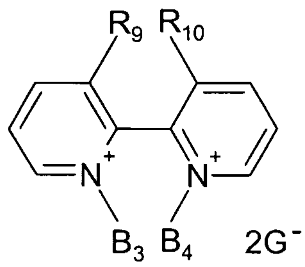

(X)

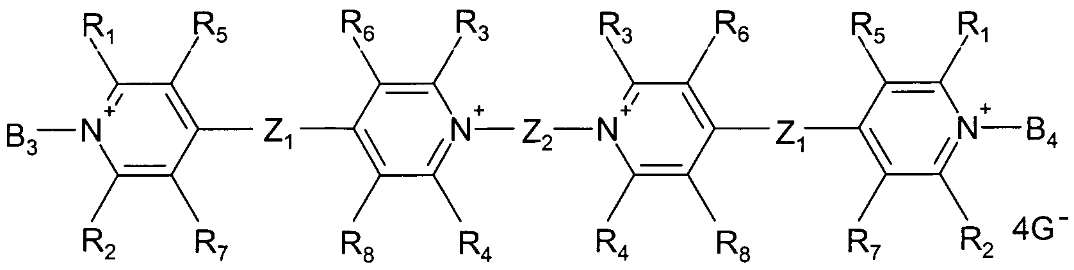

(XI)

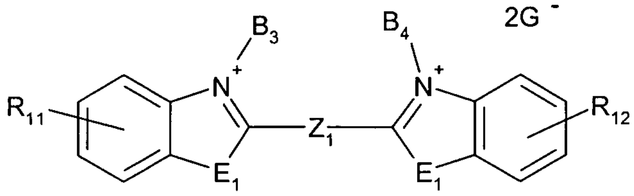

(XII)

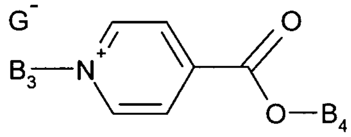

(XIII)

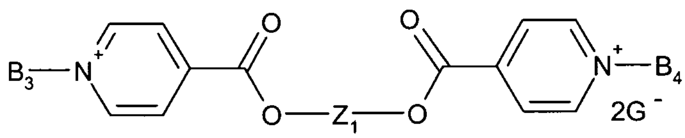

(XIV)

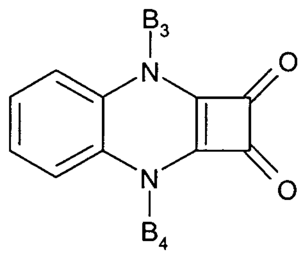

(XV)

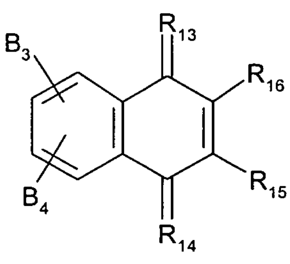

(XVI)

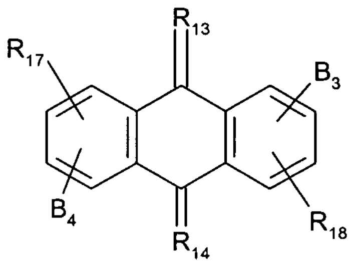

(XVII)

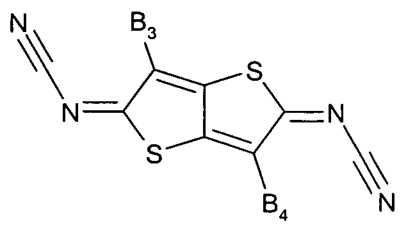

(XVIII)

in which

$R_1$ to $R_4$, independently of one another, are hydrogen, $(C_1\text{-}C_8)$-alkyl, $(C_2\text{-}C_{12})$-alkenyl, $(C_3\text{-}C_7)$-cycloalkyl,

$(C_7-C_{15})$-aralkyl or $(C_6-C_{10})$-aryl,
$R_5$ and $R_6$ or $R_7$ and $R_8$ are hydrogen or together are a $-(CH_2)_2-$ or $-(CH_2)_3$-bridge,
$R_9$ and $R_{10}$, independently of one another, are hydrogen or in pairs are a $-(CH_2)_2-$, $-(CH_2)_3-$ or -CH=CH- bridge,
$R_{11}$, $R_{12}$, $R_{17}$ and $R_{18}$, independently of one another, are hydrogen, $(C_1-C_4)$-alkyl, $(C_1-C_4)$-alkoxy, halogen, cyano, nitro or $(C_1-C_4)$-alkoxycarbonyl,
$R_{13}$ and $R_{14}$, independently of one another, are O, N-CN, $C(CN)_2$ or N-$(C_6-C_{10})$-aryl-,
$R_{15}$ and $R_{16}$ are a -CH=CH-CH=CH- bridge,
$E_1$ is an O or S atom,
$Z_1$ is a direct bond, -CH=CH-, $-C(CH_3)=CH-$, -C(CN)=CH-, -CCl=CCl-, -C(OH)=CH-, -CCl=CH-, -C≡C-, -CH=N-N=CH-,
$-C(CH_3)=N-N=C(CH_3)-$ or -CCl=N-N=CCl-,
$Z_2$ is $-(CH_2)_r-$ , p- or m-$CH_2-C_6H_4-CH_2-$,
r is an integer from 1 to 10, and
$G^-$ is a colourless anion which is redox-inert under the conditions,

and

$RED^1$ is a radical from compounds of the formulae XIX to XXV

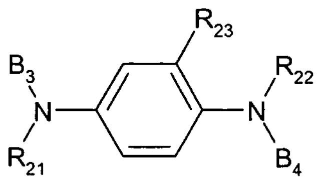

(XIX)

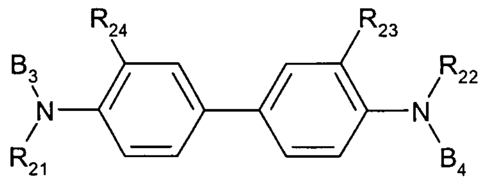

(XX)

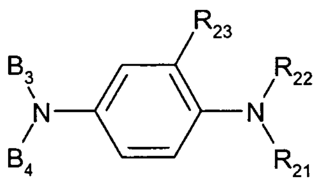

(XXI)

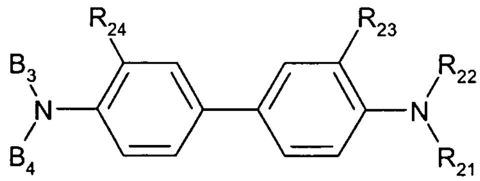

(XXII)

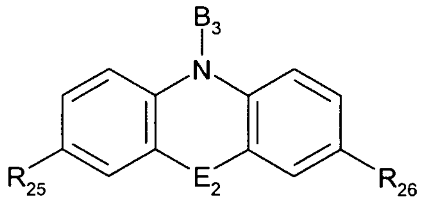

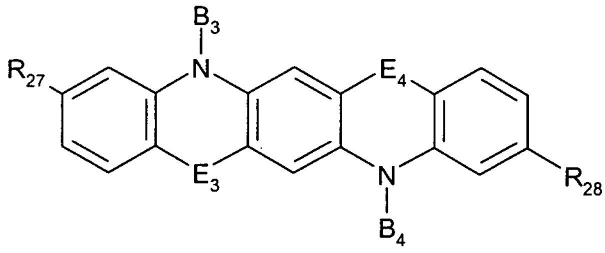

(XXIII)

(XXIV)

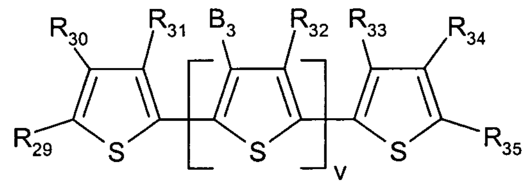

(XXV)

in which

$R_{21}$ and $R_{22}$ are $(C_1-C_8)$-alkyl, $(C_2-C_{12})$-alkenyl, $(C_3-C_7)$-cycloalkyl, $(C_{7-}C_{15})$-aralkyl or $(C_6-C_{10})$-aryl,
$R_{23}$ to $R_{28}$, independently of one another, are hydrogen, $(C_1-C_4)$-alkyl, $(C_1-C_4)$-alkoxy, halogen, cyano, nitro, $(C_1-C_4)$-alkoxycarbonyl or $(C_6-C_{10})$-aryl, and
$R_{26}$ is additionally $NR^{37}R^{37}$,
$R_{29}$ to $R_{35}$, independently of one another, are hydrogen, $(C_1-C_4)$-alkyl, $(C_{1-}C_4)$-alkoxy, cyano, $(C_1-C_4)$-alkoxycarbonyl or $(C_6-C_{10})$-aryl, or
$R_{29}$ and $R_{30}$, and $R_{34}$ and $R_{35}$, independently of one another, together are a $-(CH_2)_3-$, $-(CH_2)_4-$ or -CH=CH-CH=CH- bridge,
$E_2$ is an O or S atom or the groups N-$B_4$, $C(CH_3)_2$, C=O or $SO_2$,
$E_3$ and $E_4$ is an O or S atom or the group $NR_{36}$,
$R^{36}$ and $R^{37}$, independently of one another, are $(C_1-C_{12})$-alkyl, $(C_2-C_8)$-alkenyl, $(C_3-C_7)$-cycloalkyl, $(C_7-C_{15})$-aralkyl or $(C_6-C_{10})$-aryl, and $R^{36}$ is additionally hydrogen, or
$R^{37}$ in the meaning of $NR^{37}R^{37}$ together with the N atom to which they are bonded, form a five- or six-membered, saturated ring, which may contain further heteroatoms,
v is an integer from 1 to 20,

if $B_3$ is identical to $B_4$, $B_3$ and $B_4$ are identical to $B_1$ or $B_2$, and

$B_1$ and $B_2$ are as defined in Claim 1,
$B^3$ and $B^4$ are replaced by the bridging units $B^6$, $B^7$ and $B^8$,
$X^1$ and $X^2$ are halogen, -OH, $-O^-$, -COOH, -COO-$(C_1-C_4)$-alkyl, -O-C(=O)-$(C_1-C_4)$alkyl, $-COO^-$, $-NH_2$, -NH-$(C_1-C_4)$-alkyl, -N=C=O, or a tertiary nitrogen atom which carries three identical or different $(C_1-C_{12})$-alkyl, $(C_7-C_{15})$-aralkyl or $(C_6-C_{10})$-aryl substituents or is a member of the 4- to 7-atom ring, which may also contain further heteroatoms, or
$X^1$ or $X^2$ is a C=C- double bond, an $-O-C(=O)-CH=CH_2$ group or an $-O-C(=O)-C(CH_3)=CH_2-$ group.

4. Process according to Claim 2, **characterized in that** the electrochromic monomers of the formulae (XXVI) to (XXVIII) in which $X^1$ and $X^2$ are primary or secondary OH groups are polycondensed with aliphatic or aromatic diisocyanates.

5. Process according to Claim 2, **characterized in that** the electrochromic monomers of the formulae (XXVI) to (XXVIII) in which $X^1$ and $X^2$ are primary halogen groups are subjected to a polyaddition reaction with aliphatic or aromatic compounds which have two tertiary nitrogen atoms which themselves carry three identical or different $(C_1-C_{12})$-alkyl, $(C_7-C_{15})$-aralkyl, $(C_6-C_{10})$-aryl substituents or are members of the 4- to 7-atom ring.

6. Process according to Claim 2, **characterized in that** the electrochromic monomers of the formulae (XXVI) to (XXVIII) in which $X^1$ and $X^2$ or both are a C=C double bond are polymerized by free-radical polymerization.

7. Process according to Claim 2, **characterized in that** the electrochromic monomers of the formulae (XXVI) to (XXVIII) in which $X^1$ and $X^2$ are OH groups are polycondensed with dicarboxylic acid dichlorides.

8. Electrochromic monomers which conform to the formula XXX

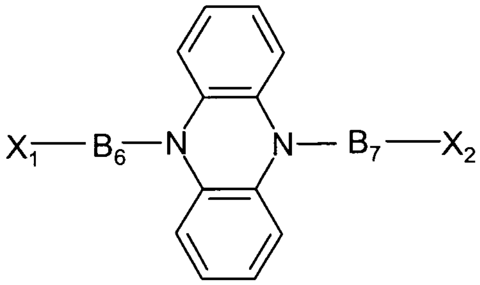

XXX

,

in which
$B^6 = B^7 = -(CH_2)_n-$, where n = 2 - 18,
$B^6 = B^7 = -(CH_2)_2-O-(CH_2)_2-$ or o-, m- or p-$CH_2-C_6H_4-CH_2-$,
and $X^1 = X^2$ = halogen,
or
$B^6 = B^7 = -(CH_2)_n-$, where n = 2 - 18, or
$B^6 = B^7 = -(CH_2)_2-O-(CH_2)_2-$ or o-, m- or p-$CH_2-C_6H_4-CH_2-$,
$X^1 = X^2 = -O-C(=O)-(C_1-C_4)$-alkyl or $-O-C(=O)-CH=CH_2$ or $-O-C(=O)-C(CH_3)=CH_2$,
or
$B^6 = -(CH_2)_n-$, where n = 2 - 18,
$B^7$ = -Ph,
$X^1 = -O-C(=O)-CH=CH_2$ or $-O-C(=O)-C(CH_3)=CH_2$ and
$X^2$ is absent, or
$B^6 = -(CH_2)_n$, where n = 2 -11,
$B^7 = -(C_6-C_{10})$-aryl, substituted $-(C_6-C_{10})$-aryl, $(C_1-C_{18})$-alkyl or $(C_7-C_{24})$-aralkyl,
$X^1$ = -OH, and
$X^2$ is absent, or
$B^6 = B^7 = -(CH_2)_n-$, where n = 3 - 11,
and $X^1 = X^2$ = -OH, or
$B^6 = B^7 = -CH_2-CH(C_nH_{2n+1})-$, where n = 1 - 18,
and $X^1 = X^2$ = -OH.

9. Electrochromic system comprising a polymer according to Claim 1.

**Revendications**

1. Polymère de la formule I

$$E - [... (B_1-Z-)_a ... (B_2-Y-)_b ...]_c-B-E \qquad (I)$$

où

les unités $-B_1-Z-$ et $-B_2-Y-$ sont reliées l'une à l'autre en alternance, de manière statistique ou de manière séquencée, Y et Z sont indépendamment l'un de l'autre, un reste $RED_1$ ou $OX_2$, où

$OX_2$ représente un substituant réductible de manière électrochimique et réversible, qui est converti en $RED_2$ par réception d'électrons à une cathode, où est reliée à la réception d'électrons, une augmentation de l'extinction dans le domaine visible du spectre d'une forme incolore ou faiblement colorée à une forme colorée et où après équilibration des charges, la forme incolore ou faiblement colorée est chaque fois, reformée, et

$RED_1$ représente un substituant oxydable de manière électrochimique et réversible, qui est converti en $OX_1$ par don d'électrons à une anode, où est reliée au don d'électrons, une augmentation de l'extinction dans le domaine visible du spectre d'une forme incolore ou faiblement colorée à une forme colorée et où après équilibration des charges, la forme incolore ou faiblement colorée est chaque fois, reformée, et

B représente $B_1$ ou $B_2$,

$B_1$ et $B_2$ sont des fragments identiques ou différents, qui représentent indépendamment l'un de l'autre, -O-, $-CH_2-$ ou $-(CH_2)_n-$ avec n = 1 à 16,

E est un groupe final de chaîne polymère,

a et b représentent pour les fractions molaires des unités monomères $-B_1-Z-$ et $-B_2-Y-$, qui présentent des valeurs quelconques entre 0 et 1, où a = 1 - b,

c représente un taux de polymérisation moyen en nombre $C_n$ et se situe dans l'intervalle allant de 3 à 200 000, où le rapport entre $c_n$ et le taux moyen en poids de polymérisation $c_w$ (indice de polymolarité) $Q = c_w/c_n$ se situe dans l'intervalle allant de 1,1 à 100, avec la condition que simultanément, au moins un $RED_1$, mais également au moins un $OX_2$ sont reliés de manière covalente dans la chaîne polymère.

**2.** Procédé de préparation des polymères selon la revendication 1, **caractérisé en ce qu'**un ou plusieurs monomères contenant $RED_1$ et/ou $OX_2$ des formules XXVI - XXVIII :

$X^1-B^6-OX_2-B^7-X^2$ (XXVI)

$X^1-B^6-RED^1-B^7-X^2$ (XXVII)

$X^1-B^6-OX_2-B^8-RED_1-B^7-X^2$ (XXVIII)

Où

$OX_2$ représente le reste d'un système rédox réductible de manière électrochimique et réversible, et

$RED_1$ représente le reste d'un système rédox oxydable de manière électrochimique et réversible,

$B^6$, $B^7$, $B^8$ sont des chaînons de pontage,

$X^1$ et $X^2$ représentent chaque fois, au moins un groupe susceptible de polymérisation, polycondensation, polyaddition ou de réactions de type polymérisation,

sont soumis à une réaction de polymérisation, de polycondensation, de polyaddition ou de type polymérisation, où le polymère formé est dissous dans au moins un solvant aprotique dipolaire.

**3.** Procédé selon la revendication 2, **caractérisé en ce** dans les monomères des formules XXVI à XXVIII :

$OX^2$ représente un reste des formules IX à XVIII :

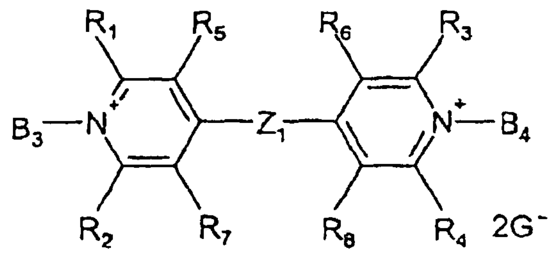

(IX)

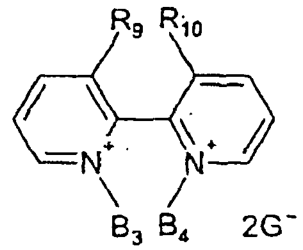

(X)

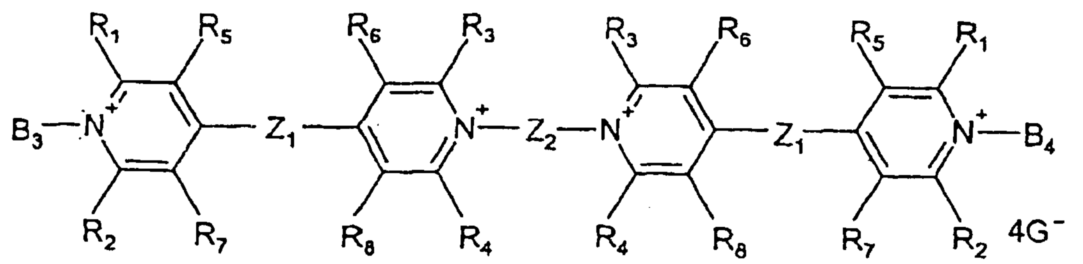

(XI)

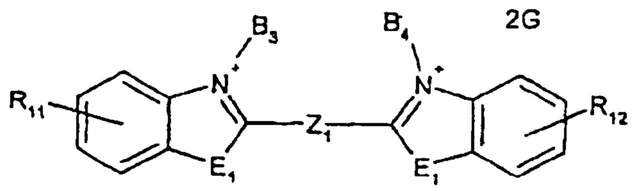

(XII)

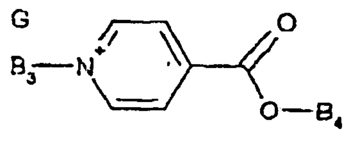

(XIII)

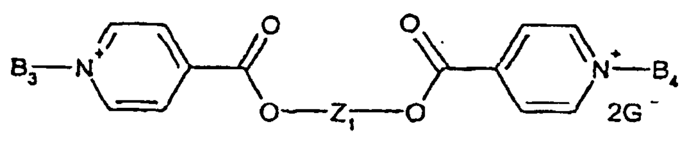

(XIV)

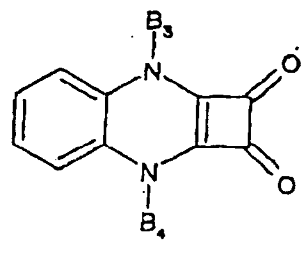

(XV)

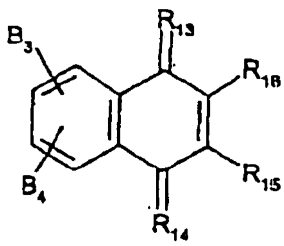

(XVI)

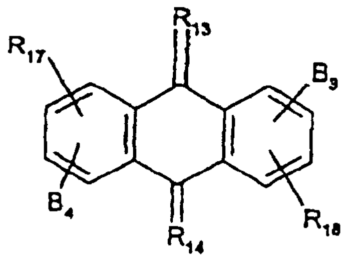

(XVII)

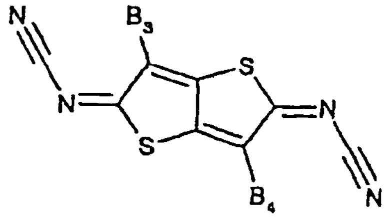

(XVIII)

où
$R_1$ à $R_4$ sont indépendamment l'un de l'autre, hydrogène, alkyle ($C_1$-$C_8$), alcényle ($C_2$-$C_{12}$), cycloalkyle ($C_3$-$C_7$), aralkyle ($C_7$-$C_{15}$) ou aryle ($C_6$-$C_{10}$),
$R_5$ et $R_6$ ou $R_7$ et $R_8$ sont hydrogène ou ensemble, un pont $-(CH_2)_2-$ ou - $(CH_2)_3-$
$R_9$ et $R_{10}$ sont indépendamment l'un de l'autre, hydrogène ou ensemble, un pont $-(CH_2)_2-$, $-(CH_2)_3-$ ou -CH=CH-,
$R_{11}$, $R_{12}$, $R_{17}$ et $R_{18}$ sont indépendamment l'un de l'autre, hydrogène, alkyle ($C_1$-$C_4$), alcoxy ($C_1$-$C_4$), halogène, cyano, nitro ou alcoxy ($C_1$-$C_4$) carbonyle,
$R_{13}$ et $R_{14}$ sont indépendamment l'un de l'autre, 0, N-CN, $C(CN)_2$ ou N-aryle ($C_6$-$C_{10}$),
$R_{15}$ et $R_{16}$ sont un pont -CH=CH-CH=CH-,
$E_1$ est l'atome O ou S,
$Z_1$ représente un liaison directe, -CH=CH-, $-C(CH_3)=CH-$, -C(CN)=CH-, -CCl=CCl-, -C(OH)=CH-, -CCl=CH-, -C≡C-, -CH=N-N=CH-, $-C(CH_3)=N-N=C(CH_3)-$ ou -CC1=N-N=CCl-,
$Z_2$ est $-(CH_2)_r-$, p ou m $-CH_2-C_6H_4-CH_2-$,
r est un nombre entier allant de 1 à 10, et
$G^-$ est un anion incolore, inerte dans les conditions rédox, et
$RED_1$ représente un reste des composés des formules XIX à XXV,

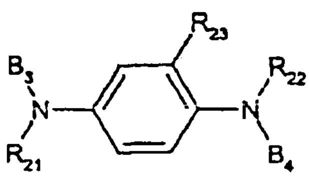

(XIX)

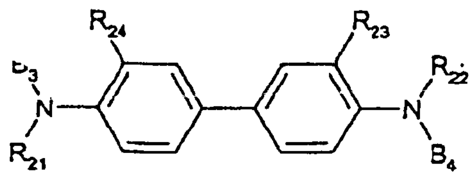

(XX)

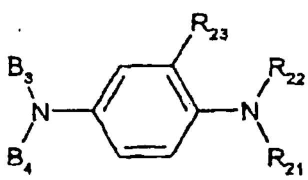

(XXI)

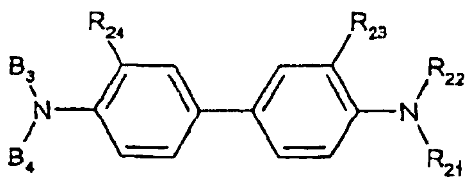

(XXII)

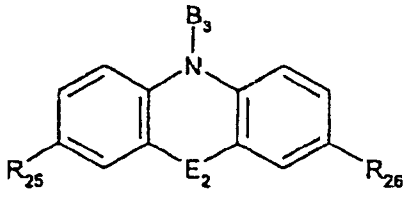

(XXIII)

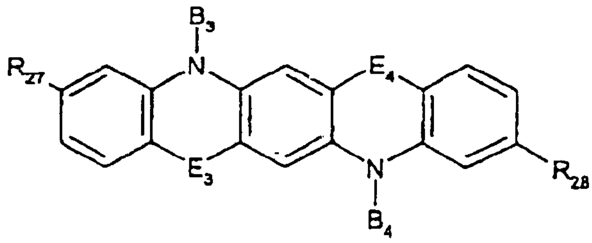

(XXIV)

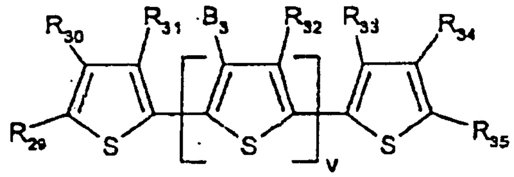

(XXV)

où

$R_{21}$ et $R_{22}$ sont alkyle ($C_1$-$C_8$) , alcényle ($C_2$-$C_{12}$), cycloalkyle ($C_3$-$C_7$), aralkyle ($C_7$-$C_{15}$) ou aryle ($C_6$-$C_{10}$),
$R_{23}$ à $R_{29}$ sont indépendamment l'un de l'autre, hydrogène, alkyle ($C_1$-$C_4$), alcoxy ($C_1$-$C_4$), halogène, cyano, nitro ou alcoxy ($C_1$-$C_4$) carbonyle ou aryle ($C_6$-$C_{10}$) ,
$R_{26}$ représente en outre, $NR_{37}R_{37}$,
$R_{29}$ à $R_{35}$ sont indépendamment l'un de l'autre, hydrogène, alkyle ($C_1$-$C_4$), alcoxy ($C_1$-$C_4$), cyano, alcoxy ($C_1$-$C_4$) carbonyle ou aryle ($C_6$-$C_{10}$) , ou
$R_{29}$, $R_{30}$ et $R_{34}$, $R_{35}$ sont indépendamment l'un de l'autre, ensemble, un pont $-(CH_2)_3-$ ou $-(CH_2)_4-$ ou -CH=CH-CH=CH-,
$E_2$ est l'atome O ou S, ou le groupe N-$B_4$, $C(CH_3)_2$, C=O ou $SO_2$,
$E_3$ et $E_4$ sont l'atome O ou S, ou le groupe $NR_{36}$,
$R_{36}$ et $R_{37}$ sont indépendamment l'un de l'autre, alkyle (Ci-$C_{12}$), alcényle ($C_2$-$C_8$), cycloalkyle ($C_3$-$C_7$), aralkyle ($C_7$-$C_{15}$) ou aryle ($C_6$-$C_{10}$), et $R_{36}$ représente en outre, hydrogène, ou
$R_{37}$ dans la signification de $NR_{37}R_{37}$, avec l'atome N, sur lequel il est lié, forme un cycle saturé à cinq ou six membres, qui peut contenir d'autres hétéroatomes, et
v représente un nombre entier allant de 1 à 20,
si $B_3$ est égal à $B_4$, $B_3$ et $B_4$ sont égaux à $B_1$ et $B_2$, et
si $B_1$ et $B_2$ ont la signification donnée à la revendication 1,
aux places de $B_3$ et $B_4$, les chaînons de pontage représentent $B_6$, $B_7$ et $B_8$,
$X_1$ et $X_2$ représentent chaque fois, halogène, OH, $O^-$, COOH , COO-alkyle ($C_1$-$C_4$), O(C=O)-alkyle ($C_1$-$C_4$), $COO^-$, $NH_2$, NH-alkyle ($C_1$-$C_4$),, N=C=O ou un atome d'azote tertiaire, qui porte trois substituants identiques ou différents alkyle ($C_1$-$C_{12}$), aralkyle ($C_1$-$C_{15}$), aryle ($C_6$-$C_{10}$) ou un membre du cycle de 4 à 7 atomes, qui peut contenir également d'autres hétéroatomes, ou
$X_1$ ou $X_2$ représentent une double liaison C=C, un groupe OC(=O)-CH=$CH_2$ ou O-C(=O)-C($CH_3$)=$CH_2$.

**4.** Procédé selon la revendication 2, **caractérisé en ce que** les monomères électrochromes des formules (XXVI) à (XXVIII), dans lesquelles $X^1$ et $X^2$ sont des groupes OH primaires ou secondaires, sont polycondensés avec des diisocyanates aliphatiques ou aromatiques.

**5.** Procédé selon la revendication 2, **caractérisé en ce que** les monomères électrochromes des formules (XXVI) à (XXVIII), dans lesquelles $X^1$ et $X^2$ sont des groupes halogène primaires, sont polyadditionnés avec des composés aliphatiques ou aromatiques, qui possèdent deux atomes d'azote tertiaires, qui portent pour leur part, trois substituants identiques ou différents alkyle ($C_1$-$C_{12}$), aralkyle ($C_7$-$C_{15}$), aryle ($C_6$-$C_{10}$) ou qui sont un membre de cycle de 4 à 7 atomes.

6. Procédé selon la revendication 2, **caractérisé en ce que** les monomères électrochromes des formules (XXVI) à (XXVIII), dans lesquelles $X^1$ et $X^2$ sont une double liaison C=C, sont polymérisés par polymérisation radicalaire.

7. Procédé selon la revendication 2, **caractérisé en ce que** les monomères électrochromes des formules (XXVI) à (XXVIII), dans lesquelles $X^1$ et $X^2$ sont des groupes OH, sont polycondensés avec des dichlorures d'acide dicarboxylique.

8. Monomères électrochromes, qui correspondent à la formule XXX,

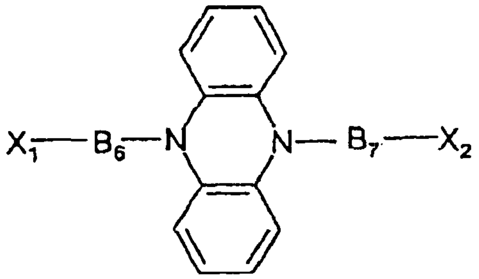

XXX

où
$B_6 = B_7 = (CH_2)_n$ avec n = 2-18, ou
$B_6 = B_7 = (CH_2)_2\text{-O-}(CH_2)_2$ ou o, m ou p-$CH_2\text{-}C_6H_4\text{-}CH_2$, et
$X_1 = X_2$ = halogène ,
ou
$B_6 = B_7 = (CH_2)_n$ avec n = 2-18, ou
$B_6 = B_7 = (CH_2)_2$ -O- $(CH_2)_2$ ou o, m ou p-$CH_2\text{-}C_6H_4\text{-}CH_2$, et
$X_1 = X_2$ = O-C (=O) -alkyle ($C_1$-$C_4$) ou O-C(=O)-CH=$CH_2$ ou OC(=O)-C($CH_3$)=$CH_2$,
ou
$B_6 = (CH_2)_n$ avec n = 2-18,
$B_7$ = Ph,
$X_1$ = O-C(=O)-CH=$CH_2$ ou O-C(=O)-C($CH_3$)=$CH_2$, et
$X_2$ est absent,
ou
$B_6 = (CH_2)_n$ avec n = 2-11,
$B_7$ = aryle ($C_6$-$C_{10}$), aryle ($C_6$-$C_{10}$) substitué, alkyle ($C_1$-$C_{18}$), aralkyle ($C_7$-$C_{24}$),
$X_1$ = OH, et
$X_2$ est absent,
ou
$B_6 = B_7 = (CH_2)_n$ avec n = 3-11, et
$X_1 = X_2$ = OH
ou
$B_6 = B_7 = CH_2\text{-}CH(C_nH_{2n+1})$ avec n = 1-18, et
$X_1 = X_2$ = OH .

9. Système électrochrome contenant un polymère selon la revendication 1.

Fig. 1

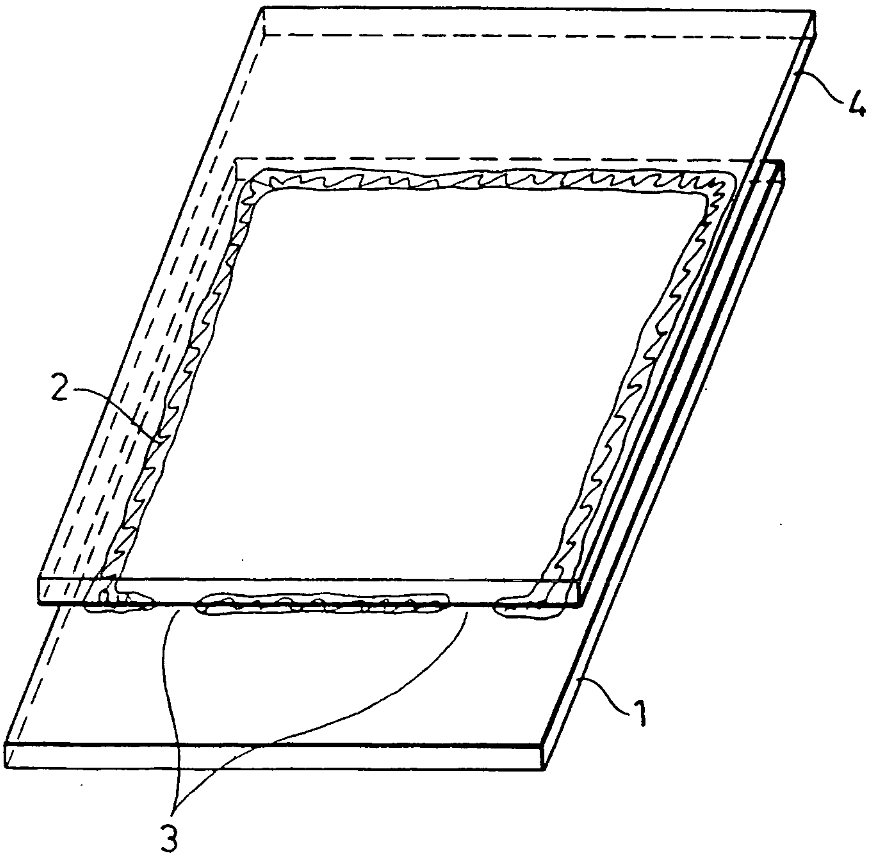

Fig. 2

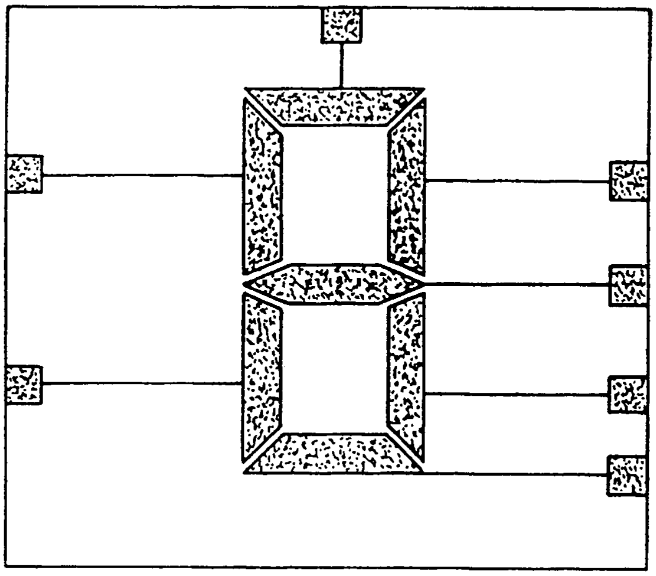

Fig. 3